# EUROPEAN PATENT APPLICATION

(11) **EP 4 723 630 A2**
(43) Date of publication of application: **08.04.2026**
(21) Application number: 24815698.6
(22) Date of filing: 15.04.2024
(51) Int. Cl.: H04N 19/132, H04N 19/105, H04N 19/593, H04N 19/176, H04N 19/157, H04N 19/70, H04N 19/513

(54) **IMAGE ENCODING METHOD, IMAGE ENCODING DEVICE, IMAGE DECODING METHOD AND IMAGE DECODING DEVICE, WHICH USE TEMPORAL REFERENCE SAMPLE AND SPATIAL REFERENCE SAMPLE**

(30) Priority: 26.05.2023 KR 20230068623; 11.08.2023 KR 20230105670
(71) Applicant: Samsung Electronics Co., Ltd., Suwon-si, Gyeonggi-do 16677 (KR)
(72) Inventor: PIAO, Yinji, Suwon-si, Gyeonggi-do 16677 (KR); DINH, Quockhanh, Suwon-si, Gyeonggi-do 16677 (KR); PARK, Minsoo, Suwon-si, Gyeonggi-do 16677 (KR); PARK, Minwoo, Suwon-si, Gyeonggi-do 16677 (KR); CHOI, Kwangpyo, Suwon-si, Gyeonggi-do 16677 (KR)
(74) Representative: Appleyard Lees IP LLP
(86) International application number: PCT/KR2024/005017
(87) International publication number: WO 2024/248319

(57) **Abstract**

An image decoding method according to an embodiment includes determining at least one of a first sample set corresponding to a first neighboring sample set adjacent to a current block or a second sample set corresponding to a second neighboring sample set adjacent to the current block from samples reconstructed before the current block in a current picture or a previous picture, wherein the first neighboring sample set includes the samples reconstructed before the current block, and the second neighboring sample set includes samples that have not been reconstructed, performing intra prediction on the current block by using a sample included in at least one of the first sample set or the second sample set as a reference sample of the current block, and reconstructing the current block from a prediction block generated as a result of performing intra prediction.

## Description

### Technical Field

The present disclosure relates to the field of image encoding and decoding, and more particularly, to devices and methods for encoding and decoding images by using temporal reference samples and spatial reference samples.

### Background Art

In encoding and decoding of images, images are split into blocks, and each block is prediction encoded and prediction decoded through inter prediction or intra prediction.

Inter prediction is a technology for compressing images by removing temporal redundancy between images. Inter prediction predicts blocks of a current image by using a reference image. A reference block that is most similar to the current block may be searched for in a certain search range in the reference image. The current block is predicted based on the reference block, and a residual block is generated by subtracting the prediction block generated as a result of performing prediction from the current block.

In codecs such as Advanced Video Coding (H.264 AVC) and High Efficiency Video Coding (HEVC), a motion vector of previously encoded blocks adjacent to the current block or blocks included in a previously encoded image is used as a motion vector predictor of the current block to predict the motion vector of the current block. A motion vector difference, which is a difference between the motion vector of the current block and the motion vector predictor, is signaled to a decoder through a certain method.

Intra prediction is a technology for compressing an image by removing spatial redundancy in the image. Intra prediction generates a prediction block based on neighboring pixels of the current block according to a prediction mode. Then, a residual block is generated by subtracting the prediction block from the current block.

The residual block generated by inter prediction or intra prediction is transferred to the decoder through transformation and quantization. The decoder inversely quantizes and inversely transforms the residual block and reconstructs the current block by combining the prediction block of the current block and the residual block. In certain cases, the decoder may remove artifacts from the reconstructed current block by filtering the reconstructed current block.

### Disclosure of Invention

### Solution to Problem

An image decoding method according to an embodiment includes determining at least one of a first sample set corresponding to a first neighboring sample set adjacent to a current block or a second sample set corresponding to a second neighboring sample set adjacent to the current block from samples reconstructed before the current block in a current picture or a previous picture, the first neighboring sample set may include the samples reconstructed before the current block, and the second neighboring sample set may include samples that have not been reconstructed.

The image decoding method according to an embodiment may include performing intra prediction on the current block by using a sample included in at least one of the first sample set or the second sample set as a reference sample of the current block.

The image decoding method according to an embodiment may include reconstructing the current block from a prediction block generated as a result of performing intra prediction.

An image decoding device according to an embodiment may include at least one memory storing at least one instruction, and at least one processor operating according to the at least one instruction.

In an embodiment, the at least one processor may determine at least one of the first sample set corresponding to the first neighboring sample set adjacent to the current block or the second sample set corresponding to the second neighboring sample set adjacent to the current block from samples reconstructed before the current block in a current picture or a previous picture.

In an embodiment, the first neighboring sample set may include samples reconstructed before the current block, and the second neighboring sample set may include samples that have not been reconstructed.

In an embodiment, the at least one processor may perform intra prediction on the current block by using a sample included in at least one of the first sample set or the second sample set as a reference sample of the current block.

In an embodiment, the at least one processor may reconstruct the current block from a prediction block generated as a result of performing intra prediction.

An image encoding method according to an embodiment may include determining at least one of the first sample set corresponding to the first neighboring sample set adjacent to the current block or the second sample set corresponding to the second neighboring sample set adjacent to the current block from samples encoded before the current block in a current picture or a previous picture.

In an embodiment, the first neighboring sample set may include the samples encoded before the current block, and the second neighboring sample set may include samples that have not been encoded.

The image encoding method according to an embodiment may include performing intra prediction on the current block by using a sample included in at least one of the first sample set or the second sample set as a reference sample of the current block.

The image encoding method according to an embodiment may include encoding the current block from a prediction block generated as a result of performing intra prediction.

An image encoding device according to an embodiment may include at least one memory storing at least one instruction, and at least one processor operating according to the at least one instruction.

In an embodiment, the at least one processor may determine at least one of a first sample set corresponding to a first neighboring sample set adjacent to the current block or a second sample set corresponding to a second neighboring sample set adjacent to the current block from samples encoded before the current block in a current picture or a previous picture.

In an embodiment, the first neighboring sample set may include samples encoded before than the current block, and the second neighboring sample set may include samples that have not been encoded.

In an embodiment, the at least one processor may perform intra prediction on the current block by using a sample included in at least one of the first sample set or the second sample set as a reference sample of the current block.

In an embodiment, the at least one processor may encode the current block from a prediction block generated as a result of performing intra prediction.

A computer-readable recording medium according to an embodiment may include a bitstream, and the bitstream may include an encoding result for the current block.

In an embodiment, the encoding result for the current block may be generated by determining at least one of a first sample set corresponding to a first neighboring sample set adjacent to the current block or a second sample set corresponding to a second neighboring sample set adjacent to the current block from samples encoded before the current block in a current picture or a previous picture.

In an embodiment, the first neighboring sample set may include samples encoded before the current block, and the second neighboring sample set may include samples that have not been encoded.

In an embodiment, the encoding result for the current block may be generated by performing intra prediction on the current block by using a sample included in at least one of the first sample set or the second sample set as a reference sample of the current block.

In an embodiment, the encoding result for the current block may be generated by encoding the current block from a prediction block generated as a result of performing intra prediction.

### Brief Description of Drawings

FIG. 1 is a block diagram of an image decoding device according to an embodiment.
FIG. 2 is a block diagram of an image encoding device according to an embodiment.
FIG. 3 illustrates a process of determining at least one coding unit (CU) by splitting a current CU according to an embodiment.
FIG. 4 illustrates a process of determining at least one CU by splitting a CU in a non-square shape, according to an embodiment.
FIG. 5 illustrates a process of splitting a CU based on at least one of block shape information or split shape mode information according to an embodiment.
FIG. 6 illustrates a method of determining a certain CU from among an odd number of CUs, according to an embodiment.
FIG. 7 illustrates an order of processing a plurality of CUs when the plurality of CUs are determined by splitting a current CU according to an embodiment.
FIG. 8 illustrates a process of determining that a current CU is split into an odd number of CUs when the CUs are not processable in a certain order according to an embodiment.
FIG. 9 illustrates a process of determining at least one CU by splitting a first CU, according to an embodiment.
FIG. 10 illustrates that a shape into which a second CU is splittable is limited when the second CU in a non-square shape, which is determined when a first CU is split, satisfies a certain condition, according to an embodiment.
FIG. 11 illustrates a process of splitting a CU in a square shape when split shape mode information indicates that the CU in a square shape is not to be split into four square CUs, according to an embodiment.
FIG. 12 illustrates that a processing order between a plurality of CUs may vary according to a process of splitting a CU, according to an embodiment.
FIG. 13 illustrates a process of determining a depth of a CU according to changes in the shape and size of the CU when a plurality of CUs are determined by recursively splitting the CU according to an embodiment.
FIG. 14 illustrates depths that may be determined based on shapes and sizes of CUs and part indexes (PIDs) for identifying the CUs according to an embodiment.
FIG. 15 illustrates that a plurality of CUs are determined according to a plurality of certain data units included in a picture, according to an embodiment.
FIG. 16 illustrates CUs that may be determined for each picture when combinations of shapes in which the CUs may be split are different for each picture, according to an embodiment.
FIG. 17 illustrates various shapes of CUs that may be determined based on split shape mode information expressed in binary codes according to an embodiment.
FIG. 18 illustrates another shape of a CU that may be determined based on split shape mode information expressed in a binary code according to an embodiment.
FIG. 19 is a block diagram of an image encoding and decoding system that performs loop filtering according to an embodiment.
FIG. 20 is a block diagram illustrating a configuration of an image decoding device according to an embodiment.
FIG. 21 is a diagram illustrating types of intra prediction modes according to an embodiment.
FIG. 22 is a diagram for explaining neighboring samples that may be used for intra prediction on a current block according to an embodiment.
FIG. 23 is a diagram for explaining a process of predicting a current block by using a first neighboring sample set according to an intra prediction mode according to an embodiment.
FIG. 24 is a diagram illustrating a temporal reference block and a spatial reference block according to an embodiment.
FIG. 25 is a diagram illustrating locations of neighboring blocks related to a current block according to an embodiment.
FIG. 26 is a diagram illustrating a first sample set and a second sample set determined around a reference block according to an embodiment.
FIG. 27 is a diagram for explaining a method of determining a first sample set and a second sample set through template matching according to an embodiment.
FIG. 28 is a diagram illustrating a method of performing intra prediction on a current block by using a first sample set according to an embodiment.
FIG. 29 is a diagram illustrating a method of performing intra prediction on a current block by using a second sample set according to an embodiment.
FIG. 30 is a diagram illustrating a method of performing intra prediction on a current block by using a second sample set according to an embodiment.
FIG. 31 is a diagram for explaining a method of performing intra prediction on a current block by using a first sample set and a second sample set of the current block according to an embodiment.
FIG. 32 is a diagram for explaining a method of performing intra prediction on a current block by using a first sample set and a second sample set according to an embodiment.
FIG. 33 is a diagram for explaining a process of performing inter prediction on a current block by using a temporal reference block and a spatial reference block according to an embodiment.
FIG. 34 is a diagram for explaining a process of performing inter prediction on a current block by using a temporal reference block and a spatial reference block according to an embodiment.
FIG. 35 is a flowchart of an image decoding method according to an embodiment.
FIG. 36 is a block diagram illustrating a configuration of an image encoding device according to an embodiment.
FIG. 37 is a flowchart of an image encoding method according to an embodiment.

### Best Mode for Carrying out the Invention

An image decoding method according to an embodiment may include determining at least one of a first sample set corresponding to a first neighboring sample set adjacent to a current block or a second sample set corresponding to a second neighboring sample set adjacent to the current block from samples reconstructed before the current block in a current picture or a previous picture, the first neighboring sample set may include the samples reconstructed before the current block, and the second neighboring sample set may include samples that have not been reconstructed.

The image decoding method according to an embodiment may include performing intra prediction on the current block by using a sample included in at least one of the first sample set or the second sample set as a reference sample of the current block.

The image decoding method according to an embodiment may include reconstructing the current block from a prediction block generated as a result of performing intra prediction.

### Mode for the Invention

As the present disclosure allows for various changes and numerous embodiments, embodiments will be illustrated in the drawings and described in detail in the detailed description. However, this is not intended to limit the present disclosure to particular modes of practice, and it will be appreciated that all changes, equivalents, and substitutes that do not depart from the spirit and technical scope of the disclosure are encompassed in the disclosure.

In the description of embodiments, certain detailed descriptions of the related art are omitted when it is deemed that they may unnecessarily obscure the essence of the present disclosure. In addition, numbers (e.g., a first, a second, etc.) used in the descriptions of embodiments are merely identifier codes for identifying one element from another.

In the present disclosure, the expression "at least one of a, b or c" indicates only a, only b, only c, both a and b, both a and c, both b and c, all of a, b, and c, or variations thereof.

In addition, in the present disclosure, it will be understood that when elements are "connected" or "coupled" to each other, the elements may be directly connected or coupled to each other, but may alternatively be connected or coupled to each other with an intervening element therebetween, unless specified otherwise.

In the present disclosure, regarding an element represented as a "-er (or) (unit)" or a "module", two or more elements may be combined into one element or one element may be divided into two or more subdivided elements. In addition, each element described hereinafter may additionally perform some or all of functions performed by another element, in addition to main functions of itself, and some of the main functions of each element may be performed entirely by another element.

In the present disclosure, an 'image' may denote a picture, a still image, a frame, a moving image including a plurality of consecutive still images, or a video.

In the present disclosure, a 'sample' may refer to data assigned to a sampling location of an image and to be processed. For example, pixels in a frame of a spatial domain may correspond to samples. A unit including a plurality of samples may be defined as a block.

In the present disclosure, a 'first neighboring sample set' may be a set of samples reconstructed or encoded before the current block among neighboring samples adjacent to the current block, and a 'second neighboring sample set' may be a set of samples to be reconstructed or encoded after the current block among neighboring samples adjacent to the current block. In an embodiment, when the 'first neighboring sample set' is used for prediction encoding and prediction decoding of the current block, some samples in the first neighboring sample set may have not been reconstructed or encoded before the current block. In this case, a sample that has not been reconstructed or encoded may be generated through a certain method.

In the present disclosure, a 'first sample set' may be a set of samples determined or selected in the current picture or a previous picture for prediction encoding and prediction decoding of the current block, and a 'second sample set' may be a set of samples determined or selected in the current picture or a previous picture for prediction encoding and prediction decoding of the current block. The 'first sample set' may correspond to the 'first neighboring sample set', and the 'second sample set' may correspond to the 'second neighboring sample set'.

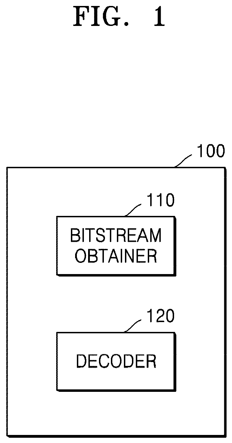

Hereinafter, an image encoding method, a device therefor, an image decoding method, and a device therefor based on a coding unit (CU) and a transformation unit of a tree structure according to an embodiment are disclosed with reference to FIGS. 1 to 19.

FIG. 1 is a block diagram of an image decoding device 100 according to an embodiment.

The image decoding device 100 may include a bitstream obtainer 110 and a decoder 120. The bitstream obtainer 110 and the decoder 120 may each include at least one processor. In addition, the bitstream obtainer 110 and the decoder 120 may each include memory that stores instructions to be executed by the at least one processor.

The bitstream obtainer 110 may receive a bitstream. The bitstream may include information resulting from image encoding by an image encoding device 200 to be described below. In addition, the bitstream may be transmitted from the image encoding device 200. The image encoding device 200 and the image decoding device 100 may be connected to each other by wire or wirelessly, and the bitstream obtainer 110 may receive a bitstream by wire or wirelessly. The bitstream obtainer 110 may receive a bitstream from a storage medium such as an optical medium or a hard disk. The decoder 120 may reconstruct an image based on information obtained from the received bitstream. The decoder 120 may obtain a syntax element for reconstructing the image from the bitstream. The decoder 120 may reconstruct the image based on the syntax element.

The operation of the image decoding device 100 will be described in detail. The bitstream obtainer 110 may receive a bitstream.

The image decoding device 100 may perform an operation of obtaining a bin string corresponding to a split shape mode of a CU from the bitstream. In addition, the image decoding device 100 may perform an operation of determining a split rule of a CU. In addition, the image decoding device 100 may perform an operation of splitting a CU into a plurality of CUs based on at least one of the bin string corresponding to the split shape mode and the split rule. In order to determine the split rule, the image decoding device 100 may determine an allowable first range of the size of the CU according to a ratio of the width and the height of the CU. In order to determine the split rule, the image decoding device 100 may determine an allowable second range of the size of the CU according to the split shape mode of the CU.

Hereinafter, splitting of a CU according to an embodiment of the present disclosure will be described in detail.

First, one picture may be split into one or more slices or one or more tiles. One slice or one tile may be a sequence of one or more largest coding tree units (CTUs). According to the implementation, one slice may include one or more tiles, and one slice may include one or more largest CTUs. A slice including one or more tiles may be determined in a picture.

A largest coding tree block (CTB) is a concept compared to the largest CTU. The largest CTB means an N×N block including N×N samples (where N is an integer). Each color component may be split into one or more largest CTBs.

When a picture has three sample arrays (sample arrays for Y, Cr, and Cb components), the largest CTU is a unit including syntax structures used to encode a largest CTB of a luma sample, two largest CTBs of chroma samples corresponding thereto, the luma sample, and the chroma samples. When a picture is a monochrome picture, the largest CTU is a unit including syntax structures used to encode a largest CTB of a monochrome sample and monochrome samples. When a picture is a picture encoded in a color plane separated according to color components, the largest CTU is a unit including syntax structures used to encode the picture and samples of the picture.

One largest CTB may be split into an MxN coding block including MxN samples (where M and N are integers).

When a picture has sample arrays for Y, Cr, and Cb components, a CU is a unit including syntax structures used to encode a coding block of a luma sample and two coding blocks of chroma samples corresponding thereto, a luma sample, and chroma samples. When a picture is a monochrome picture, the CU is a unit including syntax structures used to encode a coding block of a monochrome sample and monochrome samples. When a picture is a picture encoded in a color plane separated according to color components, the CU is a unit including syntax structures used to encode the picture and samples of the picture.

As described above, the largest CTB and the largest CTU are concepts that are distinguished from each other, and the coding block and the CU are concepts that are distinguished from each other. That is, the largest CTU refers to a data structure including a largest CTB including the corresponding sample and a syntax structure corresponding thereto. However, because it may be understood by one of ordinary skill in the art that the largest CTU or the largest CTB refers to a block of a certain size including a certain number of samples, the largest CTB and the largest CTU, or the coding block and the CU are mentioned in the following specification without being distinguished unless otherwise described.

The image may be split into largest CTUs. The size of the largest CTU may be determined based on information obtained from the bitstream. The shape of the largest CTU may have a square shape of the same size. However, the embodiment is not limited thereto.

For example, information about the maximum size of a luma coding block may be obtained from the bitstream. For example, the maximum size of the luma coding block indicated by the information about the maximum size of the luma coding block may be one of 4x4, 8x8, 16x16, 32x32, 64x64, 128x128, and 256x256.

For example, information about the maximum size of the luma coding block that is splittable into two and a luma block size difference may be obtained from the bitstream. The information about the luma block size difference may indicate a size difference between a luma largest CTU and a luma largest CTB that is splittable into two. Therefore, the size of the luma largest CTU may be determined by combining the information about the maximum size of the luma coding block that is splittable into two with the information about the luma block size difference that are obtained from the bitstream. The size of a chroma largest CTU may also be determined by using the size of the luma largest CTU. For example, when a Y:Cb:Cr ratio is 4:2:0 according to a color format, the size of a chroma block may be half the size of a luma block, and likewise, the size of the chroma largest CTU may be half the size of the luma largest CTU.

According to an embodiment, because information about the maximum size of the luma coding block that is binary splittable is obtained from a bitstream, the maximum size of the luma coding block that is binary splittable may be variably determined. In contrast, the maximum size of a luma coding block that is ternary splittable may be fixed. For example, the maximum size of the luma coding block that is ternary splittable in an I-picture may be 32x32, and the maximum size of the luma coding block that is ternary splittable in a P-picture or a B-picture may be 64x64.

In addition, the largest CTU may be hierarchically split into CUs based on the split shape mode information obtained from the bitstream. As the split shape mode information, at least one of information indicating whether quad splitting is performed, information indicating whether multi splitting is performed, split direction information, or split shape information may be obtained from the bitstream.

For example, the information indicating whether quad splitting is performed may indicate whether the current CU is to be quad split QUAD_SPLIT.

When the current CU is not quad split, the information indicating whether multi splitting is performed may indicate whether the current CU is no longer split NO_SPLIT or is binary/ternary split.

When the current CU is binary split or ternary split, the split direction information indicates that the current CU is split into one of a horizontal direction or a vertical direction.

When the current CU is split in the horizontal or the vertical direction, the split shape information indicates that the current CU is binary split or binary split.

A split mode of the current CU may be determined according to the split direction information and the split shape information. The split mode may be determined to be a binary horizontal split mode SPLIT _BT_HOR when the current CU is binary split in the horizontal direction, a ternary horizontal split mode SPLIT_TT_HOR when the current CU is ternary split in the horizontal direction, a binary vertical split mode SPLIT_BT_VER when the current CU is binary split in the vertical direction, and a ternary vertical split mode SPLIT_TT_VER when the current CU is ternary split in the vertical direction.

The image decoding device 100 may obtain the split shape mode information from the bitstream from one bin string. A shape of the bitstream received by the image decoding device 100 may include a fixed length binary code, a unary code, a truncated unary code, a predetermined binary code, etc. The bin string is information in a binary number. The bin string may include at least one bit. The image decoding device 100 may obtain the split shape mode information corresponding to the bin string based on the split rule. The image decoding device 100 may determine whether to quad split a CU, whether not to split the CU, a split direction, and a split shape, based on one bin string.

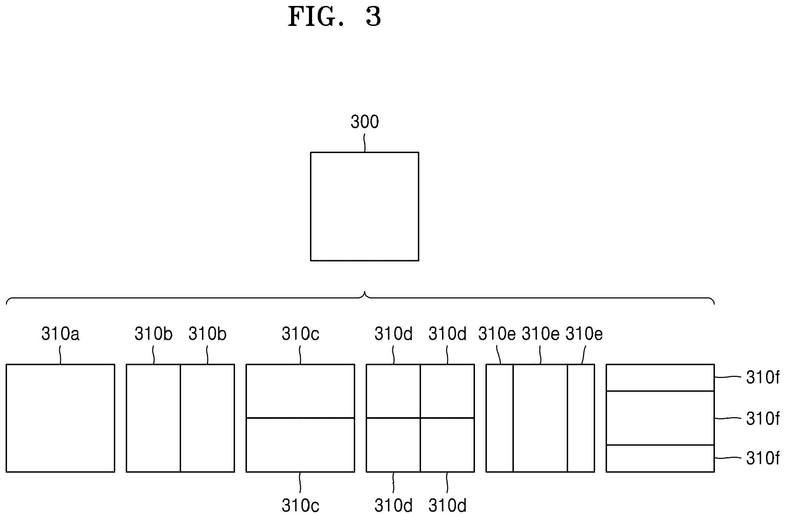

The CU may be smaller than or the same as the largest CTU. For example, because the largest CTU is also a CU having the maximum size, the largest CTU is one of CUs. When the split shape mode information about the largest CTU indicates that the largest CTU is not split, the CU determined in the largest CTU has the same size as the largest CTU. When the split shape mode information about the largest CTU indicates that the largest CTU is split, the largest CTU may be split into CUs. In addition, when the split shape mode information about the CU indicates that the CU is split, CUs may be split into smaller CUs. However, the splitting of the image is not limited thereto, and the largest CTU and the CU may not be distinguished. The splitting of the CU will be described n more detail with reference to FIGS. 3 to 16.

In addition, one or more prediction blocks for prediction may be determined from the CU. The prediction block may be the same as or smaller than the CU. In addition, one or more transformation blocks for transformation may be determined from the CU. The transformation block may be the same as smaller than the CU.

The shapes and sizes of the transformation block and the prediction block may not be related to each other.

In another embodiment, prediction may be performed by using the CU as the prediction block. In addition, transformation may be performed by using the CU as the transformation block.

The splitting of the CU will be described in more detail with reference to FIGS. 3 to 16. The current block and the neighboring block of the present disclosure may indicate one of a largest CTU, a CU, a prediction block, and a transformation block. In addition, the current block or the current CU is a block currently being decoded or encoded or a block currently being split. The neighboring block may be a block reconstructed before the current block. The neighboring block may be spatially or temporally adjacent to the current block. The neighboring block may be located at one of the lower left, left, upper left, upper, upper right, right, and lower right sides of the current block.

FIG. 3 illustrates a process in which the image decoding device 100 determines at least one CU by splitting the current CU according to an embodiment.

A block shape may include 4Nx4N, 4Nx2N, 2Nx4N, 4NxN, Nx4N, 32NxN, Nx32N, 16NxN, Nx16N, 8NxN, or Nx8N. Here, N may be a positive integer. Block shape information is information indicating at least one of a shape, a direction, a ratio of width and height or the size of a CU.

The shape of the CU may include a square and a non-square. When the width and the height of the CU are the same (i.e., when the block shape of the CU is 4N×4N), the image decoding device 100 may determine the block shape information of the CU as a square. The image decoding device 100 may determine the shape of the CU as a non-square.

When the width and the height of the CU are different from each other (i.e., when the block shape of the CU is 4Nx2N, 2Nx4N, 4NxN, Nx4N, 32NxN, Nx32N, 16NxN, Nx16N, 8NxN or N×8N), the image decoding device 100 may determine the block shape information of the CU as a non-square. When the shape of the CU is the non-square, the image decoding device 100 may determine the ratio of the width and the height in the block shape information of the CU as at least one of 1:2, 2:1, 1:4, 4:1, 1:8, 8:1, 1:16, 16:1, 1:32, or 32:1. In addition, based on a length of the width and a length of the height of the CU, the image decoding device 100 may determine whether the CU is in a horizontal direction or a vertical direction. In addition, the image decoding device 100 may determine the size of the CU, based on at least one of the length of the width, the length of the height, or the width of the CU.

According to an embodiment, the image decoding device 100 may determine the shape of the CU by using the block shape information, and determine a shape in which the CU is split by using the split shape mode information. That is, a splitting method of the CU indicated by the split shape mode information may be determined according to a block shape indicated by the block shape information used by the image decoding device 100.

The image decoding device 100 may obtain the split shape mode information from the bitstream. However, the embodiment is not limited thereto, and the image decoding device 100 and the image encoding device 200 may determine predefined split shape mode information based on the block shape information. The image decoding device 100 may determine predefined split shape mode information with respect to a largest CTU or a smallest CU. For example, the image decoding device 100 may determine the split shape mode information with respect to the largest CTU to be quad split. In addition, the image decoding device 100 may determine the split shape mode information with respect to the smallest CU to be "not split". Specifically, the image decoding device 100 may determine the size of the largest CTU to be 256×256. The image decoding device 100 may determine the predefined split shape mode information to be quad split. Quad split is a split shape mode in which both the width and height of a CU are bisected. The image decoding device 100 may obtain a CU having a size of 128×128 from a largest CTU having a size of 256×256 based on the split shape mode information. In addition, the image decoding device 100 may determine the size of the smallest CU to be 4×4. The image decoding device 100 may obtain the split shape mode information indicating "not split" with respect to the smallest CU.

According to an embodiment, the image decoding device 100 may use block shape information indicating that the current CU has a square shape. For example, the image decoding device 100 may determine whether to split the CU in the square shape, whether to split the CU vertically, whether to split the CU horizontally, or whether to split the CU into four CUs according to the split shape mode information. Referring to FIG. 3, when the block shape information of a current CU 300 indicates a square shape, the decoder 120 may not split a CU 310a having the same size as the current CU 300 according to the split shape mode information indicating not split, or determine CUs 310b, 310c, 310d, 310e, 310f, etc. which are split based on the split shape mode information indicating a certain split method.

Referring to FIG. 3, the image decoding device 100 according to an embodiment may determine two CUs 310b obtained by splitting the current CU 300 in a vertical direction based on the split shape mode information indicating that the current CU 300 is split in the vertical direction. The image decoding device 100 may determine two CUs 310c obtained by splitting the current CU 300 in a horizontal direction based on the split shape mode information indicating that the current CU 300 is split in the horizontal direction. The image decoding device 100 may determine four CUs 310d obtained by splitting the current CU 300 in the vertical direction and horizontal direction based on the split shape mode information indicating that the current CU 300 is split in the vertical direction and horizontal direction. The image decoding device 100 according to an embodiment may determine three CUs 310e obtained by splitting the current CU 300 in the vertical direction based on the split shape mode information indicating that the current CU 300 is ternary split in the vertical direction. The image decoding device 100 may determine three CUs 310f obtained by splitting the current CU 300 in the horizontal direction based on the split shape mode information indicating that the current CU 300 is ternary split in the horizontal direction. However, a split shape in which the square CU may be split should not be interpreted by being limited to the above-described shape, and may include various shapes that may be indicated by the split shape mode information. Certain split shapes in which the square CU is split will be described in detail below through various embodiments.

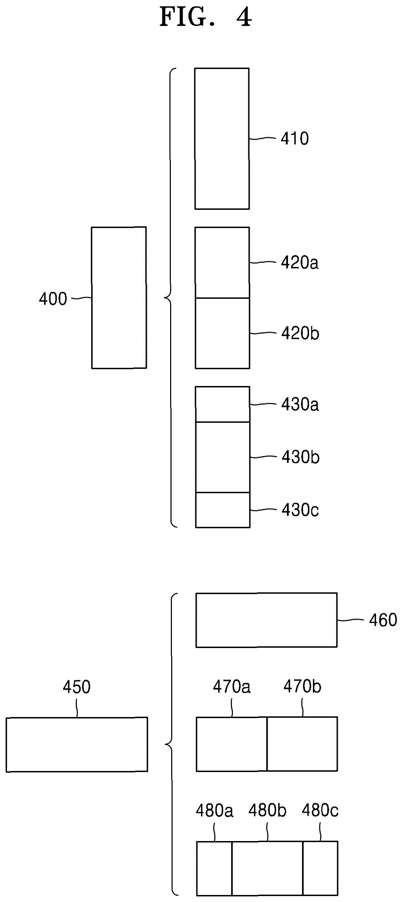

FIG. 4 illustrates a process in which the image decoding device 100 determines at least one CU by splitting a CU in a non-square shape, according to an embodiment.

According to an embodiment, the image decoding device 100 may use block shape information indicating that the current CU has the non-square shape. The image decoding device 100 may determine whether not to split the non-square current CU or whether to split the non-square current CU by using a certain method according to split shape mode information. Referring to FIG. 4, when the block shape information of a current CU 400 or 450 indicates the non-square shape, the image decoding device 100 may determine a CU 410 or 460 having the same size as the current CU 400 or 450 according to the split shape mode information indicating not split, or may determine CUs 420a, 420b, 430a, 430b, 430c, 470a, 470b, 480a, 480b, and 480c which are split based on the split shape mode information indicating the certain split method. The certain split method of splitting the non-square CU will be described in detail below through various embodiments.

According to an embodiment, the image decoding device 100 may determine a shape in which the CU is split by using the split shape mode information, and in this case, the split shape mode information may indicate the number of one or more CUs generated by splitting the CU. Referring to FIG. 4, when the split shape mode information indicates that the current CU 400 or 450 is split into two CUs, the image decoding device 100 may split the current CU 400 or 450 based on the split shape mode information and determine two CUs 420a and 420b or 470a and 470b included in the current CU.

According to an embodiment, when the image decoding device 100 splits the current CU 400 or 450 in the non-square shape based on the split mode information, the image decoding device 100 may split the current CU in consideration of the location of a long side of the current CU 400 or 450 in the non-square shape. For example, the image decoding device 100 may determine a plurality of CUs by splitting the current CU 400 or 450 in a direction of splitting the long side of the current CU 400 or 450 in consideration of the shape of the current CU 400 or 450.

According to an embodiment, when the split shape mode information indicates that the CU is split (ternary split) into an odd number of blocks, the image decoding device 100 may determine an odd number of CUs included in the current CU 400 or 450. For example, when the split shape mode information indicates that the current CU 400 or 450 is split into three CUs, the image decoding device 100 may split the current CU 400 or 450 into three CUs 430a, 430b, and 430c, or 480a, 480b, and 480c.

According to an embodiment, a ratio of a width and a height of the current CU 400 or 450 may be 4:1 or 1:4. When the ratio of the width to the height is 4:1, because a length of the width is longer than a length of the height, the block shape information may be a horizontal direction. When the ratio of the width to the height is 1:4, because the length of the width is shorter than the length of the height, the block shape information may be a vertical direction. The image decoding device 100 may determine to split the current CU into an odd number of blocks based on the split shape mode information. In addition, the image decoding device 100 may determine a split direction of the current CU 400 or 450 based on the block shape information of the current CU 400 or 450. For example, when the current CU 400 is a vertical direction, the image decoding device 100 may determine the CUs 430a, 430b, and 430c by splitting the current CU 400 in a horizontal direction. In addition, when the current CU 450 is in the horizontal direction, the image decoding device 100 may determine the CUs 480a, 480b, and 480c by splitting the current CU 450 in the vertical direction.

According to an embodiment, the image decoding device 100 may determine an odd number of CUs included in the current CU 400 or 450, and not all of the determined CUs may have the same size. For example, among the determined odd number of CUs 430a, 430b, and 430c, or 480a, 480b, and 480c, a certain CU 430b or 480b may have the size different from the size of the other CUs 430a and 430c, or 480a and 480c. That is, CUs that may be determined by splitting the current CU 400 or 450 may have a plurality of types of sizes, and in some cases, the odd number of CUs 430a, 430b, and 430c, or 480a, 480b, and 480c may have different sizes.

According to an embodiment, when the split shape mode information indicates that the CU is split into an odd number of blocks, the image decoding device 100 may determine the odd number of CUs included in the current CU 400 or 450, and the image decoding device 100 may further set a certain limitation on at least one CU among the odd number of CUs generated through the splitting. Referring to FIG. 4, the image decoding device 100 may perform a different decoding process on the CU 430b or 480b at a center location among the three CUs 430a, 430b, and 430c, or 480a, 480b, and 480c generated by splitting the current CU 400 or 450 from that of the other CUs 430a and 430c, or 480a and 480c. For example, the image decoding device 100 may limit the CU 430b or 480b at a center location to be no longer split or to be split only a certain number of times, unlike other CUs 430a and 430c, or 480a and 480c.

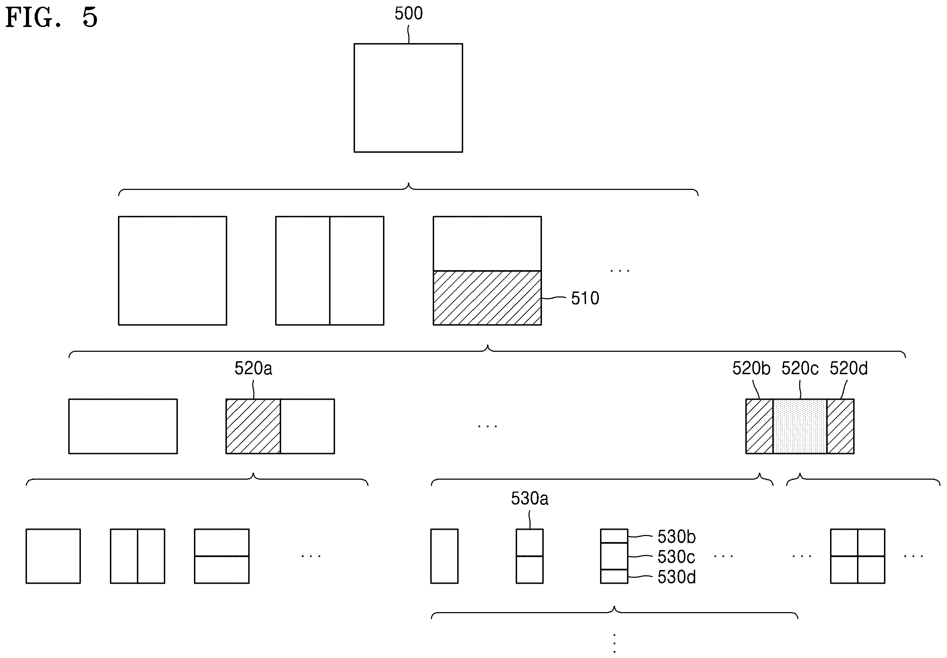

FIG. 5 illustrates a process in which the image decoding device 100 splits a CU based on at least one of block shape information or split shape mode information according to an embodiment.

According to an embodiment, the image decoding device 100 may determine to split or not to split a first CU 500 in a square shape into CUs based on at least one of the block shape information or the split shape mode information. According to an embodiment, when the split shape mode information indicates that the first CU 500 is split in a horizontal direction, the image decoding device 100 may determine a second CU 510 by splitting the first CU 500 in the horizontal direction. A first CU, a second CU, and a third CU used according to an embodiment are terms used to understand the relationship between CUs before and after split. For example, when the first CU is split, the second CU may be determined, and when the second CU is split, the third CU may be determined. Hereinafter, it may be understood that the relationship between the first CU, the second CU, and the third CU used follows the above-described features.

According to an embodiment, the image decoding device 100 may determine to split or not to split the determined second CU 510 into CUs based on the split shape mode information. Referring to FIG. 5, the image decoding device 100 may split or not split the second CU 510 in a non-square shape determined by splitting the first CU 500 into one or more third CUs 520a, 520b, 520c, 520d, etc. based on the split shape mode information. The image decoding device 100 may obtain split shape mode information and split a plurality of second CUs (e.g., 510) of various shapes by splitting the first CU 500 based on the obtained split shape mode information, and the second CU 510 may be split according to a method of splitting the first CU 500 based on the split shape mode information. According to an embodiment, when the first CU 500 is split into the second CU 510 based on the split shape mode information about the first CU 500, the second CU 510 may also be split into third CUs (e.g., 520a, 520b, 520c, 520d, etc.) based on the split shape mode information about the second CU 510. That is, the CU may be recursively split based on the split shape mode information related to each CU. Therefore, a square CU may be determined from a CU in a non-square shape, and a CU in the non-square shape may be determined by recursively splitting such a CU in the square shape

Referring to FIG. 5, among an odd number of third CUs 520b, 520c, and 520d determined by splitting the second CU 510 in the non-square shape, a certain CU (e.g., a CU at a center location or a CU in the square shape) may be recursively split. According to an embodiment, the third CU 520c the non-square shape, which is one of the odd number of third CUs 520b, 520c, and 520d, may be split in a horizontal direction into a plurality of fourth CUs. A fourth CU 530b or 530d in the non-square shape, which is one of a plurality of fourth CUs 530a, 530b, 530c, and 530d, may be again split into a plurality of CUs. For example, the fourth CU 530b or 530d in the non-square shape may be again split into an odd number of CUs. A method that may be used for recursive split of a CU will be described below through various embodiments.

According to an embodiment, the image decoding device 100 may split each of the third CUs 520a, 520b, 520c, 520d, etc. into CUs based on the split shape mode information. In addition, the image decoding device 100 may determine not to split the second CU 510 based on the split shape mode information. According to an embodiment, the image decoding device 100 may split the second CU 510 in the non-square shape into the odd number of third CUs 520b, 520c, and 520d. The image decoding device 100 may set a certain limitation on a certain third CU among the odd number of third CUs 520b, 520c, and 520d. For example, the image decoding device 100 may limit the CU 520c at a center location among the odd number of third CUs 520b, 520c, and 520d to no longer be split or to be split to a settable number of times.

Referring to FIG. 5, the image decoding device 100 may limit the CU 520c at a center location among the odd number of third CUs 520b, 520c, and 520d included in the second CU 510 in the non-square shape to no longer be split, to be split into a certain split shape (e.g., to be split into only four CUs or to be split into a shape corresponding to the shape in which the second CU 510 is split), or to be split in only a certain number of times (e.g., to be split only n times, n>0). However, because the limitation on the CU 520c at a center location is only simple embodiments, it should not be interpreted as being limited to the above-described embodiments, and it should be interpreted that the limitation includes various limitations that the CU 520c at a center location may be decoded differently from the other CUs 520b and 520d.

According to an embodiment, the image decoding device 100 may obtain the split shape mode information used to split the current CU at a certain location in the current CU.

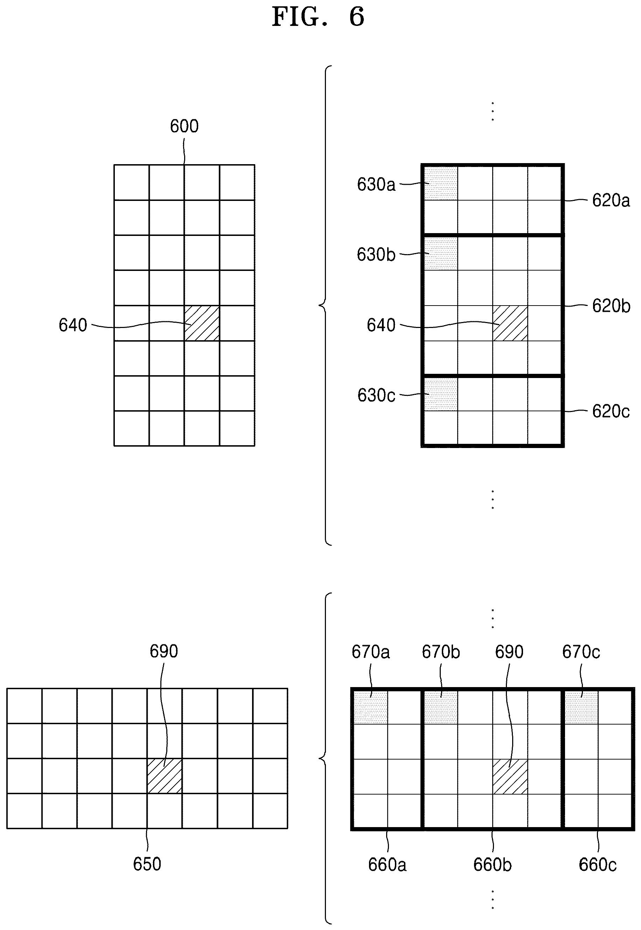

FIG. 6 illustrates a method, performed by the image decoding device 100, of determining a certain CU from among an odd number of CUs, according to an embodiment.

Referring to FIG. 6, split shape mode information of a current CU 600 or 650 may be obtained from sample at a certain location (e.g., a sample 640 or 690 at a center location) among a plurality of samples included in the current CU 600 or 650. However, a certain location in the current CU 600 where at least one of such split shape mode information may be obtained should not be interpreted as being limited to the center location shown in FIG. 6, and the certain location should be interpreted as including various locations that may be included in the current CU 600 (e.g., uppermost, lowermost, left, right, upper left, lower left, upper right, lower right, etc.) The image decoding device 100 may obtain split shape mode information obtained from a certain location and determine to split or not to split the current CU into CUs of various shapes and sizes.

According to an embodiment, when the current CU is split into a certain number of CUs, the image decoding device 100 may select one of the CUs. A variety of methods may be used to select one of a plurality of CUs, which will be described below through various embodiments.

According to an embodiment, the image decoding device 100 may split the current CU into a plurality of CUs and determine a CU at a certain location.

According to an embodiment, the image decoding device 100 may use information indicating a location of each of an odd number of CUs to determine a CU at a center location among the odd number of CUs. Referring to FIG. 6, the image decoding device 100 may split the current CU 600 or the current CU 650 to determine an odd number of CUs 620a, 620b, and 620c or an odd number of CUs 660a, 660b, and 660c. The image decoding device 100 may determine the middle CU 620b or the middle CU 660b by using information about locations of the odd number of CUs 620a, 620b, and 620c or the odd number of CUs 660a, 660b, and 660c. For example, the image decoding device 100 may determine the CU 620b at a center location by determining the locations of the CUs 620a, 620b, and 620c based on information indicating locations of certain samples included in the CUs 620a, 620b, and 620c. Specifically, the image decoding device 100 may determine the CU 620b at a center location by determining the locations of the CUs 620a, 620b, and 630c based on information indicating locations of samples 630a, 620b, and 630c on the upper left side of the CUs 620a, 620b, and 620c.

According to an embodiment, the information indicating the locations of samples 630a, 620b, and 630c included in the CUs 620a, 620b, and 620c, respectively, may include information about locations or coordinates of the CUs 620a, 620b, and 620c in a picture. According to an embodiment, the information indicating the locations of samples 630a, 620b, and 630c included in the CUs 620a, 620b, and 620c, respectively, may include information indicating widths or heights of the CUs 620a, 620b, and 620c included in the current CU 600, and the widths or heights may correspond to information indicating differences between coordinates of the CUs 620a, 620b, and 620c in the picture. In other words, the image decoding device 100 may determine the CU 620b at a center location by directly using information about the locations or coordinates of the CUs 620a, 620b, and 620c in the picture or by using information about a width or height of a CU corresponding to a difference value between coordinates.

According to an embodiment, information indicating the location of the sample 630a of the upper left side of the upper CU 620a may include coordinates (xa, ya), information indicating the location of the sample 530b of the upper left side of the middle CU 620b may include coordinates (xb, yb), and information indicating the location of the sample 630c of the upper left side of the lower CU 620c may include coordinates (xc, yc). The image decoding device 100 may determine the middle CU 620b by using the coordinates of the samples 630a, 630b, and 630c of the upper left included in the CUs 620a, 620b, and 620c, respectively. For example, when the coordinates of the samples 630a, 630b, and 630c of the upper left are disposed in ascending or descending order, the CU 620b including (xb, yb), which is the coordinates of the sample 630b at a center location, may be determined as a CU at a center location among the CUs 620a, 620b, and 620c determined by splitting the current CU 600. However, the coordinates indicating the locations of the samples 630a, 630b, and 630c of the upper left may indicate the absolute locations in the picture, and furthermore, with respect to the location of the sample 630a of the upper left side of the upper CU 620a, coordinates (dxb, dyb) indicating the relative location of the sample 630b of the upper left side of the middle CU 620b, and coordinates (dxc, dyc) indicating the relative location of the sample 630c of the upper left side of the lower CU 620c may be used. In addition, the method of determining a CU at a certain location by using coordinates of a sample as information indicating the location of the sample included in the CU should not be interpreted as being limited to the above-described method, but should be interpreted in various arithmetic methods capable of using the coordinates of the sample.

According to an embodiment, the image decoding device 100 may split the current CU 600 into the plurality of CUs 620a, 620b, and 620c, and select a CU from among the CUs 620a, 620b, and 620c according to a certain criterion. For example, the image decoding device 100 may select the CU 620b having different sizes from among the CUs 620a, 620b, and 620c.

According to an embodiment, the image decoding device 100 may determine the width or height of each of the CUs 620a, 620b, and 620c by using the coordinates (xa, Ya) which is information indicating the location of the sample 630a of the upper left side of the upper CU 620a, the coordinates (xb, yb) which is information indicating the location of the sample 630b of the upper left side of the middle CU 620b, and the coordinates (xc, yc) which is information indicating the location of the sample 630c of the upper left side of the lower CU 620c. The image decoding device 100 may determine the size of each of the CUs 620a, 620b, and 620c by using (xa, ya), (xb, yb), and (xc, yc), which are the coordinates indicating the locations of the CUs 620a, 620b, and 620c. According to an embodiment, the image decoding device 100 may determine the width of the upper CU 620a to be the width of the current CU 600. The image decoding device 100 may determine the height of the upper CU 620a to be yb-ya. According to an embodiment, the image decoding device 100 may determine the width of the middle CU 620b to be the width of the current CU 600. The image decoding device 100 may determine the height of the middle CU 620b to be yc-yb. According to an embodiment, the image decoding device 100 may determine the width or height of a lower CU by using the width or height of the current CU and the widths and heights of the upper CU 620a and the middle CU 620b. The image decoding device 100 may determine a CU having a size different from those of other CUs based on the determined widths and heights of the CUs 620a, 620b, and 620c. Referring to FIG. 6, the image decoding device 100 may determine the middle CU 620b having a different size from the sizes of the upper CU 620a and the lower CU 620c to be the CU at the certain location. However, the above-described process in which the image decoding apparatus 100 determines a CU having a size different from the size of the other CUs merely corresponds to an example of determining a CU at a certain location by using the sizes of CUs, which are determined based on coordinates of samples, and thus various processes of determining a CU at a certain location by comparing the sizes of CUs, which are determined based on coordinates of certain samples, may be used.

The image decoding device 100 may determine the width or height of each of the CUs 660a by using coordinates (xd, yd) which is information indicating the location of the sample 670a of the upper left side of the left CU 660b, coordinates (xe, ye) which is information indicating the location of the sample 670b of the upper left side of the middle CU 660b, and coordinates (xf, yf) which is information indicating the location of the sample 670c of the upper left side of the right CU 660c. The image decoding device 100 may determine the size of each of the CUs 660a, 660b, and 660c by using the coordinates (xd, yd), (xe, ye), and (xf, yf) indicating the locations of the CUs 660a, 660b, and 660c.

According to an embodiment, the image decoding device 100 may determine the width of the left CU 660a to be xe-xd. The image decoding device 100 may determine the height of the left CU 660a to be the height of the current CU 650. According to an embodiment, the image decoding device 100 may determine the width of the middle CU 660b to be xf-xe. The image decoding device 100 may determine the height of the middle CU 660b to be the height of the current CU 600. According to an embodiment, the image decoding device 100 may determine the width or height of the right CU 660c by using the width or height of the current CU 650 and the widths and heights of the left CU 660a and the middle CU 660b. The image decoding device 100 may determine a CU having a size different from those of other CUs based on the determined widths and heights of the CUs 660a, 660b, and 660c. Referring to FIG. 6, the image decoding device 100 may determine the middle CU 660b having a different size from the sizes of the left CU 660a and the right CU 660c to be the CU at the certain location. However, the above-described process in which the image decoding apparatus 100 determines a CU having a size different from the size of the other CUs merely corresponds to an example of determining a CU at a certain location by using the sizes of CUs, which are determined based on coordinates of samples, and thus various processes of determining a CU at a certain location by comparing the sizes of CUs, which are determined based on coordinates of certain samples, may be used.

However, a location of a sample considered to determine a location of a CU should not be interpreted as being limited to the upper left described above, and may be interpreted that information about a location of an arbitrary sample included in the CU may be used.

According to an embodiment, the image decoding device 100 may select a CU at a certain location from among an odd number of CUs determined by splitting the current CU in consideration of the shape of the current CU. For example, when the current CU has a non-square shape with a width longer than a height, the image decoding device 100 may determine the CU at the certain location in a horizontal direction. That is, the image decoding device 100 may determine one of CUs at different locations in the horizontal direction and limit the corresponding CU. When the current CU has a non-square shape with a height longer than a width, the image decoding device 100 may determine the CU at the certain location in a vertical direction. That is, the image decoding device 100 may determine one of CUs at different locations in the vertical direction and limit the corresponding CU.

According to an embodiment, the image decoding device 100 may use information indicating a location of each of an even number of CUs to determine the CU at the certain location from among the even number of CUs. The image decoding device 100 may determine an even number of CUs by splitting (binary splitting) the current CU, and determine the CU at the certain location by using information about locations of the even number of CUs. A detailed process in this regard may be a process of determining a CU at a certain location (e.g., a center location) from among an odd number of CUs described above with reference to FIG. 6, and thus a description thereof will be omitted.

According to an embodiment, when a current CU in a non-square shape is split into a plurality of CUs, certain information about a CU at a certain location may be used in a splitting process to determine the CU at the certain location from among the plurality of CUs. For example, the image decoding device 100 may use at least one of block shape information and split shape mode information which are stored in a sample included in a middle CU in the splitting process to determine a CU at a center location from among the plurality of CUs determined by splitting the current CU.

Referring to FIG. 6, the image decoding device 100 may split the current CU 600 into the plurality of CUs 620a, 620b, and 620c based on the split shape mode information, and determine the CU 620b at a center location among the plurality of CUs 620a, 620b, and 620c. Furthermore, the image decoding device 100 may determine the CU 620b at a center location in consideration of a location where the split shape mode information is obtained. That is, the split shape mode information of the current CU 600 may be obtained from the sample 640 at a center location of the current CU 600, and when the current CU 600 is split into the plurality of CUs 620a, 620b, and 620c based on the split shape mode information, the CU 620b including the sample 640 may be determined as the CU at the center location. However, information used to determine the CU at the center location should not be interpreted as being limited to the split shape mode information, and various types of information may be used in a process of determining the CU at the center location.

According to an embodiment, certain information for identifying a CU at a certain location may be obtained from a certain sample included in the CU to be determined. Referring to FIG. 6, the image decoding device 100 may use the split mode information obtained from a sample at a certain location in the current CU 600 (e.g., a sample at a center location of the current CU 600) to determine a CU at a certain location from among the plurality of the CUs 620a, 620b, and 620c determined by splitting the current CU 600 (e.g., a CU at a center location from among a plurality of split CUs). That is, the image decoding device 100 may determine the sample at the certain location in consideration of a block shape of the current CU 600, and determine the CU 620b including a sample from which certain information (e.g., the split shape mode information) may be obtained, from among the plurality of CUs 620a, 620b, and 620c determined by splitting the current CU 600, and set a certain limitation on the CU 620b. Referring to FIG. 6, according to an embodiment, the image decoding device 100 may determine the sample 640 at the center location of the CU 600 as the sample from which the certain information may be obtained, and set a certain limitation on the CU 620b in a process of decoding the CU 620b including the sample 640. However, the location of the sample to which the certain information may be obtained should not be interpreted as being limited to the above-described location, but may be interpreted as samples at arbitrary locations included in the CU 620b to be determined to set a limitation.

According to an embodiment, the location of the sample from which the certain information may be obtained may be determined based on the shape of the current CU 600. According to an embodiment, the block shape information may indicate whether the current CU has a square or non-square shape, and the location of the sample from which the certain information may be obtained may be determined based on the shape. For example, the image decoding device 100 may use at least one of information about the width and height of the current CU to determine a sample located at a boundary for splitting at least one of the width and height of the current CU in half as the sample from which the certain information may be obtained. As another example, when the block shape information related to the current CU indicates a non-square shape, the image decoding device 100 may determine one of samples adjacent to a boundary for splitting a long side of the current CU in half as the sample from which the certain information may be obtained.

According to an embodiment, when the current CU is split into a plurality of CUs, the image decoding device 100 may use the split shape mode information to determine a CU at a certain location from among the plurality of CUs. According to an embodiment, the image decoding device 100 may obtain the split shape mode information from a sample at a certain location included in a CU, and split the plurality of CUs generated by splitting the current CU by using the split shape mode information obtained from the sample at the certain location included in each of the plurality of CUs. That is, the CU may be recursively split using the split shape mode information obtained from the sample at the certain location included in each CU. A recursive split process of the CU has been described above with reference to FIG. 5, and thus a detailed description thereof will be omitted.

According to an embodiment, the image decoding device 100 may determine one or more CUs by splitting the current CU, and determine an order of decoding the one or more CUs, according to a certain block (e.g., the current CU).

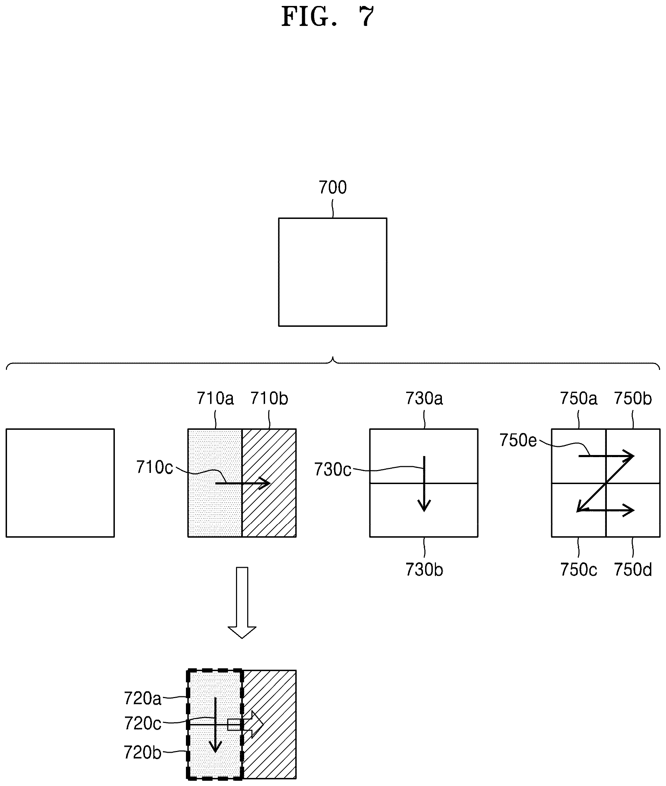

FIG. 7 illustrates an order of processing a plurality of CUs when the image decoding device 100 determines the plurality of CUs by splitting a current CU, according to an embodiment.

According to an embodiment, the image decoding device 100 may determine second CUs 710a and 710b by splitting a first CU 700 in a vertical direction, determine second CUs 730a and 730b by splitting the first CU 700 in a horizontal direction, or determine second CUs 750a, 750b, 750c, and 750d by splitting the first CU 700 in vertical and horizontal directions, based on split shape mode information

Referring to FIG. 7, the image decoding device 100 may determine to process the second CUs 710a and 710b, which are determined by splitting the first CU 700 in a vertical direction, in a horizontal direction order 710c. The image decoding device 100 may determine to process the second CUs 730a and 730b, which are determined by splitting the first CU 700 in a horizontal direction, in a vertical direction order 730c. The image decoding device 100 may determine the second CUs 750a, 750b, 750c, and 750d, which are determined by splitting the first CU 700 in vertical and horizontal directions, according to a certain order (e.g., a raster scan order or Z-scan order 750e) by which CUs in a row are processed and then CUs in a next row are processed.

According to an embodiment, the image decoding device 100 may recursively split CUs. Referring to FIG. 7, the image decoding device 100 may determine the plurality of CUs 710a and 710b, 730a and 730b, or 750a, 750b, 750c, and 750d by splitting the first CU 700, and may recursively split each of the determined plurality of CUs 710a, 710b, 730a, 730b, 750a, 750b, 750c, and 750d. A splitting method of the plurality of CUs 710a and 710b, 730a and 730b, or 750a, 750b, 750c, and 750d may correspond to a splitting method of the first CU 700. Accordingly, each of the plurality of CUs 710a and 710b, 730a and 730b, or 750a, 750b, 750c, and 750d may be independently split into a plurality of CUs. Referring to FIG. 7, the image decoding device 100 may determine the second CUs 710a and 710b by splitting the first CU 700 in a vertical direction, and may determine to independently split or not to split each of the second CUs 710a and 710b

According to an embodiment, the image decoding device 100 may determine third CUs 720a and 720b by splitting the left second CU 710a in a horizontal direction, and may not split the right second CU 710b

According to an embodiment, a processing order of CUs may be determined based on a process of splitting a CU. In other words, the processing order of the split CUs may be determined based on a processing order of CUs immediately before being split. The image decoding device 100 may determine a processing order of the third CUs 720a and 720b determined by splitting the left second CU 710a, independently of the right second CU 710b. Because the third CUs 720a and 720b are determined by splitting the left second CU 710a in a horizontal direction, the third CUs 720a and 720b may be processed in a vertical direction order 720c. Because the left and right second CUs 710a and 710b are processed in the horizontal direction order 710c, the right second CU 710b may be processed after the third CUs 720a and 720b included in the left second CU 710a are processed in the vertical direction order 720c. Because the above description is for explaining a process of determining the processing order of CUs according to a CU before being split, it should not be interpreted only to the above-described embodiment, but should be interpreted that various methods may be used to independently process CUs, which are split and determined to various shapes, in a certain order.

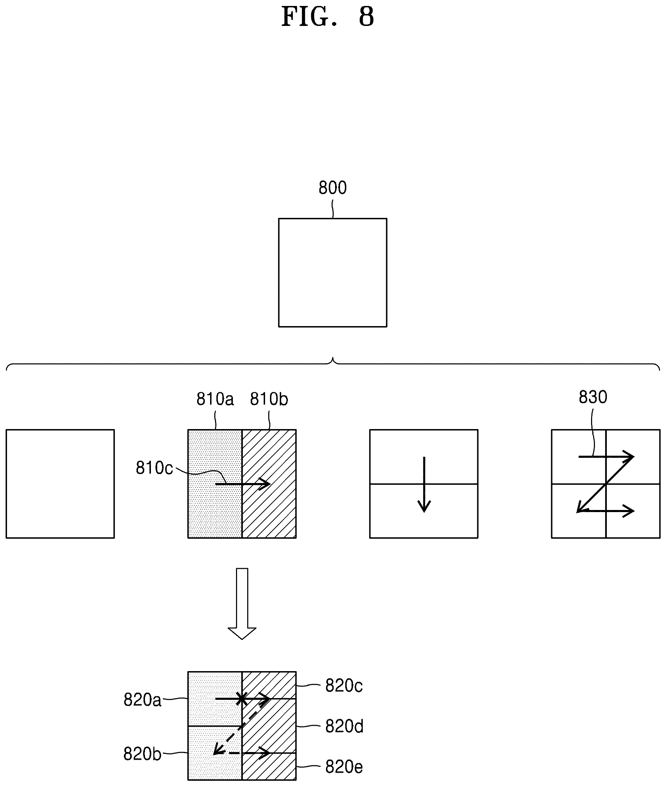

FIG. 8 illustrates a process in which the image decoding device 100 determines that a current CU is split into an odd number of CUs, when the CUs are not processable in a certain order, according to an embodiment.

According to an embodiment, the image decoding device 100 may determine that the current CU is to be split into an odd number of CUs, based on obtained split shape mode information. Referring to FIG. 8, a first CU 800 in a square shape may be split into second CUs 810a and 810b in a non-square shape, and the second CUs 810a and 810b may be independently split into third CUs 820a, 820b, 820c, 820d, and 820e. According to an embodiment, the image decoding device 100 may determine the plurality of third CUs 820a and 820b by splitting the left second CU 810a in a horizontal direction, and may split the right second CU 810b into the odd number of third CUs 820c, 820d, and 820e.

According to an embodiment, the image decoding device 100 may determine whether any CU is split into an odd number of CUs, by determining whether the third CUs 820a and 820b, and 820c, 820d, and 820e are processable in a certain order. Referring to FIG. 8, the image decoding device 100 may determine the third CUs 820a, 820b, 820c, 820d, and 820e by recursively splitting the first CU 800. The image decoding device 100 may determine whether the first CU 800, the second CUs 810a and 810b, or the third CUs 820a and 820b, and 820c, 820d, and 820e are split into an odd number of CUs, based on at least one of the block shape information and the split shape mode information. For example, a right CU from among the second CUs 810a and 810b may be split into an odd number of third CUs 820c, 820d, and 820e. A processing order of a plurality of CUs included in the first CU 800 may be a certain order (e.g., a Z-scan order 830), and the image decoding device 100 may determine whether the third CUs 820c, 820d, and 820e, which are determined by splitting the right second CU 810b into an odd number of CUs, satisfy a condition for processing in the certain order.

According to an embodiment, the image decoding device 100 may determine whether the third CUs 820a and 820b, and 820c, 820d, and 820e included in the first CU 800 satisfy the condition for processing in the certain order, and the condition relates to whether at least one of a width and height of the second CUs 810a and 810b is to be split in half along a boundary of the third CUs 820a and 820b, and 820c, 820d, and 820e. For example, the third CUs 820a and 820b determined by splitting the height of the second CU 810a on the left side in the non-square shape in half may satisfy the condition. Because the boundaries of the third CUs 820c, 820d, and 820e determined when the right second CU 810b is split into three CUs are unable to split the width or height of the right second CU 810b in half, it may be determined that the third CUs 820c, 820d, and 820e do not satisfy the condition. When the condition is not satisfied as described above, the image decoding device 100 may determine disconnection of a scan order, and based on a result of the decision, determine that the right second CU 810b is to be split into an odd number of CUs. According to an embodiment, when a CU is split into an odd number of CUs, the image decoding device 100 may set a certain limitation on a CU at a certain location from among the split CUs, and such limitation or a certain location has been described above through various embodiments, and thus detailed descriptions thereof will be omitted.

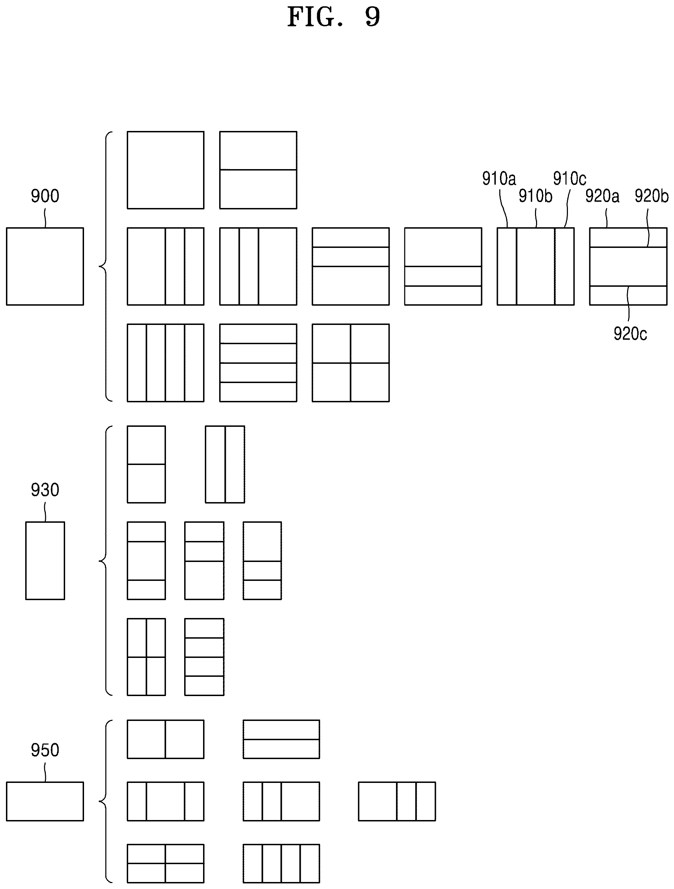

FIG. 9 illustrates a process in which the image decoding device 100 determines at least one CU by splitting a first CU 900, according to an embodiment.

According to an embodiment, the image decoding device 100 may split the first CU 900 based on split shape mode information obtained by the bitstream obtainer 110. The first CU 900 in a square shape may be split into four CUs in a square shape or split into a plurality of CUs in a non-square shape. For example, referring to FIG. 9, when the first CU 900 has a square shape and the split shape mode information indicates to split the first CU 900 into non-square CUs, the image decoding device 100 may split the first CU 900 into a plurality of non-square CUs. Specifically, when the split shape mode information indicates to determine an odd number of CUs by splitting the first CU 900 in a horizontal direction or a vertical direction, the image decoding device 100 may split the square first CU 900 into an odd number of CUs, e.g., second CUs 910a, 910b, and 910c determined by splitting the square first CU 900 in a vertical direction or second CUs 920a, 920b, and 920c determined by splitting the square first CU 900 in a horizontal direction.

According to an embodiment, the image decoding device 100 may determine whether the second CUs 910a, 910b, 910c, 920a, 920b, and 920c included in the first CU 900 satisfy a condition for processing in a certain order, and the condition relates to whether at least one of a width and height of the first CU 900 is to be split in half along a boundary of the second CUs 910a, 910b, 910c, 920a, 920b, and 920c. Referring to FIG. 9, because boundaries of the second CUs 910a, 910b, and 910c determined by splitting the square first CU 900 in a vertical direction do not split the width of the first CU 900 in half, it may be determined that the first CU 900 does not satisfy the condition for processing in the certain order. In addition, because boundaries of the second CUs 920a, 920b, and 920c determined by splitting the square first CU 900 in a horizontal direction do not split the height of the first CU 900 in half, it may be determined that the first CU 900 does not satisfy the condition for processing in the certain order. When the condition is not satisfied as described above, the image decoding device 100 may determine disconnection of a scan order, and based on a result of the determination, determine that the first CU 900 is to be split into an odd number of CUs. According to an embodiment, when a CU is split into an odd number of CUs, the image decoding device 100 may set a certain limitation on a CU at a certain location from among the split CUs, and such limitation or a certain location has been described above through various embodiments, and thus detailed descriptions thereof will be omitted.

According to an embodiment, the image decoding device 100 may determine various shapes of CUs by splitting the first CU.

Referring to FIG. 9, the image decoding device 100 may split the first CU 900 in a square shape and the first CU 930 or 950 in a non-square shape into various shapes of CUs.

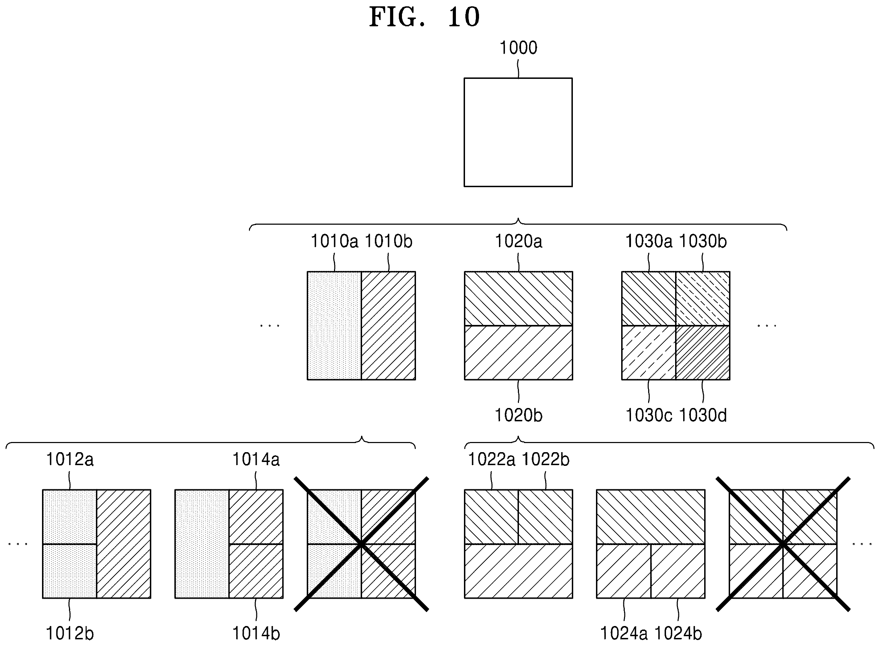

FIG. 10 illustrates that a shape into which a second CU is splittable is limited when the second CU in a non-square shape, which is determined when the image decoding device 100 splits a first CU 1000, satisfies a certain condition, according to an embodiment.

According to an embodiment, the image decoding device 100 may determine to split the first CU 1000 in a square shape into second CUs 1010a and 1010b, or 1020a and 1020b in a non-square shape based on split shape mode information obtained by the bitstream obtainer 110. The second CUs 1010a and 1010b, or 1020a and 1020b may be independently split. Accordingly, the image decoding device 100 may determine to split or not to split each of the second CUs 1010a and 1010b, or 1020a and 1020b into a plurality of CUs, based on the split shape mode information of each of the second CUs 1010a and 1010b, or 1020a and 1020b. According to an embodiment, the image decoding device 100 may determine the third CUs 1012a and 1012b by splitting the left second CU 1010a in the non-square shape determined by splitting the first CU 1000 in a vertical direction, in a horizontal direction. However, when the left second CU 1010a is split in the horizontal direction, the image decoding device 100 may restrict the right second CU 1010b not to be split in the horizontal direction in which the left second CU 1010a is split. When third CUs 1014a and 1014b are determined by splitting the right second CU 1010b in the same direction, because the left and right second CUs 1010a and 1010b are independently split in a horizontal direction, the third CUs 1012a, 1012b, 1014a, and 1014b may be determined. However, this case serves equally as a case in which the image decoding device 100 splits the first CU 1000 into four square second CUs 1030a, 1030b, 1030c, and 1030d, based on the split shape mode information, and may be inefficient in terms of image decoding

According to an embodiment, the image decoding device 100 may determine third CUs 1022a and 1022b, or 1024a and 1024b by splitting the non-square second CU 1020a or 1020b, which is determined by splitting the first CU 1000 in a horizontal direction, in a vertical direction. However, when a second CU (e.g., the upper second CU 1020a) is split in a vertical direction, for the above-described reason, the image decoding device 100 may limit the other second CU (e.g., the lower second CU 1020b) not to be split in a vertical direction in which the upper second CU 1020a is split

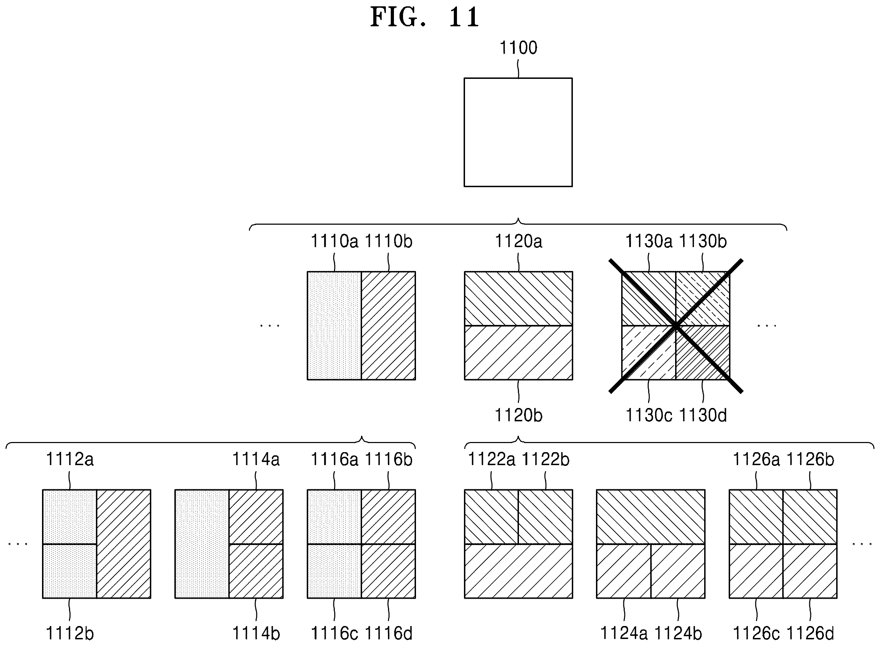

FIG. 11 illustrates a process in which the image decoding device 100 splits a CU in a square shape when split shape mode information indicates that the CU in the square shape is not to be split into four square CUs, according to an embodiment.

According to an embodiment, the image decoding device 100 may determine second CUs 1110a and 1110b, or 1120a and 1120b, etc. by splitting a first CU 1100, based on split shape mode information. The split shape mode information may include information about various shapes in which a CU may be split, but information for splitting the CU into four CUs in the square shape may not be included in the information about various shapes. According to the split shape mode information, the image decoding device 100 may not split the first CU 1100 in the square shape into four second CUs 1130a, 1130b, 1130c, and 1130d in the square shape. The image decoding device 100 may determine the second CUs 1110a, 1110b, 1120a, 1120b, etc. in a non-square shape based on the split shape mode information.

According to an embodiment, the image decoding device 100 may independently split the second CUs 1110a, 1110b, 1120a, 1120b, etc. in the non-square shape. Each of the second CUs 1110a and 1110b, or 1120a and 1120b, etc. may be recursively split in a certain order, which may be a method of splitting the first CU 1100 based on the split shape mode information.

For example, the image decoding device 100 may determine the third CUs 1112a and 1112b in the square shape by splitting the left second CU 1110a in a horizontal direction, and determine third CUs 1114a and 1114b in the square shape by splitting the right second CU 1110b in a horizontal direction. Furthermore, the image decoding device 100 may determine third CUs 1116a, 1116b, 1116c, and 1116d in the square shape by splitting both the left second CU 1110a and the right second CU 1110b in the horizontal direction. In this case, CUs in the same shape as the four second CUs 1130a, 1130b, 1130c, and 1130d in the square shape split from the first CU 1100 may be determined.

As another example, the image decoding device 100 may determine third CUs 1122a and 1122b in the square shape by splitting the upper second CU 1120a in a vertical direction, and determine third CUs 1124a and 1124b in the square shape by splitting the lower second CU 1120b in a vertical direction. Furthermore, the image decoding device 100 may determine third CUs 1126a, 1126b, 1126a, and 1126b in the square shape by splitting both the upper second CU 1120a and the lower second CU 1120b in the vertical direction. In this case, CUs in the same shape as the four second CUs 1130a, 1130b, 1130c, and 1130d in the square shape split from the first CU 1100 may be determined.

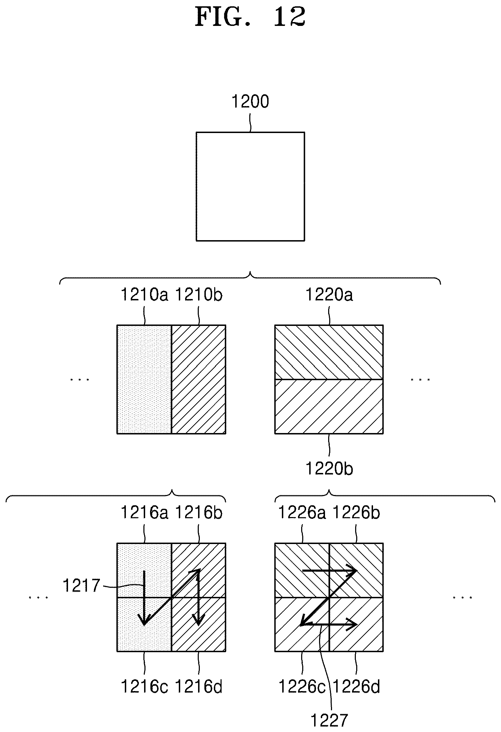

FIG. 12 illustrates that a processing order between a plurality of CUs may vary according to a process of splitting a CU, according to an embodiment

According to an embodiment, the image decoding device 100 may split a first CU 1200 based on split shape mode information. When a block shape indicates a square shape and the split shape mode information indicates to split the first CU 1200 in at least one of a horizontal direction and a vertical direction, the image decoding device 100 may determine second CUs (e.g., 1210a and 1210b, or 1220a and 1220b, etc.) by splitting the first CU 1200. Referring to FIG. 12, the second CUs 1210a and 1210b, or 1220a and 1220b in a non-square shape determined by splitting the first CU 1200 in only the horizontal direction or vertical direction may be independently split based on the split shape mode information of each CU. For example, the image decoding device 100 may determine third CUs 1216a, 1216b, 1216c, and 1216d by splitting the second CUs 1210a and 1210b generated by splitting the first CU 1200 in the vertical direction, in the horizontal direction, and determine third CUs 1226a, 1226b, 1226c, and 1226d by splitting the second CUs 1220a and 1220b generated by splitting the first CU 1200 in the horizontal direction, in the vertical direction. The process of splitting the second CUs 1210a, 1210b, 1220a, and 1220b has been described above with reference to FIG. 11, and thus a detailed description thereof will be omitted.

According to an embodiment, the image decoding device 100 may process CUs in a certain order. Features of the processing of CUs in a certain order have been described above with reference to FIG. 7, and thus a detailed description thereof will be omitted. Referring to FIG. 12, the image decoding device 100 may determine four third CUs 1216a, 1216b, 1216c, and 1216d, and 1226a, 1226b, 1226c, and 1226d in a square shape by splitting the first CU 1200 in a square shape. According to an embodiment, the image decoding device 100 may determine a processing order of the third CUs 1216a, 1216b, 1216c, 1216d, 1226a, 1226b, 1226c, and 1226d according to the shape in which the first CU 1200 is split.

According to an embodiment, the image decoding device 100 may determine the third CUs 1216a, 1216b, 1216c, and 1216d by splitting the second CUs 1210a and 1210b generated by splitting the first CU 1200 in a vertical direction, in the horizontal direction, and process the third CUs 1216a, 1216b, 1216c, and 1216d in a processing order 1217 for initially processing the third CUs 1216a and 1216c included in the left second CU 1210a in the vertical direction and then processing the third CU 1216b and 1216d included in the right second CU 1210b in the vertical direction.

According to an embodiment, the image decoding device 100 may determine the third CUs 1226a, 1226b, 1226c, and 1226d by splitting the second CUs 1220a and 1220b generated by splitting the first CU 1200 in the horizontal direction, in the vertical direction, and may process the third CUs 1226a, 1226b, 1226c, and 1226d in a processing order 1227 for initially processing the third CUs 1226a and 1226b included in the upper second CU 1220a in the horizontal direction and then processing the third CU 1226c and 1226d included in the lower second CU 1220b in the horizontal direction.

Referring to FIG. 12, the third CUs 1216a, 1216b, 1216c, and 1216d, and 1226a, 1226b, 1226c, and 1226d in a square shape may be determined by splitting the second CUs 1210a and 1210b, and 1220a and 1220b, respectively. The second CUs 1210a and 1210b determined by being split in the vertical direction and the second CUs 1220a and 1220b determined by being split in the horizontal direction are split into different shapes, but according to the third CUs 1216a, 1216b, 1216c, and 1216d, and 1226a, 1226b, 1226c, and 1226d determined later, the first CU 1200 is consequently split into CUs of the same shape. Accordingly, the image decoding device 100 may process a plurality of CUs determined in the same shape in different orders even when consequently determining the CUs of the same shape by recursively splitting the CUs through different processes based on the split shape mode information.

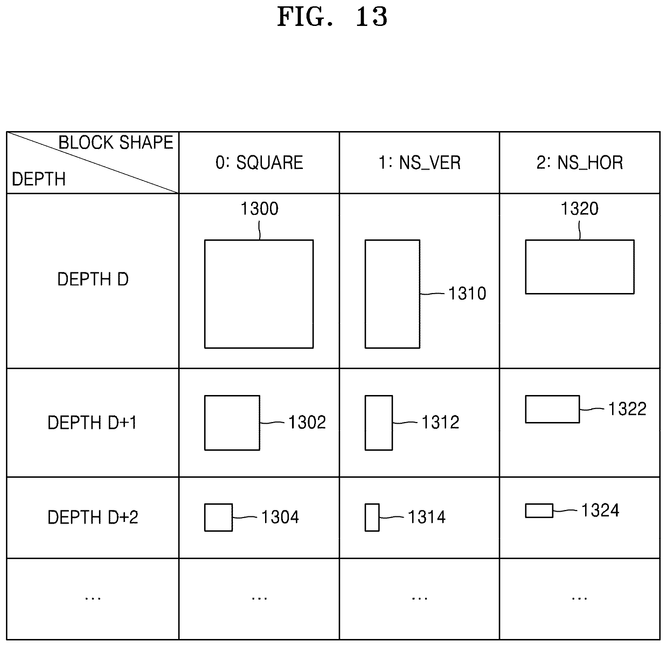

FIG. 13 illustrates a process of determining a depth of a CU according to changes in the shape and size of the CU when a plurality of CUs are determined by recursively splitting the CU according to an embodiment.

According to an embodiment, the image decoding device 100 may determine the depth of the CU according to a certain criterion. For example, the certain criterion may be the length of a long side of the CU. When the length of the long side of the current CU is split by 2n (n>0) times the length of the long side of the CU before being split, the image decoding device 100 may determine that the depth of the current CU is increased by n than the depth of the CU before being split. Hereinafter, a CU having an increased depth will be expressed as a CU of a lower depth.

Referring to FIG. 13, according to an embodiment, based on block shape information indicating a square shape (e.g., block shape information may indicate '0:SQUARE'), the image decoding device 100 may determine a second CU 1302 and a third CU 1304 of lower depths by splitting a first CU 1300 in the square shape. Assuming that the size of the first CU 1300 in the square shape is 2Nx2N, the second CU 1302 determined by splitting a width and height of the first CU 1300 by 1/2 times may have a size of NxN. Furthermore, the third CU 1304 determined by splitting a width and height of the second CU 1302 by 1/2 size may have a size of N/2xN/2. In this case, a width and height of the third CU 1304 correspond to 1/4 times a width and height of the first CU 1300. When a depth of the first CU 1300 is D, a depth of the second CU 1302 that is 1/2 times the width and height of the first CU 1300 may be D+1, and a depth of the third CU 1304 that is 1/4 times the width and height of the first CU 1300 may be D+2.

According to an embodiment, based on block shape information indicating a non-square shape (e.g., block shape information may indicate '1:NS_VER' indicating a non-square shape, a height of which is longer than a width or '2:NS_HOR' indicating a non-square shape, a width of which is longer than a height), the image decoding device 100 may determine the second CU 1312 or 1322 and the third CU 1314 or 1324, etc. of lower depths by splitting the first CU 1310 or 1320 in the non-square shape.

The image decoding device 100 may determine the second CU (e.g., 1302, 1312, 1322, etc.) by splitting at least one of the width or height of the first CU 1310 having a size of Nx2N. That is, the image decoding device 100 may determine the second CU 1302 having a size of N×N or the second CU 1322 having a size of N×N/2 by splitting the first CU 1310 in a horizontal direction, and determine the second CU 1312 having a size of N/2×N by splitting the first CU 1310 in the horizontal direction and a vertical direction.

According to an embodiment, the image decoding device 100 may determine the second CU (e.g., 1302, 1312, 1322, etc.) by splitting at least one of the width or height of the first CU 1320 having a size of 2N×N. That is, the image decoding device 100 may determine the second CU 1302 having a size of N×N or the second CU 1312 having a size of N/2×N by splitting the first CU 1320 in the vertical direction, and determine the second CU 1322 having a size of N×N/2 by splitting the first CU 1320 in the horizontal direction and the vertical direction.

According to an embodiment, the image decoding device 100 may determine the third CU (e.g., 1304, 1314, 1324, etc.) by splitting at least one of the width or height of the second CU 1302 having a size of N×N. That is, the image decoding device 100 may determine a third CU 1304 having a size of N/2xN/2, determine the third CU 1314 having a size of N/4xN/2, or determine a third CU 1324 having a size of N/2xN/4 by splitting the second CU 1302 in the vertical direction and the horizontal direction.

According to an embodiment, the image decoding device 100 may determine the third CU (e.g., 1304, 1314, 1324, etc.) by splitting at least one of the width or height of the second CU 1312 having a size of N/2×N. That is, the image decoding device 100 may determine the third CU 1304 having a size of N/2xN/2 or the third CU 1324 having a size of N/2xN/4 by splitting the second CU 1312 in the horizontal direction, or determine the third CU 1314 having a size of N/4xN/2 size by splitting the second CU 1312 in the vertical direction and the horizontal direction.

According to an embodiment, the image decoding device 100 may determine the third CU (e.g., 1304, 1314, 1324, etc.) by splitting at least one of the width or height of the second CU 1322 having a size of N×N/2. That is, the image decoding device 100 may determine the third CU 1304 having a size of N/2xN/2 or the third CU 1314 having a size of N/4xN/2 by splitting the second CU 1322 in the vertical direction or determine the third CU 1324 having a size of N/2xN/4 by splitting the second CU 1322 in the vertical direction and the horizontal direction.

According to an embodiment, the image decoding device 100 may split the CU (e.g., 1300, 1302, or 1304) in the square shape in the horizontal direction or the vertical direction. For example, the image decoding device 100 may determine the first CU 1310 having a size of 2N×2N by splitting the first CU 1300 having a size of 2N×2N in the vertical direction or determine the first CU 1320 having a size of 2N×N by splitting the first CU 1300 in the horizontal direction. According to an embodiment, when a depth is determined based on the length of the longest side of a CU, a depth of a CU determined by splitting the first CU 1300 having a size of 2N×2N in the horizontal or the vertical direction may be the same as the depth of the first CU 1300

According to an embodiment, the width and height of the third CU 1314 or 1324 may correspond to 1/4 times those of the first CU 1310 or 1320. When the depth of the first CU 1310 or 1320 is D, the depth of the second CU 1312 or 1322 that is 1/2 times the width and height of the first CU 1310 or 1320 may be D+1, and the depth of the third CU 1314 or 1324 that is 1/4 times the width and height of the first CU 1310 or 1320 may be D+2.

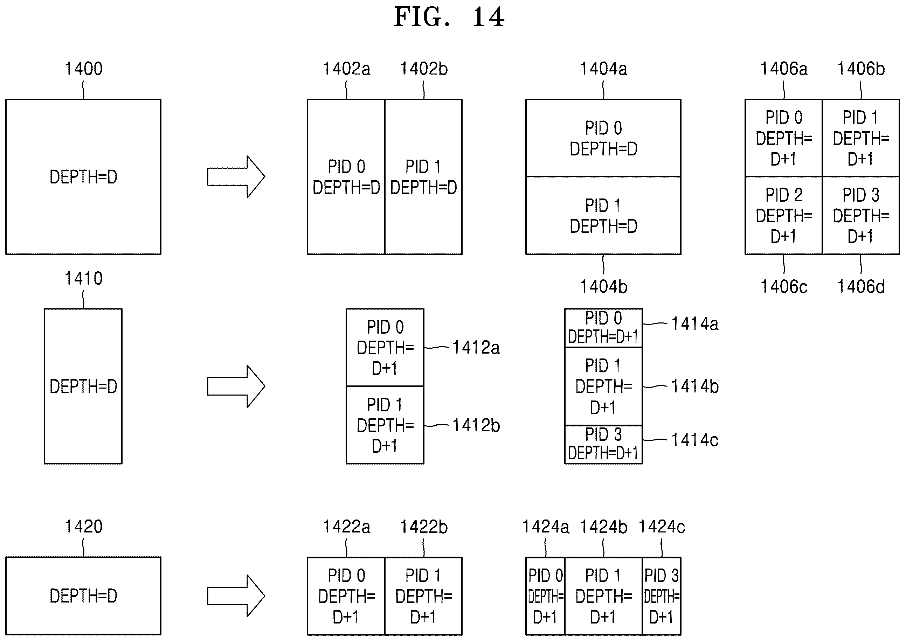

FIG. 14 illustrates depths that may be determined based on shapes and sizes of CUs, and part indexes (PIDs) for identifying the CUs according to an embodiment.

According to an embodiment, the image decoding device 100 may determine various types of second CUs by splitting a first CU 1400 in a square shape. Referring to FIG. 14, the image decoding device 100 may determine second CUs 1402a and 1402b, 1404a and 1404b, and 1406a, 1406b, 1406c, and 1406d by splitting the first CU 1400 in at least one of vertical direction and horizontal direction based on split shape mode information. That is, the image decoding device 100 may determine the second CUs 1402a and 1402b, 1404a and 1404b, and 1406a, 1406b, 1406c, and 1406d based on the split shape mode information of the first CU 1400.

According to an embodiment, depths of the second CUs 1402a and 1402b, 1404a and 1404b, and 1406a, 1406b, 1406c, and 1406d determined according to the split shape mode information of the first CU 1400 in the square shape may be determined based on the length of a long side. For example, because the length of one side of the first CU 1400 in the square shape is the same as the length of a long side of the second 1402a and 1402b, and 1404a and 1404b in a non-square shape, the depths of the first CU 1400 and the second CU 1402a and 1402b, and 1404a and 1404b in the non-square shape may have the same depth, e.g., D. In contrast, when the image decoding device 100 splits the first CU 1400 into four into the four square second CUs 1406a, 1406b, 1406c, and 1406d in the square shape based on the split shape mode information, because the length of one side of the second CUs 1406a, 1406b, 1406c, and 1406d in the square shape is 1/2 times the length of one side of the first CU 1400, a depth of the second CUs 1406a, 1406b, 1406c, and 1406d may be D+1 which is one depth lower than the depth D of the first CU 1400.

According to an embodiment, the image decoding device 100 may split the first CU 1410 having a height longer than a width in the horizontal direction according to the split shape mode information into a plurality of second CUs 1412a and 1412b, and 1414a, 1414b, and 1414c. According to an embodiment, the image decoding device 100 may split the first CU 1420 having a width longer than a height in the vertical direction according to the split shape mode information into a plurality of second CUs 1422a and 1422b, and 1424a, 1424b, and 1424c.

According to an embodiment, a depth of the second CUs 1412a and 1412b, and 1414a, 1414b, and 1414c, or 1422a and 1422b, and 1424a, 1424b, and 1424c determined according to the split shape mode information of the first CU 1410 or 1420 in the non-square shape based on the length of a long side thereof. For example, because the length of one side of the second CUs 1412a and 1412b in the square shape is 1/2 times the length of one side of the first CU 1410 in the non-square shape having a height longer than a width, a depth of the second CUs 1412a and 1412b in the square shape is D+1 which is one depth lower than the depth D of the first CU 1410 in the non-square shape.

Furthermore, the image decoding device 100 may split the first CU 1410 in the non-square shape into an odd number of second CUs 1414a, 1414b, and 1414c based on the split shape mode information. The odd number of second CUs 1414a, 1414b, and 1414c may include the second CUs 1414a and 1414c in the non-square shape and the second CU 1414b in the square shape. In this case, because the length of a long side of the second CUs 1414a and 1414c in the non-square shape and the length of one side of the second CU 1414b in the square shape are 1/2 times the length of one side of the first CU 1410, a depth of the second CUs 1414a, 1414b, and 1414c may be the depth D+1 which is one depth lower than the depth D of the first CU 1410. The image decoding device 100 may determine the depths of CUs related to the first CU 1420 in the non-square shape having the width longer than the height by using the above-described method of determining depths of CUs related to the first CU 1410.

According to an embodiment, the image decoding device 100 may determine PIDs for identifying split CUs, based on a size ratio between the CUs when an odd number of split CUs do not have the same size. Referring to FIG. 14, the CU 1414b at the center location among the odd number of split CUs 1414a, 1414b, and 1414c may have the same width as the other CUs 1414a and 1414c but be two times the heights of the other CUs 1414a and 1414c having different heights. That is, in this case, the CU 1414b at the center location may include two of the other CUs 1414a and 1414c. Therefore, when a PID of the CU 1414b at the center location is 1 according to a scan order, a PID of the CU 1414c located next to the CU 1414b may be 3 with an index increased by 2. That is, discontinuity of PID values may be present. According to an embodiment, the image decoding device 100 may determine whether an odd number of split CUs do not have the same size, based on whether discontinuity is present in PIDs for identifying the split CUs.

According to an embodiment, the image decoding device 100 may determine whether the current CU is split in a specific splitting shape, based on PID values for identifying a plurality of CUs determined by splitting the current CU. Referring to FIG. 14, the image decoding device 100 may determine an even number of CUs 1412a and 1412b or an odd number of CUs 1414a, 1414b, and 1414c by splitting the first CU 1410 in a rectangular shape having a height longer than a width. The image decoding device 100 may use PIDs indicating respective CUs so as to identify the plurality of CUs. According to an embodiment, the PID may be obtained from a sample (e.g., an upper left sample) at a certain location of each CU.

According to an embodiment, the image decoding device 100 may determine a CU at a certain location from among CUs determined by being split by using the PIDs for classifying the CUs. According to an embodiment, when split shape mode information of the first CU 1410 in the rectangular shape having a height longer than a width indicates that the first CU 1410 is split into three CUs, the image decoding device 100 may split the first CU 1410 into three CUs 1414a, 1414b, and 1414c. The image decoding device 100 may allocate a PID to each of the three CUs 1414a, 1414b, and 1414c. The image decoding device 100 may compare PIDs of an odd number of split CUs to determine a CU at the center location from among the CUs. The image decoding device 100 may determine the CU 1414b having a PID corresponding to a middle value among the PIDs of the CUs, as the CU at the center location from among the CUs determined by splitting the first CU 1410. According to an embodiment, the image decoding device 100 may determine PIDs for identifying split CUs based on a size ratio between the CUs when the split CUs are not of the same size. Referring to FIG. 14, the CU 1414b generated by splitting the first CU 1410 may have the same width as the other CUs 1414a and 1414c but be two times the heights of the CUs 1414a and 1414c having different heights. In this case, when the PID of the CU 1414b at the center location is 1, the CU 1414c located next to the CU 1414b may be 3 with an index increased by 2. When the PID is not uniformly increased as described above, the image decoding device 100 may determine that a CU is split into a plurality of CUs including a CU having a size different from that of the other CUs. According to an embodiment, when the split shape mode information indicates that a CU is split into an odd number of CUs, the image decoding device 100 may split the current CU in such a manner that a CU of a certain location among an odd number of CUs (e.g., a CU at the center location) has a size different from that of the other CUs. In this case, the image decoding device 100 may determine the CU at the center location while having different sizes by using PIDs of the CUs. However, because the above-described PIDs and the size or location of the CU at the certain location to be determined are specific to explain an embodiment, they should not be interpreted as being limited thereto and should be interpreted that various PIDs and various locations and sizes of CUs may be used.

According to an embodiment, the image decoding device 100 may use a certain data unit in which recursive split of the CU starts.

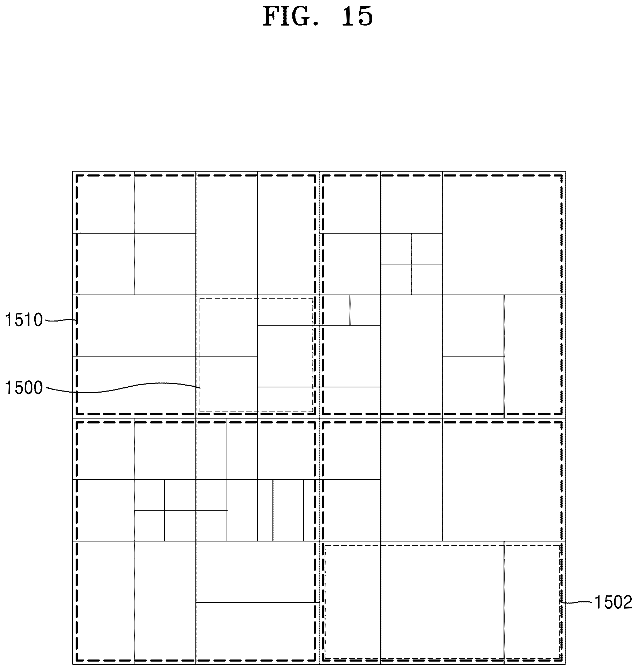

FIG. 15 illustrates that a plurality of CUs are determined according to a plurality of certain data units included in a picture, according to an embodiment.

According to an embodiment, a certain data unit may be defined as a data unit where recursive split of the CU starts by using split shape mode information. That is, the certain data unit may correspond to a CU of an uppermost depth, which is used to determine a plurality of CUs split from the current picture. Hereinafter, for convenience of explanation, the certain data unit is referred to as a reference data unit.

According to an embodiment, the reference data unit may have a certain size and a certain shape. According to an embodiment, the reference data unit may include samples of MxN. Here, M and N may be the same as each other or may be integers represented by powers of 2. That is, the reference data unit may indicate a square or non-square shape, and may then be split into an integer number of CUs.

According to an embodiment, the image decoding device 100 may split the current picture into a plurality of reference data units. According to an embodiment, the image decoding device 100 may split the plurality of reference data units for splitting the current picture by using the split shape mode information of each reference data unit. The split process of the reference data unit may correspond to a split process using a quad-tree structure.

According to an embodiment, the image decoding device 100 may pre-determine the minimum size allowed for the reference data units included in the current picture. Accordingly, the image decoding device 100 may determine reference data units having various sizes equal to or greater than the minimum size, and determine one or more CUs by using the split shape mode information with reference to the determined reference data unit.

Referring to FIG. 15, the image decoding device 100 may use a reference CU 1500 in a square shape or a reference CU 1502 in a non-square shape. According to an embodiment, the shape and size of reference CUs may be determined based on various data units that may include one or more reference CUs (e.g., sequences, pictures, slices, slice segments, tiles, tile groups, largest CTUs, etc.)

According to an embodiment, the bitstream obtainer 110 of the image decoding device 100 may obtain, from a bitstream, at least one of information about a shape of the reference CU and information about a size of the reference CU for each of the various data units. The process of determining one or more CUs included in the reference CU 1500 in the square shape has been described above through the process of splitting the current CU 300 of FIG. 3, and the process of determining one or more CUs included in the reference CU 1502 in the non-square shape has been described above through the process of splitting the current CU 400 or 450 of FIG. 4, and thus detailed descriptions thereof will be omitted.

According to an embodiment, the image decoding device 100 may use a PID for identifying the size and shape of reference CUs, to determine the size and shape of reference CUs according to some data units pre-determined based on a certain condition. In other words, the bitstream obtainer 110 may obtain, from the bitstream, only the PID for identifying the size and shape of reference CUs for each slice, slice segment, tile, tile group, largest CTU, etc., as a data unit satisfying a certain condition (e.g., a data unit having a size equal to or smaller than a slice) among the various data units (e.g., a sequence, a picture, a slice, a slice segment, a tile, a tile group, a largest CTU, etc.) The image decoding device 100 may determine the size and shape of the reference data units for each data unit satisfying the certain condition by using the PID. When the reference CU shape information and the reference CU size information are obtained and used from the bitstream according to each data unit having a relatively small size, the efficiency of using the bitstream may not be high, and therefore, only the PID may be obtained and used instead of directly obtaining the reference CU shape information and the reference CU size information. In this case, at least one of the size and shape of reference CUs corresponding to the PID for identifying the size and shape of reference CUs may be predetermined. That is, the image decoding device 100 may determine at least one of the size and shape of reference CUs included in a data unit as a unit for obtaining the PID, by selecting the pre-determined at least one of the size and shape of reference CUs based on the PID.

According to an embodiment, the image decoding device 100 may use one or more reference CUs included in one largest CTU. That is, one or more reference CUs may be included in the largest CTU for splitting an image, and the CUs may be determined through a recursive split process of each reference CU. According to an embodiment, at least one of a width and height of the largest CTU may correspond to integer times at least one of the width and height of the reference CUs. According to an embodiment, the size of the reference CUs may be obtained by splitting the largest CTU n times according to a quad-tree structure. That is, the image decoding device 100 may determine the reference CUs by splitting the largest CTU n times according to the quad-tree structure, and split the reference CU based on at least one of block shape information and split shape mode information according to various embodiments.

According to an embodiment, the image decoding device 100 may obtain, from the bitstream, block shape information indicating the shape of the current CU or split shape mode information indicating a method of splitting the current CU and use the obtained information. The split shape mode information may be included in the bitstream related to various data units. For example, the image decoding device 100 may use the split shape mode information included in a sequence parameter set, a picture parameter set, a video parameter set, a slice header, a slice segment header, a tile header, or a tile group header. Furthermore, the image decoding device 100 may obtain, from the bitstream, a syntax element corresponding to block shape information or split shape mode information for each largest CTU and reference CU and use the obtained syntax element.

Hereinafter, a method of determining a split rule according to an embodiment of the present disclosure will be described in detail.

The image decoding device 100 may determine a split rule of an image. The split rule may be pre-determined between the image decoding device 100 and the image encoding device 200. The image decoding device 100 may determine the split rule of the image based on information obtained from a bitstream. The image decoding device 100 may determine the split rule based on the information obtained from at least one of a sequence parameter set, a picture parameter set, a video parameter set, a slice header, a slice segment header, a tile header, or a tile group header. The image decoding device 100 may determine the split rule differently according to a frame, a slice, a tile, a temporal layer, a largest CTU, or a CU.

The image decoding device 100 may determine the split rule based on a block shape of a CU. The block shape may include a size, a shape, a ratio of width and height, and a direction of the CU. The image encoding device 200 and the image decoding device 100 may pre-determine to determine the split rule based on the block shape of the CU. However, an embodiment is not limited thereto. The image decoding device 100 may determine the split rule based on the information obtained from the bitstream received from the image encoding device 200.

The shape of the CU may include a square and a non-square. When lengths of the width and the height of the CU are the same, the image decoding device 100 may determine the shape of the CU to be a square. In addition, when lengths of the width and height of the CU are not the same, the image decoding device 100 may determine the shape of the CU to be a non-square.

The size of the CU may include various sizes of 4x4, 8x4, 4x8, 8x8, 16x4, 16x8, ..., 256x256. The size of the CU may be classified according to the length of a long side, the length or the width of a short side of the CU. The image decoding device 100 may apply the same split rule to CUs classified into the same group. For example, the image decoding device 100 may classify CUs having the same length of the long side into the same size. In addition, the image decoding device 100 may apply the same split rule to CUs having the same length of the long side.

The ratio of the width and the height of the CU may include 1:2, 2:1, 1:4, 4:1, 1:8, 8:1, 1:16, 16:1, 32:1 or 1:32. In addition, the direction of the CU may include a horizontal direction and a vertical direction. The horizontal direction may indicate a case where the length of the width of the CU is longer than the length of the height thereof. The vertical direction may indicate a case where the length of the width of the CU is shorter than the length of the height thereof.

The image decoding device 100 may adaptively determine the split rule based on the size of the CU. The image decoding device 100 may differently determine an allowable split shape mode based on the size of the CU. For example, the image decoding device 100 may determine whether splitting is allowed based on the size of the CU. The image decoding device 100 may determine a split direction based on the size of the CU. The image decoding device 100 may determine an allowable split shape according to the size of the CU.

The split rule determined based on the size of the CU may be a split rule predetermined between the image encoding device 200 and the image decoding device 100. In addition, the image decoding device 100 may determine the split rule based on the information obtained from the bitstream.

The image decoding device 100 may adaptively determine the split rule based on a location of the CU. The image decoding device 100 may adaptively determine the split rule based on the location of the CU in the image.

In addition, the image decoding device 100 may determine the split rule so that CUs generated through different splitting paths do not have the same block shape. However, an embodiment is not limited thereto, and the CUs generated through different splitting paths may have the same block shape. The CUs generated through different splitting paths may have different decoding processing orders. The decoding processing orders have been described with reference to FIG. 12, and thus detailed descriptions thereof will be omitted.

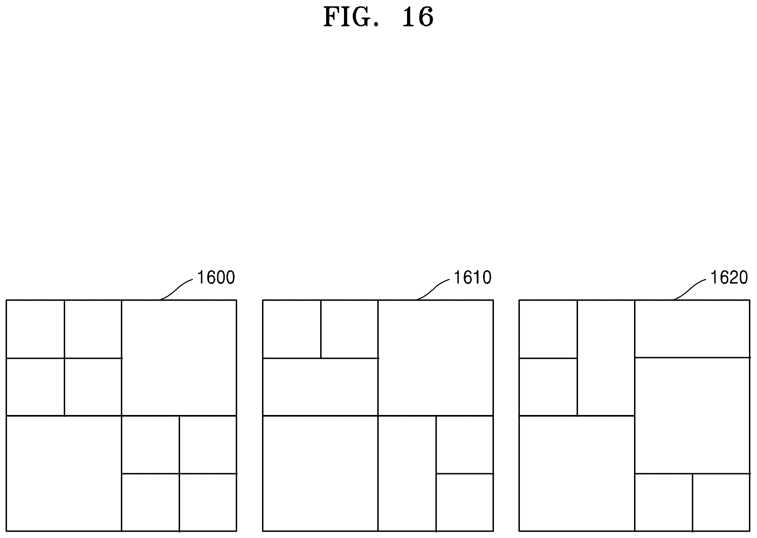

FIG. 16 illustrates CUs that may be determined for each picture when combinations of shapes in which the CUs may be split are different for each picture, according to an embodiment.

Referring to FIG. 16, the image decoding device 100 may differently determine combinations of split shapes in which CUs may be split for each picture. For example, the image decoding device 100 may decode an image by using a picture 1600 that may be split into four CUs among one or more pictures included in the image, a picture 1610 that may be split into two or four CUs, and a picture 1620 that may be split into two, three, or four CUs. In order to split the picture 1600 into a plurality of CUs, the image decoding device 100 may use only split shape information indicating that the picture 1600 is split into four square CUs. In order to split the picture 1610, the image decoding device 100 may use only split shape information indicating that the picture 1610 is split into two or four CUs. In order to split the picture 1620, the image decoding device 100 may use only split shape information indicating that the picture 1620 is split into two, three, or four CUs. Because the split shape combinations described above are only an embodiment for explaining the operation of the image decoding device 100, the split shape combinations described above should not be interpreted as being limited to only the above embodiment, and it should be interpreted that various split shape combinations may be used for each certain data unit.

According to an embodiment, the bitstream obtainer 110 of the image decoding device 100 may obtain a bitstream including an index indicating a combination of split shape information for each certain data unit (e.g., a sequence, a picture, a slice, a slice segment, a tile or a tile group). For example, the bitstream obtainer 110 may obtain the index indicating the combination of split shape information from a sequence parameter set, a picture parameter set, a slice header, a tile header, or a tile group header. The image decoding device 100 may determine the combinations of split shapes in which the CU may be split for each certain data unit by using the obtained index, thereby using different combinations of split shapes for each certain data unit.

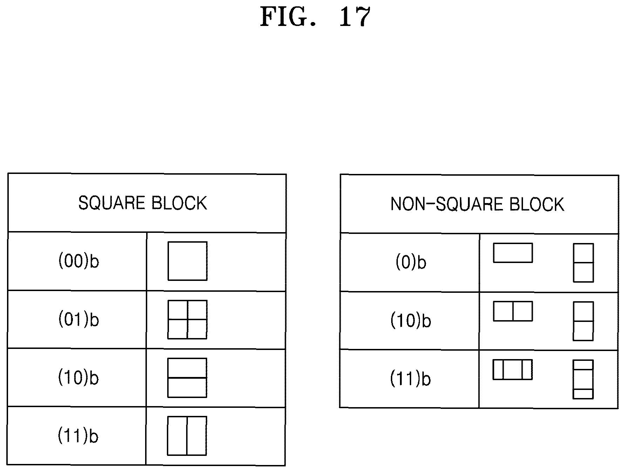

FIG. 17 illustrates various shapes of CUs that may be determined based on split shape mode information expressed in binary codes according to an embodiment.

According to an embodiment, the image decoding device 100 may split a CU into various shapes by using block shape information and split shape mode information obtained through the bitstream obtainer 110. The shapes of the CU that may be split may correspond to various shapes including the shapes described through the embodiments described above.

Referring to FIG. 17, the image decoding device 100 may split a CU in a square shape into at least one of a horizontal direction or a vertical direction based on split shape mode information, and split a CU in a non-square shape in the horizontal or the vertical direction.

According to an embodiment, when the image decoding device 100 may split the CU in the square shape into four square CUs in the horizontal or the vertical direction, four split shapes may be represented by split shape mode information of the square CUs. According to an embodiment, the split shape mode information may be expressed in a two-digit binary code, and a binary code may be assigned to each split shape. For example, when the CU is not split, split shape mode information may be expressed as (00)b, when the CU is split in the horizontal direction and the vertical direction, split shape mode information may be expressed as (01)b, when the CU is split in the horizontal direction, split shape mode information may be expressed as (10)b, and when the CU is split in the vertical direction, split shape mode information may be expressed as (11)b.

According to an embodiment, when the image decoding device 100 splits the CU in the non-square shape in the horizontal direction or the vertical direction, the type of split shape that may be represented by the split shape mode information may be determined according to the number of CUs that are split. Referring to FIG. 17, the image decoding device 100 may split the CU in the non-square shape into up to three CUs, according to an embodiment. The image decoding device 100 may split the CU in the non-square shape into two CUs, and in this case, the split shape mode information may be expressed as (10)b. The image decoding device 100 may split the CU in the non-square shape into three CUs, and in this case, the split shape mode information may be expressed as (11)b. The image decoding device 100 may determine that the CU in the non-square shape is not split, and in this case, the split shape mode information may be expressed as (0)b. In other words, the image decoding device 100 may use variable length coding (VLC) rather than fixed length coding (FLC) to use binary codes representing split shape mode information.

According to an embodiment, referring to FIG. 17, a binary code of split shape mode information indicating that a CU is not split may be expressed as (0)b. When the binary code of split shape mode information indicating that the CU is not split is set to (00)b, all 2-bit binary codes of split shape mode information need to be used even though there is no split shape mode information set to (01)b. However, as shown in FIG. 17, when using three split shapes of the CU in the non-square shape, the image decoding device 100 may determine that the CU is not split even when the 1-bit binary code of (0)b is used as the split mode information, and thus a bitstream may be used efficiently. However, the split shape of the CU in the non-square shape represented by the split shape mode information should not be interpreted as being limited to only the three shapes shown in FIG. 17, but should be interpreted as various shapes including the embodiments described above.

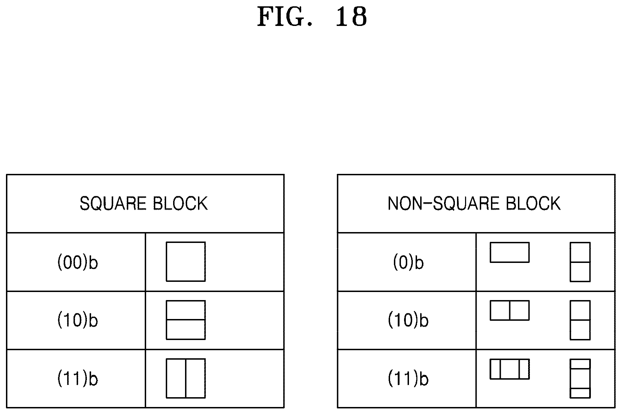

FIG. 18 illustrates another shape of a CU that may be determined based on split shape mode information expressed in a binary code according to an embodiment.

Referring to FIG. 18, the image decoding device 100 may split a CU in a square shape in a horizontal or a vertical direction based on split shape mode information, and split a CU in a non-square shape in the horizontal or the vertical direction. That is, the split shape mode information may indicate that the CU in the square shape is split in one direction. In this case, a binary code of split shape mode information indicating that the CU in the square shape is not split may be expressed as (0)b. When the binary code of the split shape mode information indicating that the CU is not split is set to (00)b, all 2-bit binary codes of split shape mode information need to be used even though there is no split shape mode information set to (01)b. However, as shown in FIG. 18, when using three split shapes of the CU in the square shape, the image decoding device 100 may determine that the CU is not split even when the 1-bit binary code of (0)b is used as the split mode information, and thus a bitstream may be used efficiently. However, the split shape of the CU in the square shape represented by the split shape mode information should not be interpreted as being limited to only the three shapes shown in FIG. 18, but should be interpreted as various shapes including the embodiments described above.

According to an embodiment, block shape information or split shape mode information may be expressed in a binary code, and such information may be directly generated as a bitstream. In addition, the block shape information or the split shape mode information that may be expressed in the binary code may be used as a binary code input from context adaptive binary coding (CABAC) without being generated directly as a bitstream.

According to an embodiment, a process in which the image decoding device 100 obtains syntax of block shape information or split shape mode information through CABAC will be described. A bitstream including a binary code with respect to the syntax may be obtained through the bitstream obtainer 110. The image decoding device 100 may detect a syntax element indicating block shape information or split shape mode information by inversely binarizing a bin string included in the obtained bitstream. According to an embodiment, the image decoding device 100 may obtain a set of binary bin strings corresponding to a syntax element to be decoded, and decode each bin by using probability information, and repeat the decoding until a bin string including the decoded bins becomes the same as one of previously obtained bin strings. The image decoding device 100 may determine a syntax element by perform inverse binarization of the bin string.

According to an embodiment, the image decoding device 100 may determine a syntax with respect to the bin string by performing a decoding process of adaptive binary arithmetic coding, and update a probability model with respect to the bins obtained through the bitstream obtainer 110. Referring to FIG. 17, the bitstream obtainer 110 of the image decoding device 100 may obtain a bitstream indicating a binary code indicating split shape mode information according to an embodiment. The image decoding device 100 may determine a syntax with respect to the split shape mode information by using the obtained binary code having a size of 1 bit or 2 bits. The image decoding device 100 may update a probability of each bit in a 2-bit binary code in order to determine the syntax with respect to the split shape mode information. That is, the image decoding device 100 may update the probability of having a value of 0 or 1 when decoding the next bin, according to whether a value of a first bin in the 2-bit binary code is 0 or 1.

According to an embodiment, the image decoding device 100 may update the probability of the bins used in the process of decoding bins of the bin string with respect to the syntax, and determine to have the same probability without updating the probability in a specific bit in the bin string.

Referring to FIG. 17, in the process of determining a syntax by using a bin string indicating split shape mode information of the CU in the non-square shape, the image decoding device 100 may determine a syntax with respect to the split shape mode information by using one bin having a value of 0 when not splitting the CU in the non-square shape. That is, when the block shape information indicates that the current CU is in the non-square shape, the first bin in the bin string with respect to the split shape mode information may be 0 when the CU in the non-square shape is not split, and 1 when the CU in the non-square shape is split into two or three CUs. Accordingly, the probability that the first bin in the bin string of the split shape mode information of the CU in the non-square shape is 0 may be 1/3, and the probability that the first bin is 1 may be 2/3. As described above, the split shape mode information indicating that the CU in the non-square shape is not split may express only a 1-bit bin string having a value of 0, and thus the image decoding device 100 may determine the syntax with respect to the split shape mode information by determining whether a second bin is 0 or 1 only when the first bin of the split shape mode information is 1. According to an embodiment, when the first bin with respect to the split shape mode information is 1, the image decoding device 100 may decode the bin by considering that the probability of the second bin being 0 or 1 is the same as each other.

According to an embodiment, the image decoding device 100 may use various probabilities with respect to each bin in the process of determining the bin of the bin string with respect to the split shape mode information. According to an embodiment, the image decoding device 100 may differently determine the probability of bin with respect to the split shape mode information according to a direction of a non-square block. According to an embodiment, the image decoding device 100 may differently determine the probability of bin with respect to the split shape mode information according to length of a width or a long side of the current CU. According to an embodiment, the image decoding device 100 may differently determine the probability of bin with respect to the split shape mode information according to at least one of the shape of the current CU or the length of the long side thereof.

According to an embodiment, the image decoding device 100 may determine that the probability of bin with respect to the split shape mode information with respect to CUs having a certain size or more is the same. For example, with respect to CUs having a size of 64 samples or more based on the length of the long side of the CU, the image decoding device 100 may determine that the probability of bin with respect to the split shape mode information is the same.

According to an embodiment, the image decoding device 100 may determine an initial probability of bins constituting the bin string of the split shape mode information based on a slice type (e.g., an I slice, a P slice, or a B slice).

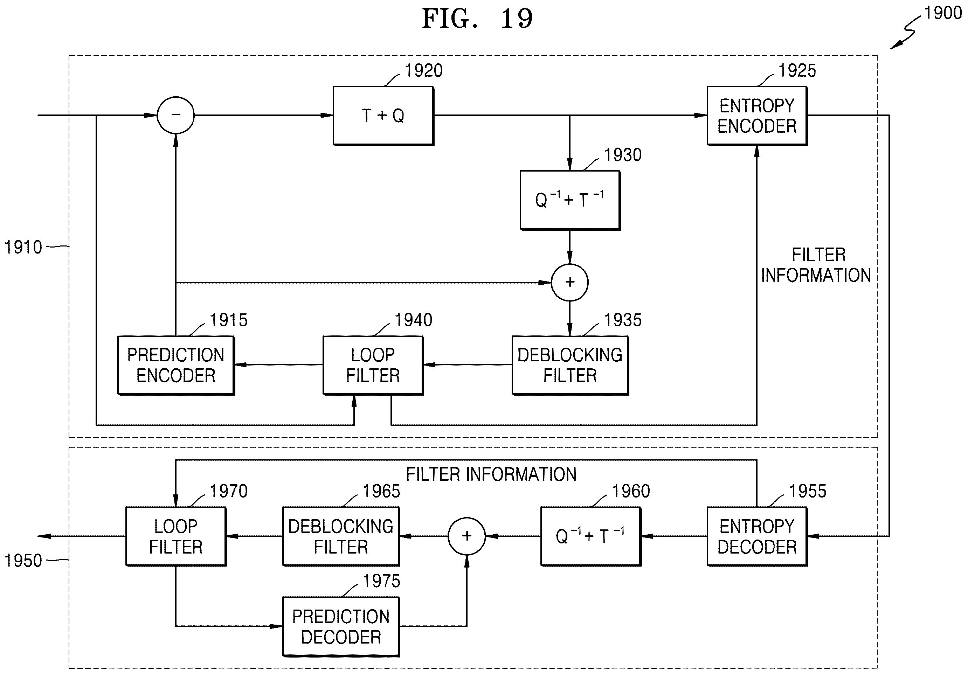

FIG. 19 is a block diagram of an image encoding and decoding system that performs loop filtering according to an embodiment.

An encoding end 1910 of the image encoding and decoding system 1900 transmits encoded bitstream of an image, and a decoding end 1950 receives a bitstream and decode the bitstream to output a reconstructed image. Here, the encoding end 1910 may be a configuration that is similar to the image encoding device 200 to be described below, and the decoding end 1950 may be a configuration that is similar to the image decoding device 100.

In the encoding end 1910, a prediction encoder 1915 outputs prediction data through inter prediction and intra prediction, and a transformer and quantizer 1920 outputs a quantized transformation coefficient of residual data between the prediction data and the current input image. An entropy encoder 1925 encodes the quantized transform coefficient and outputs the encoded quantized transform coefficient as the bitstream. The quantized transform coefficient is reconstructed into data of a spatial domain via an inverse quantizer and inverse transformer 1930, and the reconstructed data of the spatial domain may be output as a reconstructed image via a deblocking filter 1935 and a loop filter 1940. The reconstructed image may be used as a reference image of a next input image in the prediction encoder 1915.

Encoded image data among the bitstream received by the decoding end 1950 is reconstructed as residual data of a spatial domain via an entropy decoder 1955 and an inverse quantizer and inverse transformer 1960. Image data of a spatial domain may be configured when prediction data output by a prediction decoder 1975 and the residual data are combined, and a deblocking filter 1965 and a loop filter 1970 may output a reconstructed image for a current original image by performing filtering on the image data of the spatial domain. The reconstructed image may be used as a reference image for a next original image by the prediction decoder 1975.

The loop filter 1940 of the encoding end 1910 performs loop filtering by using filter information input according to a user input or system settings. Filter information used by the loop filter 1940 is output to the entropy encoder 1910 and transmitted to the decoding end 1950 along with the encoded image data. The loop filter 1970 of the decoding end 1950 may perform loop filtering based on the filter information input from the decoding end 1950.

Various embodiments described above describe operations related to an image decoding method performed by the image decoding device 100. Hereinafter, operations of the image encoding device 200 performing an image encoding method corresponding to the reverse order process of the image decoding method will be described through various embodiments.

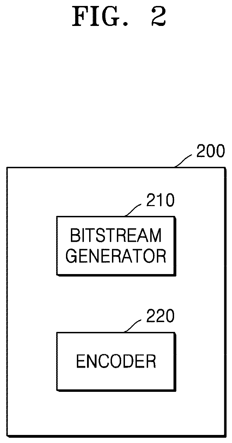

FIG. 2 is a block diagram of the image encoding device 200 capable of encoding an image based on at least one of block shape information or split shape mode information according to an embodiment.

The image encoding device 200 may include an encoder 220 and a bitstream generator 210. The encoder 220 may receive an input image and encode the input image. The encoder 220 may encode the input image and obtain at least one syntax element. The syntax element may include at least one of skip flag, prediction mode, motion vector difference, motion vector prediction method (or index), transform quantized coefficient, coded block pattern, coded block flag, intra prediction mode, direct flag, merge flag, delta QP, reference index, prediction direction, or transform index. The encoder 220 may determine a context model based on block shape information including at least one of a shape, a direction, a ratio of width and height or the size of a CU.

The bitstream generator 210 may generate a bitstream based on the encoded input image. For example, the bitstream generator 210 may generate a bitstream by entropy encoding the syntax element based on the context model. In addition, the image encoding device 200 may transmit the bitstream to the image decoding device 100.

According to an embodiment, the encoder 220 of the image encoding device 200 may determine the shape of the CU. For example, the CU may have a square or non-square shape, and information representing the shape may be included in the block shape information.

According to an embodiment, the encoder 220 may determine a split shape of the CU. The encoder 220 may determine the shape of at least one CU included in the CU, and the bitstream generator 210 may generate a bitstream including split shape mode information including information about the shape of the CU.

According to an embodiment, the encoder 220 may determine whether the CU is split or not. When the encoder 220 determines that only one CU is included in the CU or that the CU is not split, the bitstream generator 210 may generate a bitstream including split shape mode information indicating that the CU is not split. In addition, the encoder 220 may split the CU into a plurality of CUs included in the CU, and the bitstream generator 210 may generate a bitstream including split shape mode information indicating that the CU is split into the plurality of CUs.

According to an embodiment, information indicating the number of CUs the CU is split or a direction in which the CU is split may be included in the split shape mode information. For example, the split shape mode information may indicate to split or not to split the CU in at least one of a vertical direction or a horizontal direction.

The image encoding device 200 determines information about the split shape mode based on a split shape mode of the CU. The image encoding device 200 determines a context model based on at least one of a shape, a direction, a ratio of width and height or the size of the CU. In addition, the image encoding device 200 generates information about the split shape mode for splitting the CU as a bitstream based on the context model.

In order to determine the context model, the image encoding device 200 may obtain an arrangement for allowing at least one of a shape, a direction, a ratio of width and height or the size of the CU to correspond to an index of the context model. The image encoding device 200 may obtain the index of the context model based on at least one of a shape, a direction, a ratio of width and height or the size of the CU from the arrangement. The image encoding device 200 may determine the context model based on the index of the context model.

In order to determine the context model, the image encoding device 200 may determine the context model based on further block shape information including at least one of a shape, a direction, a ratio of width and height or the size of the CU. In addition, a neighboring CU may include at least one of CUs located in the lower left, left, upper left, upper right, right, or lower right sides of the CU.

In addition, in order to determine the context model, the image encoding device 200 may compare the length of a width of an upper neighboring CU and the length of a width of the CU. In addition, the image encoding device 200 may compare the lengths of heights of left and right neighboring CUs with the lengths of a height of the CU. In addition, the image encoding device 200 may determine the context model based on the comparison results.

The operations of the image encoding device 200 include descriptions similar to the operations of the image decoding device 100 described with reference to FIGS. 3 to 19, and thus detailed descriptions thereof will be omitted.

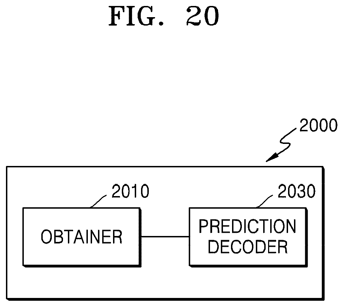

FIG. 20 is a block diagram illustrating a configuration of the image decoding device 2000 according to an embodiment.

Referring to FIG. 20, the image decoding device 2000 may include an obtainer 2010 and a prediction decoder 2030.

The obtainer 2010 and the prediction decoder 2030 according to an embodiment may be implemented as at least one processor. In an embodiment, the obtainer 2010 and the prediction decoder 2030 may operate according to an instruction stored in memory.

The image decoding device 2000 may include the memory that stores input/output data of the obtainer 2010 and the prediction decoder 2030. In addition, the image decoding device 2000 may include memory control unit that controls data input/output of memory.

In an embodiment, the obtainer 2010 may correspond to the entropy decoder 1955 shown in FIG. 19, and the prediction decoder 2030 may correspond to the prediction decoder 1975 shown in FIG. 19.

The obtainer 2010 may obtain a bitstream generated as a result of encoding a picture. The bitstream may include an encoding result with respect to the current block.

In an embodiment, the obtainer 2010 may receive the bitstream from an image encoding device over a network.

In an embodiment, the obtainer 2010 may obtain a bitstream from a data storage medium including a magnetic medium such as a hard disk, a floppy disk and a magnetic tape, an optical recording medium such as CD-ROM and DVD, a magneto-optical medium such as a floptical disk, etc.

The obtainer 2010 may obtain syntax elements for decoding a picture from a bitstream. Values corresponding to syntax elements may be included in a bitstream according to a hierarchical structure of a picture.

The obtainer 2010 may obtain syntax elements by entropy decoding bins included in the bitstream.

In an embodiment, the bitstream may include information about a prediction mode of the current block in the current picture. The current block may be a largest CTU, a CU, a transformation unit, or a prediction unit split from the current picture to be decoded.

In an embodiment, a prediction mode of the current block may be an intra mode or an inter mode.

The prediction decoder 2030 may reconstruct the current block by performing intra prediction or inter prediction on the current block according to the prediction mode of the current block.

In an embodiment, when the prediction mode of the current block is an intra mode, the obtainer 2010 may obtain information indicating an intra prediction mode of the current block from the bitstream.

In an embodiment, when the prediction mode of the current block is the intra mode, the obtainer 2010 may obtain, from the bitstream, information indicating whether a temporal reference sample or a spatial reference sample to be described below is used for intra prediction of the current block.

When the temporal reference sample is used for intra prediction, the obtainer 2010 may obtain information indicating an index of a previous picture including the temporal reference sample from the bitstream. In an embodiment, the previous picture may mean a picture reconstructed before the current picture.

In the intra mode, assuming that there will be continuity between neighboring samples of the current block and samples in the current block, a prediction block of the current block may be generated based on the neighboring samples of the current block according to the intra prediction mode.

In an inter mode, assuming that there will be similarities between the current block in the current picture and a block in the previous picture, the prediction block of the current block may be generated based on the block in the previous picture.

When the prediction mode of the current block is the intra mode, the prediction decoder 2030 according to an embodiment may use not only the neighboring samples of the current block included in the current picture but also the spatial reference sample included in the current picture or the temporal reference sample included in the previous picture for intra prediction.

When samples of the current block are predicted using samples directly adjacent to the current block as well as samples far from the current block, the size of the residual data may be reduced.

For example, even when there is continuity between the samples of the current block and the lower right neighboring samples of the current block, the lower right neighboring samples of the current block have not been reconstructed according to a raster scan method and therefore may not be used for intra prediction of the current block. However, when samples corresponding to the lower right samples of the current block among samples reconstructed before the current block are used for intra prediction, the continuity between the samples of the current block and the lower right samples of the current block may be considered, which may increase the efficiency of prediction.

A method of performing intra prediction on the current block by using a spatial reference sample or a temporal reference sample will be described below.

When the prediction block corresponding to the current block is generated, the prediction decoder 2030 may generate the reconstructed current block by using the prediction block.

In an embodiment, the prediction decoder 2030 may determine the prediction block as the reconstructed current block.

In an embodiment, the prediction decoder 2030 may generate the reconstructed current block by combining residual data obtained from the bitstream by the obtainer 2010 with the prediction block.

The reconstructed current block may be used as a reference block for the next block.

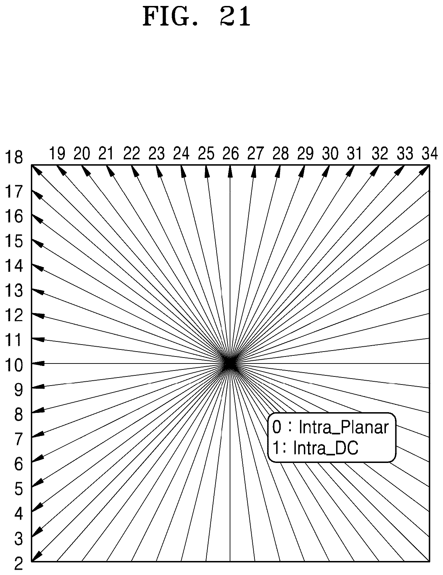

Hereinafter, intra prediction performed by the prediction decoder 2030 will be described with reference to FIGS. 21 to 32.

FIG. 21 is a diagram illustrating types of intra prediction modes according to an embodiment.

An intra prediction mode of the current block may be determined to perform intra prediction on the current block.

In an embodiment, when the prediction mode of the current block is an intra mode, the obtainer 2010 may obtain information indicating an intra prediction mode of the current block from a bitstream.

The intra prediction mode of the current block may be any one of a plurality of intra prediction modes.

In an embodiment, the plurality of intra prediction modes may include directional intra prediction modes and non-directional intra prediction modes.

Referring to FIG. 21, in an embodiment, the plurality of intra prediction modes may include a 0 numbered non-directional Intra_Planar mode, a 1 numbered non-directional Intra_DC mode, and 2 to 34 numbered directional Intra_Angular modes.

In the Intra_Angular modes, locations of reference samples for generating prediction samples of samples in the current block may be identified based on directions or angles indicated by the Intra_Angular modes. For example, in an 18 numbered mode, reference samples located in a direction of -32 degrees may be identified with respect to the samples in the current block.

The intra prediction modes illustrated in FIG. 21 are examples, and the number and types of intra prediction modes available in the intra mode according to an embodiment may be set in various ways.

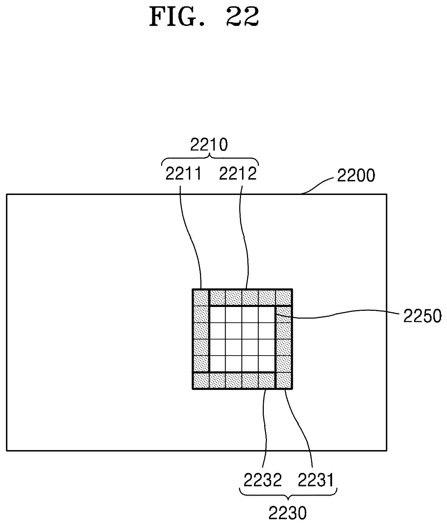

FIG. 22 is a diagram for explaining neighboring samples that may be used for intra prediction on a current block according to an embodiment.

In an embodiment, the prediction decoder 2030 may identify a first neighboring sample set 2210 adjacent to a current block 2250 to perform intra prediction on the current block 2250.

The prediction decoder 2030 may generate a prediction block according to an intra prediction mode of the current block 2250 by using the identified first neighboring sample set 2210 as a reference sample.

In an embodiment, when the first neighboring sample set 2210 is identified, filtering according to the intra prediction mode may be applied to the identified first neighboring sample set 2210, and the prediction block of the current block 2250 may be generated based on the filtered sample set.

Referring to FIG. 22, in an embodiment, the first neighboring sample set 2210 may be identified as neighboring samples 2211 located at a left side of the current block 2250 (hereinafter, the left samples 2211 in the first neighboring sample set 2210), and neighboring samples 2212 located at an upper side of the current block (hereinafter, the upper samples 2212 in the first neighboring sample set 2210) for intra prediction.

FIG. 22 illustrates the current block 2250 in a size of 4×4, and the first neighboring sample set 2210 including the five left samples 2211 and the five upper samples 2212. The number of left samples 2211 and the number of upper samples 2212 used for intra prediction of the current block 2250 may be set in various ways.

For example, for intra prediction of the current block 2250, the prediction decoder 2030 may identify the 2n+1 left samples 2211 (where n is a height of the current block 2250), and identify the 2m upper samples 2212 (where m is a width of the current block 2250).

In an embodiment, FIG. 22 illustrates that the left samples 2211 in the first neighboring sample set 2210 are disposed in one row, but in an embodiment, the left samples 2211 in the first neighboring sample set 2210 may be disposed in two or more rows. In addition, the upper samples 2212 in the first neighboring sample set 2210 may also be disposed in two or more rows.

In an embodiment, when some neighboring samples of the first neighboring sample set 2210 required for intra prediction have not been reconstructed, the prediction decoder 2030 may generate the neighboring samples that have not been reconstructed through padding.

In an embodiment, when the first neighboring sample set 2210 of the current block 2250 is identified, the prediction decoder 2030 may generate the prediction block of the current block 2250 by using the first neighboring sample set 2210.

For example, the prediction decoder 2030 may derive prediction samples of the samples in the current block 2250 by using neighboring samples identified based on the intra prediction mode of the current block 2250. A set of prediction samples may be defined as a prediction block.

In an embodiment, in order to generate the prediction block, the prediction decoder 2030 may filter the first neighboring sample set 2210 according to the intra prediction mode, and identify neighboring samples respectively corresponding to the samples in the current block 2250 in the filtered neighboring sample set according to the intra prediction mode. In addition, the prediction decoder 2030 may generate prediction samples of the samples in the current block 2250 by applying the identified neighboring samples to a certain operation equation.

As described above, when the current picture 2200 or the current slice is reconstructed according to a raster scan order, most of the samples included in the first neighboring sample set 2210 are reconstructed, and thus there may be no major problem in performing intra prediction on the current block 2250 by using the first neighboring sample set 2210. However, because the second neighboring sample set 2230 of the current block 2250 is not reconstructed before the current block 2250, the second neighboring sample set 2230 is difficult to use for intra prediction of the current block 2250.

In an embodiment, the second neighboring sample set 2230 may include samples located at a right side of the current block 2250 (hereinafter, right samples 2231 in the second neighboring sample set 2230) and samples located at a lower side of the current block 2250 (hereinafter, lower samples 2232 in the second neighboring sample set 2230).

Because the second neighboring sample set 2230 is not reconstructed before the current block 2250, in an embodiment, the prediction decoder 2030 may determine a temporal reference sample or a spatial reference sample corresponding to the second neighboring sample set 2230, and perform intra prediction on the current block 2250 by using the temporal reference sample or the spatial reference sample.

FIG. 22 illustrates that the first neighboring sample set 2210 is located on the upper left side of the current block 2250, and the second neighboring sample set 2230 is located on the lower right side of the current block 2250, which is on the assumption that the reconstruction of an upper block and a left block of the current block 2250 is completed before the reconstruction of the current block 2250. Accordingly, in an embodiment, when the reconstruction of the upper block and the right block of the current block 2250 is completed before the reconstruction of the current block 2250, the first neighboring sample set 2210 may be located on the upper right side of the current block 2250, and the second neighboring sample set 2230 may be located on the lower left side of the current block 2250. Accordingly, the first sample set 2480 to be described below may be considered to be located on the upper right side of the current block 2250 and used for intra prediction of the current block 2250, and the second sample set 2490 may be considered to be located on the lower left side of the current block 2250 and used for intra prediction of the current block 2250.

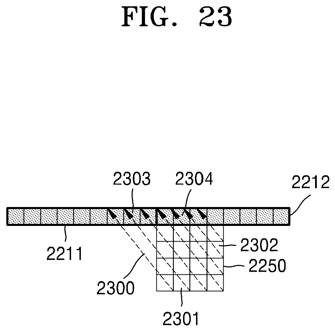

A process of performing intra prediction on the current block 2250 by using the first neighboring sample set 2210 will be described with reference to FIG. 23.

FIG. 23 is a diagram for explaining a process of predicting a current block by using a first neighboring sample set according to an intra prediction mode according to an embodiment.

As described above, when the first neighboring sample set 2210 of the current block 2250 is confirmed, the prediction decoder 2030 may generate prediction samples of samples of the current block 2250 based on the first neighboring sample set 2210.

Some of the Intra_Angular modes may require only the left samples 2211 in the first neighboring sample set 2210, and the other modes may require only the upper samples 2212 in the first neighboring sample set 2210. Another mode may require both the left samples 2211 in the first neighboring sample set 2210 and the upper samples 2212 in the first neighboring sample set 2210.

In the 18 numbered intra prediction mode, as shown in FIG. 23, both the left samples 2211 in the first neighboring sample set 2210 and the upper samples 2212 in the first neighboring sample set 2210 may be used to generate the prediction samples of the samples in the current block 2250.

FIG. 23 illustrates that the left samples 2211 in the first neighboring sample set 2210 are disposed on the left side of the upper samples 2212 in the first neighboring sample set 2210, which may mean that sample values of the left samples 2211 and sample values of the upper samples 2212 are continuously stored in memory.

In an embodiment, the prediction decoder 2030 may identify the neighboring samples respectively corresponding to the samples in the current block 2250 from among the neighboring samples 2211 and 2212 in the first neighboring sample set 2210, and apply sample values of the identified neighboring samples to a certain operation equation to calculate sample values of the prediction samples.

For example, in order to obtain a prediction sample of a sample 2301 located at (3, 1) in the current block 2250, a neighboring sample 2303 among the left samples 2211 in the first neighboring sample set 2210 may be identified in a direction 2300 indicated by the intra prediction mode. As a sample value of the identified neighboring sample 2303 is applied to the certain operation equation, a prediction sample value of the sample 2301 located at (3, 1) in the current block 2250 may be obtained.

In addition, in order to obtain a prediction sample of a sample 2302 located at (1, 3) in the current block 2250, a neighboring sample 2304 among the upper samples 2212 in the first neighboring sample set 2210 may be identified in the direction 2300 indicated by the intra prediction mode. As a sample value of the identified neighboring sample 2304 is applied to a certain operation equation, a prediction sample value of the sample 2302 located at (1, 3) in the current block 2250 may be obtained.

When the prediction sample values of samples in the current block 2250 are obtained based on the first neighboring sample set 2210, the prediction decoder 2030 may reconstruct the current block 2250 by using the obtained prediction sample values.

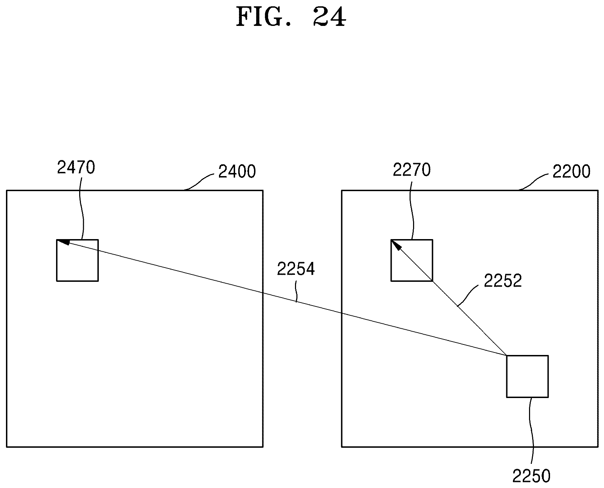

As described above, in an embodiment, not only the first neighboring sample set 2210 of the current block 2250 but also a spatial reference sample or a temporal reference sample may be used for intra prediction for the current block 2250. A method of determining the spatial reference sample and the temporal reference sample will be described with reference to FIGS. 24 to 27.

FIG. 24 is a diagram illustrating a temporal reference block and a spatial reference block according to an embodiment.

In an embodiment, the prediction decoder 2030 may determine a reference block in the current picture 2200 or the previous picture 2400 for intra prediction of the current block 2250.

When the reference block is included in the current picture 2200, the corresponding reference block may correspond to a spatial reference block 2270, and when the reference block is included in the previous picture 2400, the corresponding reference block may correspond to a temporal reference block 2470.

In an embodiment, the prediction decoder 2030 may determine that the temporal reference block 2470 (or temporal reference sample) is available when a slice including the current block 2250 is an inter-slice. For example, the prediction decoder 2030 may determine that the temporal reference block 2470 (or temporal reference sample) is not available when the slice including the current block 2250 is an intra-slice.

In an embodiment, the prediction decoder 2030 may determine the spatial reference block 2270 or the temporal reference block 2470 in the current picture 2200 or the previous picture 2400 based on information indicating a location of the reference block.

In an embodiment, the information indicating the location of the reference block may include a block vector 2252 indicating a location of the spatial reference block 2270 or a motion vector 2254 indicating a location of the temporal reference block 2470.

In an embodiment, the prediction decoder 2030 may determine the spatial reference block 2270 indicated by the block vector 2252 among previous blocks reconstructed before the current block 2250 in the current picture 2200.

In an embodiment, the prediction decoder 2030 may determine the temporal reference block 2470 indicated by the motion vector 2254 in the previous picture 2400 reconstructed before the current picture 2200.

The vector 2252 indicating the spatial reference block 2270 is expressed as the block vector, and the vector 2254 indicating the temporal reference block 2470 is expressed as the motion vector, which is referred to below as the motion vector by integrating the block vector 2252 and the motion vector 2254. Therefore, the motion vector described below may mean the block vector 2252 indicating the spatial reference block 2270 and/or the motion vector 2254 indicating the temporal reference block 2470.

In an embodiment, the prediction decoder 2030 may obtain motion vector related information from a bitstream to determine the motion vector.

In an embodiment, the motion vector related information may include information (e.g., a flag or an index) indicating any one of motion vector candidates included in a pre-constructed motion vector candidate set.

In an embodiment, the prediction decoder 2030 may construct a motion vector candidate set by using motion vectors of neighboring blocks temporally or spatially related to the current block 2250, and determine a motion vector for indicating the reference block 2270 or 2470 based on information obtained from the bitstream.

In an embodiment, the prediction decoder 2030 may determine the motion vector for indicating the reference block 2270 or 2470 by combining information a motion vector indicated by information obtained from the bitstream among motion vector candidates in the motion vector candidate set with a motion vector difference obtained from the bitstream.

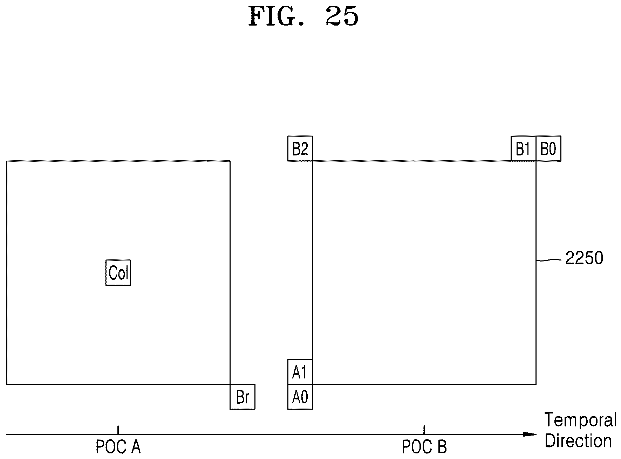

Neighboring blocks temporally or spatially related to the current block 2250 will be described with reference to FIG. 25.

FIG. 25 is a diagram illustrating locations of neighboring blocks related to a current block according to an embodiment.

Referring to FIG. 25, a temporal neighboring block may include at least one of a block Col located at the same point as the current block 2250 or a block Br spatially adjacent to the block Col at the same location in a picture having a picture order count (POC) (e.g., POC A) different from a POC (e.g., POC B) of the current picture including the current block 2250. The POC may mean a value allocated to a picture according to an output order.

The block Br may be located on a lower right side of the block Col located at the same point as the current block 2250. The block Col located at the same point as the current block 2250 may be a block including a sample corresponding to a center sample in the current block 2250 among samples in the picture of the POC A.

A spatial neighboring block may include at least one of a left lower corner block A0, a left lower block A1, a right upper corner block B0, a right upper block B1, and a left upper corner block B2.

The locations of the temporal neighboring block and the spatial neighboring block shown in FIG. 25 are an example, and the locations and number of temporal neighboring blocks and spatial neighboring blocks may be changed in various ways.

In an embodiment, when constructing a motion vector candidate set, the prediction decoder 2030 may determine each motion vector candidate included in the motion vector candidate set through template matching based on a motion vector of the temporal neighboring block and/or the spatial neighboring block. The motion vector of the temporal neighboring block and/or the spatial neighboring block may be adjusted through template matching based on the motion vector of the temporal neighboring block and/or the spatial neighboring block.

In an embodiment, when the reference block 2270 or 2470 are determined in the current picture 2200 or the previous picture 2400, the prediction decoder 2030 may determine a first sample set and/or a second sample set around the reference block 2270 or 2470.

When the reference block 2270 or 2470 is included in the current picture 2200, the first sample set and/or the second sample set may correspond to a spatial reference sample, and when the reference block 2270 or 2470 is included in the previous picture 2400, the first sample set and/or the second sample set may correspond to a temporal reference sample.

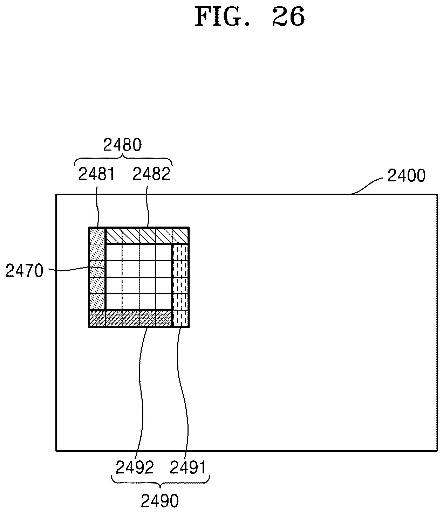

FIG. 26 is a diagram illustrating a first sample set and a second sample set determined around a reference block according to an embodiment.

FIG. 26 illustrates the reference block 2470 included in the previous picture 2400, but the reference block may be included in the current picture 2200.

The prediction decoder 2030 may determine a first sample set 2480 including samples 2481 adjacent to the left side of the reference block 2470 and samples 2842 adjacent to the upper side of the reference block 2470. Hereinafter, the samples 2481 adjacent to the left side of reference block 2470 are referred to as the left samples 2481 in the first sample set 2480, and the samples 2842 adjacent to the upper side of reference block 2470 are referred to as the upper samples 2482 in the first sample set 2480.

The first sample set 2480 is located on the upper left side of the reference block 2470, and thus may correspond to the first neighboring sample set 2210 of the current block 2450.

FIG. 26 illustrates that when the size of the current block 2250 is 4×4, the number of left samples 2481 in the first sample set 2480 and the number of upper samples 2482 in the first sample set 2480 are each five, and the number of left samples 2481 in the first sample set 2480 and the number of upper samples 2482 in the first sample set 2480 may be set in various ways.

For example, for intra prediction of the current block 2250, the prediction decoder 2030 may determine 2n+1 left samples 2481 (where n is a height of the current block 2250), and determine 2m upper samples 2482 (where m is a width of the current block 2250).

In an embodiment, the prediction decoder 2030 may determine a second sample set 2490 including samples 2491 adjacent to the right side of the reference block 2470 and samples 2492 adjacent to the lower side of the reference block 2470. Hereinafter, the samples 2491 adjacent to the right side of reference block 2470 are referred to as the right samples 2491 in the second sample set 2490, and the samples 2492 adjacent to the lower side of reference block 2470 are referred to as the lower samples 2492 in the second sample set 2490.

The second sample set 2490 is located on the lower right side of the reference block 2470, and thus may correspond to the second neighboring sample set 2230 of the current block 2450.

FIG. 26 illustrates that when the size of the current block 2250 is 4×4, the number of right samples 2491 in the second sample set 2490 and the number of lower samples 2492 in the second sample set 2490 are each five, and the number of right samples 2491 in the second sample set 2490 and the number of lower samples 2492 in the second sample set 2490 may be set in various ways.

For example, for intra prediction of the current block 2250, the prediction decoder 2030 may identify 2n+1 right samples 2491 (where n is the height of the current block 2250), and determine 2m lower samples 2492 (where m is the width of the current block 2250.

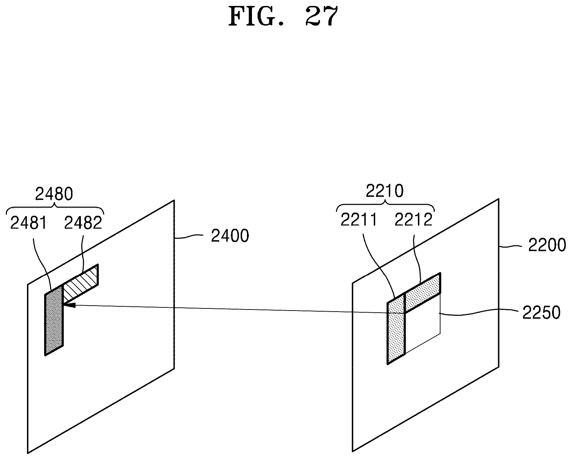

In an embodiment, the prediction decoder 2030 may determine the first sample set 2480 and/or the second sample set 2490 according to a template matching method, which will be described with reference to FIG. 27.

FIG. 27 is a diagram for explaining a template matching method according to an embodiment.

In an embodiment, the prediction decoder 2030 may search for a template most similar to a template in the previous picture 2400 or the current picture 2200 by using the first neighboring sample set 2210 of the current block 2250 as a template, and determine the found template as the first sample set 2480.

For the search of the similar template, the prediction decoder 2030 may determine a basic motion vector. For example, a predetermined motion vector (e.g., zero vector) or a motion vector of a block at a predetermined location may be determined as a basic motion vector.

The prediction decoder 2030 may search for a template most similar to the template in a certain range with respect to a point indicated by the basic motion vector, and determine the similar template as the first sample set 2480.

FIG. 27 illustrates that the similar template has been searched for in the previous picture 2400, but the similar template may be searched for in the current picture 2200.

In an embodiment, when the first sample set 2480 is identified, the prediction decoder 2030 may determine the second sample set 2490 in consideration of a location of the first sample set 2480 and a size of the current block 2250.

As shown in FIG. 26, the left samples 2481 in the first sample set 2480 and the right samples 2491 in the second sample set 2490 are separated from each other by the width of the reference block 2470. When the width of the reference block 2470 is the same as the width of the current block 2250, the prediction decoder 2030 may determine the right samples 2491 in the second sample set 2490 positioned at a point separated by the width of the current block 2250 from the left samples 2481 in the first sample set 2480 when the left samples 2481 in the first sample set 2480 are determined through template matching.

In addition, as illustrated in FIG. 26, the upper samples 2482 in the first sample set 2480 and the lower samples 2492 in the second sample set 2490 are separated from each other by a height of the reference block 2470. When the height of the reference block 2470 is the same as a height of the current block 2250, when the upper samples 2482 in the first sample set 2480 are determined through template matching, the prediction decoder 2030 may determine the lower samples 2492 in the second sample set 2490 located at a point separated by the height of the current block 2250 from the upper samples 2482 in the first sample set 2480.

In an embodiment, the prediction decoder 2030 may obtain information indicating a method of determining the first sample set 2480 and/or the second sample set 2490 from a bitstream, and determine the first sample set 2480 and/or the second sample set 2490 according to a method indicated by the information obtained from the bitstream.

For example, when the method of determining the first sample set 2480 and/or the second sample set 2490 is a method using a reference block, the prediction decoder 2030 may determine a reference block in the current picture 2200 or the previous picture 2400 according to the information indicating the reference block, and determine the first sample set 2480 and/or the second sample set 2490 from among neighboring samples of the reference block.

In addition, for example, when the method of determining the first sample set 2480 and/or the second sample set 2490 is the template matching method, the prediction decoder 2030 may determine the first sample set 2480 and/or the second sample set 2490 in the current picture 2200 or the previous picture 2400 by using the first neighboring sample set 2210 as a template.

In an embodiment, when the first sample set 2480 and/or the second sample set 2490 is determined in the current picture 2200 or the previous picture 2400, the prediction decoder 2030 may use the first sample set 2480 and/or the second sample set 2490 for intra prediction of the current block 2250.

As described above, the efficiency of intra prediction may increase by using not only neighboring samples adjacent to the current block 2250 but also a temporal reference sample and/or a spatial reference sample in the current picture 2200 or the previous picture 2400 for intra prediction of the current block 2250.

For example, when the previous picture 2400 is encoded/decoded with a higher quality than the current picture 2200, the accuracy of the prediction may be improved by using the temporal reference sample included in the previous picture 2400 for intra prediction of the current block 2250. When the previous picture 2400 is encoded/decoded with a higher quality than the current picture 2200, for example, a quantization parameter used for encoding and decoding the previous picture 2400 may be less than a quantization parameter used for encoding and decoding the current picture 2200.

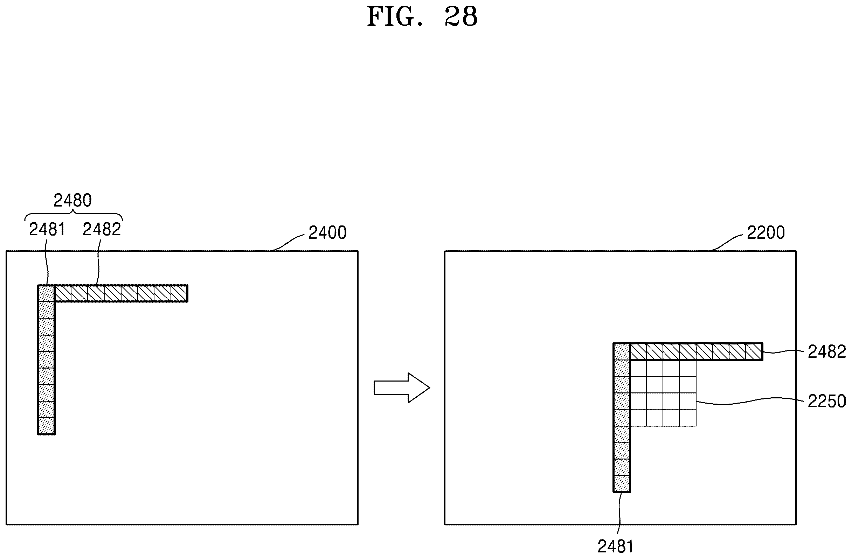

FIG. 28 is a diagram illustrating a method of performing intra prediction on a current block by using a first sample set according to an embodiment.

FIG. 28 illustrates that the first sample set 2480 is included in the previous picture 2400, but the first sample set 2480 may be included in the current picture 2200.

As described with reference to FIG. 26, the first sample set 2480 may include the left samples 2481 and the upper samples 2482.

For example, when a size of the current block 2250 is 4x4, the number of left samples 2481 in the first sample set 2480 may be nine, and the number of upper samples 2482 in the first sample set 2480 may be eight.

In an embodiment, the prediction decoder 2030 may generate a prediction block of the current block 2250 through intra prediction using the first sample set 2480 as reference samples of the current block 2250.

Using the first sample set 2480 as the reference samples of the current block 2250 may be understood as borrowing the first sample set 2480 to the upper left side of the current block 2250 and using the first sample set 2480 for intra prediction of the current block 2250.

In general, because the first neighboring sample set 2210 shown in FIG. 22 is used for intra prediction of the current block 2250, when the first sample set 2480 is to be used, the first sample set 2480 may be considered to replace the first neighboring sample set 2210.

For example, the prediction decoder 2030 may change a location of the first sample set 2480 to the upper left side of the current block 2250, and perform intra prediction on the current block 2250 by using the first sample set 2480 with the changed location.

When the first sample set 2480 replaces the first neighboring sample set 2210, like the first neighboring sample set 2210, because the first sample set 2480 is located on the upper left side of the current block 2250, the prediction decoder 2030 may generate a prediction block by using the first sample set 2480 according to the intra prediction process described with reference to FIG. 23.

In an embodiment, the prediction decoder 2030 may filter the first sample set 2480 according to an intra prediction mode before using the first sample set 2480 for intra prediction.

In an embodiment, the prediction decoder 2030 may generate a first prediction block of the current block 2250 based on the first neighboring sample set 2210, and generate a second prediction block of the current block 2250 based on the first sample set 2480.

The prediction decoder 2030 may generate a third prediction block by weighted summing the first prediction block and the second prediction block, and generate a current block reconstructed based on the third prediction block.

In an embodiment, a weight applied to the first prediction block and a weight applied to the second prediction block may be determined based on at least one of a distance (e.g., a POC difference) between the current picture 2200 and the previous picture 2400, a distance between the first neighboring sample set 2210 in the current picture 2200 and the first sample set 2480 in the current picture 2200 or the previous picture 2400, the size of the current block 2250, or an intra prediction mode. For example, the further the distance between the first neighboring sample set 2210 and the first sample set 2480, the smaller the weight applied to the second prediction block may be determined, and the larger the weight applied to the first prediction block may be determined. The distance between the first neighboring sample set 2210 and the first sample set 2480 may be calculated with respect to a certain sample in the first neighboring sample set 2210 and a certain sample in the first sample set 2480.

In an embodiment, the weight applied to the first prediction block and the weight applied to the second prediction block may be pre-determined. For example, both the weight applied to the first prediction block and the weight applied to the second prediction block may be pre-determined to be 1/2.

In an embodiment, the obtainer 2010 may obtain, from a bitstream, information indicating which sample set of the first neighboring sample set 2210 and the first sample set 2480 is used for intra prediction of the current block 2250, and the prediction decoder 2030 may generate a prediction block of the current block 2250 by using the sample set indicated by the information obtained from the bitstream.

For example, when the information obtained from the bitstream indicates the first neighboring sample set 2210, the prediction decoder 2030 may generate a current block reconstructed from the prediction block generated based on the first neighboring sample set 2210. In addition, when the information obtained from the bitstream indicates the first sample set 2480, the prediction decoder 2030 may generate a current block reconstructed from the prediction block generated based on the first sample set 2480.

An image encoding device to be described below may select a sample set causing residual data of a smaller size from among the first neighboring sample set 2210 and the first sample set 2480, and include information indicating the selected sample set in the bitstream. Cost may be used to select any one of the first neighboring sample set 2210 and the first sample set 2480.

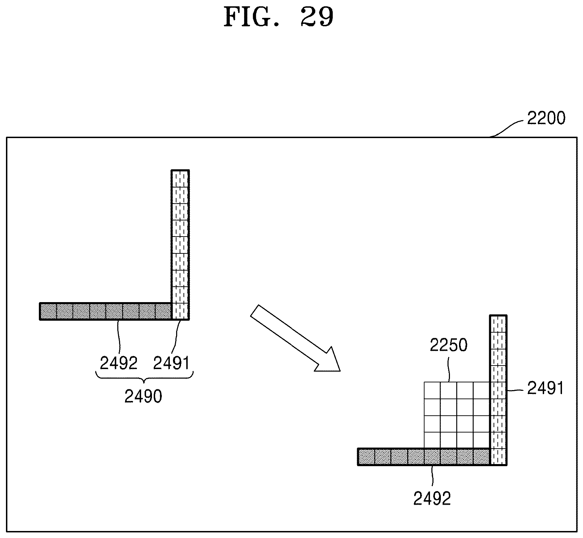

FIG. 29 is a diagram illustrating a method of performing intra prediction on a current block by using a second sample set according to an embodiment.

FIG. 29 illustrates that the second sample set 2490 is included in the current picture 2200, but the second sample set 2490 may be included in the previous picture 2400.

As described with reference to FIG. 26, the second sample set 2490 may include the right samples 2491 and the lower samples 2492.

For example, when the size of the current block 2250 is 4x4, the number of right samples 2491 in the second sample set 2490 may be nine, and the number of lower samples 2492 in the second sample set 2490 may be eight.

In an embodiment, the prediction decoder 2030 may generate a prediction block of the current block 2250 through intra prediction using the second sample set 2490 as a reference sample of the current block 2250.

Using the second sample set 2490 as the reference sample of the current block 2250 may be understood as borrowing the second sample set 2490 to the right lower of the current block 2250 and using the second sample set 2490 for intra prediction of the current block 2250.

Because the second neighboring sample set 2230 of the current block 2250 is not completely reconstructed and thus may not be used for intra prediction, the second sample set 2490 may be used for intra prediction instead of the second neighboring sample set 2230.

For example, the prediction decoder 2030 may change a location of the second sample set 2490 to the right lower of the current block 2250, and perform intra prediction on the current block 2250 by using the second sample set 2490 with the changed location.

In an embodiment, the prediction decoder 2030 may generate a prediction block of the current block 2250 by performing intra prediction using the second sample set 2490.

In an embodiment, the prediction decoder 2030 may filter the second sample set 2490 according to an intra prediction mode before using the second sample set 2490 for intra prediction.

In an embodiment, the prediction decoder 2030 may generate a first prediction block of the current block 2250 based on the first neighboring sample set 2210, and generate a second prediction block of the current block 2250 based on the second sample set 2490.

The prediction decoder 2030 may generate a third prediction block by weighted summing the first prediction block and the second prediction block, and generate a current block reconstructed based on the third prediction block.

In an embodiment, a weight applied to the first prediction block and a weight applied to the second prediction block may be determined based on at least one of a distance (e.g., a POC difference) between the current picture 2200 and the previous picture 2400, a distance between the first neighboring sample set 2210 in the current picture 2200 and the first sample set 2480 in the current picture 2200 or the previous picture 2400, the size of the current block 2250, or an intra prediction mode. For example, the further the distance between the second neighboring sample set 2230 and the second sample set 2490, the smaller the weight applied to the second prediction block may be determined, and the larger the weight applied to the first prediction block may be determined. The distance between the second neighboring sample set 2230 and the second sample set 2490 may be calculated with respect to a certain sample in the second neighboring sample set 2230 and a certain sample in the second sample set 2490.

In an embodiment, the weight applied to the first prediction block and the weight applied to the second prediction block may be pre-determined. For example, both the weight applied to the first prediction block and the weight applied to the second prediction block may be pre-determined to be 1/2.

In an embodiment, the obtainer 2010 may obtain, from a bitstream, information indicating which sample set of the first neighboring sample set 2210 and the second sample set 2490 is used for intra prediction of the current block 2250, and the prediction decoder 2030 may generate a prediction block of the current block 2250 by using the sample set indicated by the information obtained from the bitstream.

For example, when the information obtained from the bitstream indicates the first neighboring sample set 2210, the prediction decoder 2030 may generate a current block reconstructed from the prediction block generated based on the first neighboring sample set 2210. In addition, when the information obtained from the bitstream indicates the second sample set 2490, the prediction decoder 2030 may generate a current block reconstructed from the prediction block generated based on the second sample set 2490.

An image encoding device to be described below may select a sample set causing residual data of a smaller size from among the first neighboring sample set 2210 and the second sample set 2490, and include information indicating the selected sample set in the bitstream. Cost may be used to select any one of the first neighboring sample set 2210 and the second sample set 2490.

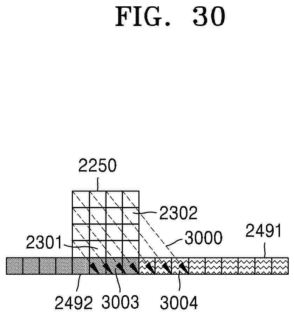

In FIG. 29, the prediction decoder 2030 may consider that the second sample set 2490 is located on the right lower of the current block 2250 and generate a prediction block from the second sample set 2490. A method of performing intra prediction on the current block 2250 by using the second sample set 2490 will be described with reference to FIG. 30.

FIG. 30 is a diagram illustrating a method of performing intra prediction on a current block by using a second sample set according to an embodiment.

When the second sample set 2490 is located on the lower right side of the current block 2250, the prediction decoder 2030 may identify samples respectively corresponding to samples in the current block 2250 from among the samples included in the second sample set 2490 according to a direction 3000 indicated by an intra prediction mode, and generate prediction samples by using the identified samples.

As described with reference to FIG. 23, in the 18 numbered intra prediction mode using the first neighboring sample set 2210, both the left samples 2211 in the first neighboring sample set 2210 and the upper samples 2212 in the first neighboring sample set 2210 may be required. Likewise, in the 18 numbered intra prediction mode using the second sample set 2490, both the right samples 2491 in the second sample set 2490 and the lower samples 2492 in the second sample set 2490 may be used.

FIG. 29 illustrates that the right samples 2491 in the second sample set 2490 are disposed on the right side of the lower samples 2492 in the second sample set 2490, which means that sample values of the lower samples 2492 in the second sample set 2490 and sample values of the right samples 2491 in the second sample set 2490 are continuously stored in memory.

In an embodiment, the prediction decoder 2030 may identify samples for generating prediction samples corresponding to the samples in the current block 2250 from the second sample set 2490 according to the direction 3000 indicated by the intra prediction mode, and apply sample values of the identified samples to a certain operation equation to calculate sample values of the prediction samples.

For example, in order to obtain a prediction sample of the sample 2301 located at (3, 1) in the current block 2250, a sample 3003 among the lower samples 2492 in the second sample set 2490 may be identified. As a sample value of the sample 3003 is applied to the certain operation equation, a prediction sample value of the sample 2301 located at (3, 1) in the current block 2250 may be calculated.

In addition, in order to obtain a prediction sample of the sample 2302 located at (1, 3) in the current block 2250, a sample 3004 among the right samples 2491 in the second sample set 2490 may be identified. As a sample value of the sample 3004 is applied to the certain operation equation, a prediction sample value of the sample 2302 located at (1, 3) in the current block 2250 may be calculated.

In an embodiment, when the prediction samples corresponding to the samples in the current block 2250 are generated based on the second sample set 2490, the prediction decoder 2030 may reconstruct the current block 2250 by using a prediction block including the generated prediction samples.

In an embodiment, under the same intra prediction mode, samples required to generate prediction samples in the second sample set 2490 and samples required to generate prediction samples in the first neighboring sample set 2210 may be located in opposite directions.

In an embodiment, in order to obtain the prediction sample of the sample 2301 located at (3, 1) in the current block 2250, the sample 2303 among the left samples 2211 in the first neighboring sample set 2210 was identified in FIG. 23, wherein the neighboring sample 2303 and a sample 3003 identified in FIG. 30 may be located at opposite points in prediction directions 2300 and 3000 according to the intra prediction mode with respect to the sample 2301 located in (3, 1).

In an embodiment, in order to obtain the prediction sample of the sample 2302 located at (1, 3) in the current block 2250, the sample 2304 among the upper samples 2212 in the first neighboring sample set 2210 was identified in FIG. 23, wherein the sample 2304 and a sample 3004 identified in FIG. 30 may be located at opposite points in the prediction directions 2300 and 3000 according to the intra prediction mode with respect to the sample 2302 located in (1, 3).

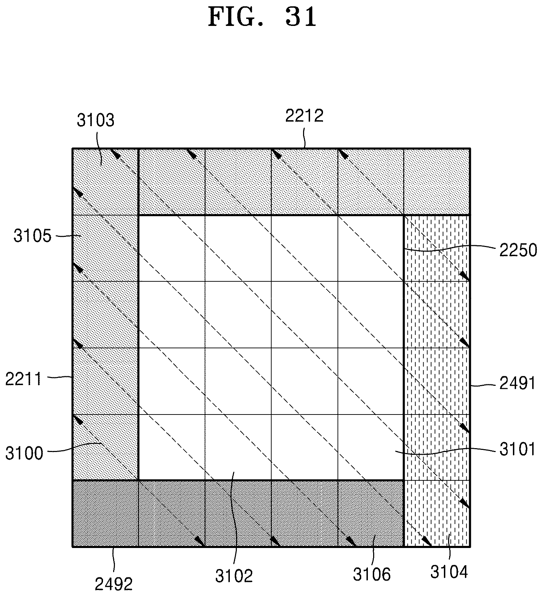

In an embodiment, the prediction block of the current block 2250 may be generated using both the first neighboring sample set 2210 and the second sample set 2490, which will be described with reference to FIG. 31.

FIG. 31 is a diagram for explaining a method of performing intra prediction on the current block by using a first sample set and a second sample set of the current block according to an embodiment.

In an embodiment, the prediction decoder 2030 may perform bi-prediction according to an intra mode on the current block 2250 by using the first neighboring sample set 2210 and the second sample set 2490 of the current block 2250.

The bi-prediction according to the intra mode may be understood as a process of predicting the current block 2250 in both directions by using both the first neighboring sample set 2210 located in the upper left side of the current block 2250 and the second sample set 2490 located in the lower right side of the current block 2250.

Referring to FIG. 31, because the first neighboring sample set 2210 and the second sample set 2490 surround the current block 2250, the number of samples included in the first neighboring sample set 2210 and the second sample set 2490 may not need to be as many as shown in FIGS. 23 and 29.

In FIG. 23, the number of left samples 2211 in the first neighboring sample set 2210 is 9 and the number of upper samples 2212 in the first neighboring sample set 2210 is 8 because there may be no sample required for intra prediction on a prediction direction according to the intra prediction mode. In other words, assuming that four samples are specified on the left side of the current block 2250, filtering is applied to the specified samples, and then a prediction block of the current block 2250 is generated, neighboring samples required to generate prediction samples in the prediction block may not be included in the four specified left samples.

Therefore, in an embodiment, as shown in FIG. 31, when the size of the current block 2250 is 4×4, the number of left samples 2211 in the first neighboring sample set 2210, the number of upper samples 2212 in the first neighboring sample set 2210, the number of right samples 2491 in the second sample set 2490, and the number of lower samples 2492 in the second sample set 2490 may be each five.

The expression that the number of left samples 2211 in the first neighboring sample set 2210, the number of upper samples 2212 in the first neighboring sample set 2210, the number of right samples 2491 in the second sample set 2490, and the number of lower samples 2492 in the second sample set 2490 are each five may be changed to the expression that the number of left samples 2211 in the first neighboring sample set 2210 and the number of right samples 2491 in the second sample set 2490 are each six, and the number of upper samples 2212 in the first neighboring sample set 2210 and the number of lower samples 2492 in the second sample set 2490 are each four. This is because samples located at the corners among the samples 2211, 2212, 2491 and 2492 surrounding the current block 2250 are respectively located at the upper left, lower left, upper right and lower right side of the current block 2250.

In an embodiment, the first neighboring sample set 2210 and the second sample set 2490 may include samples far from the current block 2250, as shown in FIGS. 23 and 29.

In an embodiment, the prediction decoder 2030 may identify samples required to generate prediction samples of samples included in the current block 2250 in each of the first neighboring sample set 2210 and the second sample set 2490, and apply the sample identified in the first neighboring sample set 2210 and the sample identified in the second sample set 2490 to a certain operation equation to generate the prediction samples of the current block 2250.

When intra prediction is performed based on the first neighboring sample set 2210, the first sample set 2480, or the second sample set 2490, a sample required to generate a prediction sample in any one set is identified, but in the bi-prediction according to the intra mode, the sample required to generate the prediction sample in each of two sample sets may be identified.

For example, when the 18 numbered intra prediction mode is applied to the current block 2250, in order to generate a prediction sample of a sample 3101 located at (3, 3) in the current block 2250, at least one sample 3103 may be identified in the first neighboring sample set 2210 in a direction 3100 indicated by the intra prediction mode, and at least one sample 3104 may be identified in the second sample set 2490. Sample values of the identified samples 3103 and 3104 are applied to a certain operation equation, and thus a prediction sample value corresponding to the sample 3101 located at (3, 3) may be calculated.

In addition, for example, when the 18 numbered intra prediction mode is applied to the current block 2250, in order to generate a prediction sample of a sample 3102 located at (3, 1) in the current block 2250, at least one sample 3105 may be identified in the first neighboring sample set 2210 in the direction 3100 indicated by the intra prediction mode, and at least one sample 3106 may be identified in the second sample set 2490. Sample values of the identified samples 3105 and 3106 are applied to a certain operation equation, and thus a prediction sample value corresponding to the sample 3102 located at (3, 1) may be calculated.

In the bi-prediction of the intra mode, continuity between samples in the current block 2250 and neighboring samples surrounding the current block 2250 in all directions may be considered, and thus the efficiency of intra prediction may increase.

In an embodiment, the prediction decoder 2030 may adaptively determine which sample set needs to be used for each of the samples included in the current block 2250.

In an embodiment, the prediction decoder 2030 may determine which sample set of the first neighboring sample set 2210 and the second sample set 2490 needs to be used for each of the samples included in the current block 2250, and generate prediction samples respectively corresponding to the samples in the current block 2250 based on a sample included in the determined sample set.

For example, the prediction decoder 2030 may determine that the first neighboring sample set 2210 is used to generate a prediction sample of any one sample in the current block 2250, and the second sample set 2490 is used to generate a prediction sample of the other sample in the current block 2250.

The prediction decoder 2030 may determine which of a first sample in the first neighboring sample set 2210 and a second sample in the second sample set 2490 needs to be used for a specific sample in the current block 2250 in consideration of a location of the specific sample, a location of the first sample required for generating a prediction sample corresponding to the specific sample, and a location of the second sample required for generating the prediction sample. Here, the first sample in the first neighboring sample set 2210 required for generation of the prediction sample and the second sample in the second sample set 2490 required for generation of the prediction sample may be identified according to a direction indicated by the intra prediction mode.

In an embodiment, the prediction decoder 2030 may determine which sample of the first sample and the second sample needs to be used for the specific sample based on a distance d1 between the specific sample and the first sample and a distance d2 between the specific sample and the second sample.

For example, when d1 is less than d2, the prediction decoder 2030 may use the first sample to generate the prediction sample of the specific sample. In this case, the prediction decoder 2030 may generate he prediction sample of the specific sample by applying a sample value of the first sample to a certain operation equation.

According to an embodiment, a sample set suitable for generating the prediction sample among the first neighboring sample set 2210 and the second sample set 2490 may be adaptively determined for each sample in the current block 2250, and thus similarity between the current block 2250 and the prediction block may increase.

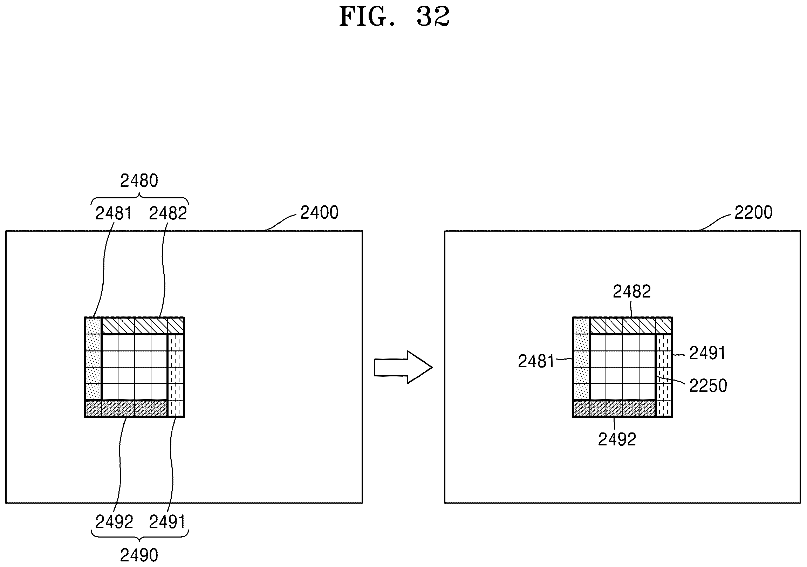

FIG. 32 is a diagram for explaining a method of performing intra prediction on a current block by using a first sample set and a second sample set according to an embodiment.

FIG. 32 illustrates that the first sample set 2480 and the second sample set 2490 are included in the previous picture 2400, but the first sample set 2480 and the second sample set 2490 may be included in the current picture 2200.

In an embodiment, the first sample set 2480 may include the left samples 2481 and the upper samples 2482, and the second sample set 2490 may include the right samples 2491 and the lower samples 2492.

For example, when the size of the current block 2250 is 4×4, the number of left samples 2481 in the first sample set 2480, the number of upper samples 2482 in the first sample set 2480, the number of right samples 2491 in the second sample set 2490, and the number of lower samples 2492 in the second sample set 2490 may be each five. In an embodiment, the number of left samples 2481 in the first sample set 2480, the number of upper samples 2482 in the first sample set 2480, the number of right samples 2491 in the second sample set 2490, and the number of lower samples 2492 in the second sample set 2490 may be determined in various ways.

In an embodiment, the prediction decoder 2030 may generate a prediction block of the current block 2250 through intra prediction using the first sample set 2480 and the second sample set 2490 as reference samples of the current block 2250.

Using the first sample set 2480 and the second sample set 2490 as reference samples of the current block 2250 may be understood as borrowing the first sample set 2480 and the second sample set 2490 to surround the current block 2250 and using the first sample set 2480 and the second sample set 2490 for intra prediction of the current block 2250.

In an embodiment, when the first sample set 2480 and the second sample set 2490 are used for intra prediction, the first sample set 2480 may replace the first neighboring sample set 2210, and the second sample set 2490 may replace the second neighboring sample set 2230.

For example, the prediction decoder 2030 may change a location of the first sample set 2480 to the upper left side of the current block 2250, change a location of the second sample set 2490 to the lower right side of the current block 2250, and perform intra prediction on the current block 2250 by using the first sample set 2480 and the second sample set 2490 with the changed locations.

In an embodiment, the prediction decoder 2030 may filter the first sample set 2480 and the second sample set 2490 according to an intra prediction mode before using the first sample set 2480 and the second sample set 2490 for intra prediction.

In an embodiment, the prediction decoder 2030 may generate a first prediction block of the current block 2250 based on the first sample set 2480 and generate a second prediction block of the current block 2250 based on the second sample set 2490.

The prediction decoder 2030 may generate a third prediction block by weighted summing the first prediction block and the second prediction block, and generate a current block reconstructed based on the third prediction block.

In an embodiment, a weight applied to the first prediction block and a weight applied to the second prediction block may be determined based on at least one of a distance (e.g., a POC difference) between the current picture 2200 and the previous picture 2400, the size of the current block 2250, or the intra prediction mode.

In an embodiment, the weight applied to the first prediction block and the weight applied to the second prediction block may be pre-determined. For example, both the weight applied to the first prediction block and the weight applied to the second prediction block may be pre-determined to be 1/2.

In an embodiment, the obtainer 2010 may obtain, from a bitstream, information indicating which sample set of the first neighboring sample set 2210 and the first sample set 2480 is used for intra prediction of the current block 2250, and the prediction decoder 2030 may generate a prediction block of the current block 2250 by using the sample set indicated by the information obtained from the bitstream.

In an embodiment, the prediction decoder 2030 may generate the first prediction block of the current block 2250 based on the first sample set 2480 and generate the second prediction block of the current block 2250 based on the second sample set 2490. In addition, the prediction decoder 2030 may reconstruct the current block 2250 by selecting one of the first prediction block and the second prediction block.

In an embodiment, one of the first prediction block and the second prediction block may be selected, by using a comparison result between the first prediction block and a reference block and a comparison result between the second prediction block and the reference block. Here, the reference block may be a block located between the first sample set 2480 and the second sample set 2490. The reference block is a region that has already been reconstructed, and thus may be used for comparison between the first prediction block and the second prediction block.

In an embodiment, the prediction decoder 2030 may reconstruct the current block 2250 by using a prediction block having a smaller difference from the reference block among the first prediction block and the second prediction block. Accordingly, the prediction decoder 2030 may directly select any one sample set without having to obtain related information from the bitstream.

In an embodiment, the prediction decoder 2030 may determine which sample set needs to be used for each of the samples included in the current block 2250 among the first sample set 2480 and the second sample set 2490, and generate prediction samples respectively corresponding to the samples in the current block 2250 based on the determined sample set.

For example, the prediction decoder 2030 may determine that the first sample set 2480 is used to generate a prediction sample of any one sample in the current block 2250, and the second sample set 2490 is used to generate a prediction sample of the other sample in the current block 2250.

The prediction decoder 2030 may select a sample required to generate a prediction sample of a specific sample among a first sample and a second sample, in consideration of at least one of a location of the specific sample in the current block 2250, a location of the first sample required for generating the prediction sample corresponding to the specific sample among the first sample set 2480, or a location of the second sample required for generating the prediction sample corresponding to the specific sample among the second sample set 2490.

According to an embodiment, a sample set suitable for generating a prediction sample among the first sample set 2480 and the second sample set 2490 may be adaptively determined for each sample in the current sample, and thus similarity between the current block 2250 and the prediction block may increase.

In an embodiment, the prediction decoder 2030 may generate the prediction block of the current block 2250 through bi-prediction based on the first sample set 2480 and the second sample set 2490. For example, the prediction decoder 2030 may identify samples required to generate prediction samples of samples included in the current block 2250 in each of the first sample set 2480 and the second sample set 2490 and apply the samples identified in each of the first sample set 2480 and the second sample set 2490 to a certain operation equation to generate prediction samples of the current block 2250.

A process of performing intra bi-prediction on the current block 2250 by using samples surrounding the current block 2250 has been described with reference to FIG. 31, and thus a detailed description thereof is omitted here.

In an embodiment, the prediction decoder 2030 may generate a first prediction block of the current block 2250 through intra prediction based on the first neighboring sample set 2210, and generate a second prediction block of the current block 2250 through bi-prediction based on the first sample set 2480 and the second sample set 2490.

The prediction decoder 2030 may generate a third prediction block by weighted summing the first prediction block and the second prediction block, and generate a current block reconstructed based on the third prediction block.

In an embodiment, a weight applied to the first prediction block and a weight applied to the second prediction block may be determined based on at least one of a distance (e.g., a POC difference) between the current picture 2200 and the previous picture 2400, a distance between the first neighboring sample set 2210 in the current picture 2200 and the first sample set 2480 in the current picture 2200 or the previous picture 2400, a distance between the second neighboring sample set 2230 in the current picture 2200 and the second sample set 2490 in the current picture 2200 or the previous picture 2400, the size of the current block 2250, or an intra prediction mode.

For example, the further the distance between the first neighboring sample set 2210 and the first sample set 2480, the smaller the weight applied to the second prediction block may be determined, and the larger the weight applied to the first prediction block may be determined.

In an embodiment, the weight applied to the first prediction block and the weight applied to the second prediction block may be pre-determined. For example, both the weight applied to the first prediction block and the weight applied to the second prediction block may be pre-determined to be 1/2.

When a prediction mode of the current block 2250 is an inter prediction, the prediction decoder 2030 according to an embodiment may apply inter prediction to the current block 2250 by using a spatial reference block and a temporal reference block.

Unlike the temporal reference block 2470 in intra prediction, in the inter prediction mode, the temporal reference block in the inter prediction mode may be determined based on a motion vector of the spatial reference block.

The prediction decoder 2030 according to an embodiment may generate a prediction block of the current block 2250 by performing inter prediction on the current block 2250, and obtain the current block reconstructed from the prediction block.

In an embodiment, the prediction decoder 2030 may determine the prediction block as the reconstructed current block.

In an embodiment, the prediction decoder 2030 may generate the reconstructed current block by combining residual data obtained from the bitstream by the obtainer 2010 with the prediction block.

The reconstructed current block may be used as a reference block for the next block.

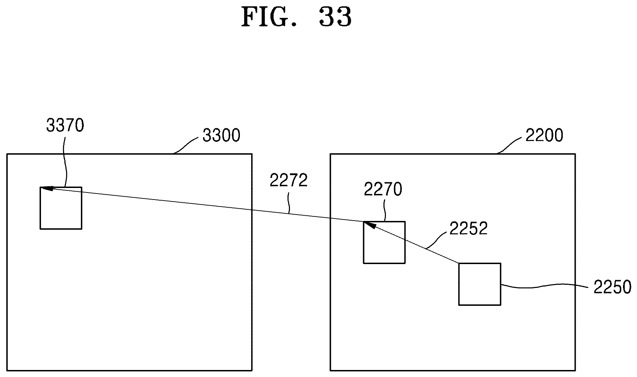

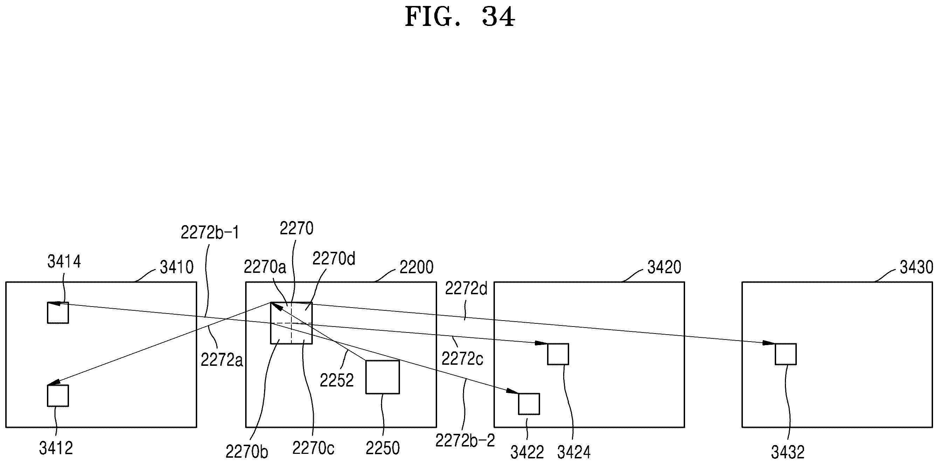

An inter prediction process according to an embodiment will be described with reference to FIGS. 33 and 34.

FIG. 33 is a diagram for explaining a process of performing inter prediction on a current block by using a temporal reference block and a spatial reference block according to an embodiment.

Referring to FIG. 33, the prediction decoder 2030 may determine the spatial reference block 2270 in the current picture 2200. The spatial reference block 2270 may be a block reconstructed before the current block 2250.

The prediction decoder 2030 may determine the block vector 2252 and determine the spatial reference block 2270 indicated by the block vector 2252 in the current picture 2200.

In an embodiment, the prediction decoder 2030 may obtain block vector related information from a bitstream to determine the block vector 2252.

In an embodiment, the block vector related information may include information (e.g., a flag or an index) indicating any one of block vector candidates included in a pre-constructed block vector candidate set.

In an embodiment, the prediction decoder 2030 may construct the block vector candidate set by using motion vectors or block vectors of neighboring blocks temporally or spatially related to the current block 2250, and determine a block vector 2252 for indicating the spatial reference block 2270 based on the information obtained from the bitstream.

In an embodiment, the prediction decoder 2030 may determine the block vector 2252 for indicating the spatial reference block 2270 by combining a block vector indicated by the information obtained from the bitstream and a block vector difference obtained from the bitstream among the block vector candidates in the block vector candidate set.

In an embodiment, when constructing the block vector candidate set, the prediction decoder 2030 may determine each block vector candidate included in the block vector candidate set through template matching based on the motion vector or the block vector of the temporal neighboring block and/or the spatial neighboring block.

In an embodiment, the prediction decoder 2030 may directly search for the spatial reference block 2270 through template matching.

In an embodiment, when the spatial reference block 2270 is determined in the current picture 2200, the prediction decoder 2030 may determine a temporal reference block 3370 by using the previous picture 3300 and the motion vector 2272 used to reconstruct the spatial reference block 2270.

For example, when the spatial reference block 2270 is reconstructed through inter prediction, reference picture information with respect to the spatial reference block 2270 and information related to the motion vector 2272 may be pre-stored in the image decoding device 2000, and the prediction decoder 2030 may determine the temporal reference block 3370 indicated by the motion vector 2272 of the spatial reference block 2270 in the previous picture 3300 indicated by the reference picture information.

In an embodiment, the reference picture information of the spatial reference block 2270 and the information related to the motion vector 2272 may be reference picture information and motion vector related information stored with respect to a block including a sample at a certain location in the spatial reference block 2270, for example, a sample at the upper left.

In an embodiment, when the temporal reference block 3370 is determined in the previous picture 3300, the prediction decoder 2030 may generate a prediction block of the current block 2250 by using the temporal reference block 3370 and/or the spatial reference block 2270.

For example, the prediction decoder 2030 may determine the temporal reference block 3370 to be the prediction block.

In addition, for example, the prediction decoder 2030 may interpolate samples in the temporal reference block 3370 and determine a prediction block including the interpolated samples.

In addition, for example, the prediction decoder 2030 may generate a first prediction block by using the samples in the temporal reference block 3370, and may generate a second prediction block by using the spatial reference block 2270. In addition, the prediction decoder 2030 may generate a third prediction block through the weighted sum of the first prediction block and the second prediction block, and generate a reconstructed current block based on the third prediction block.

In an embodiment, a weight applied to the first prediction block and a weight applied to the second prediction block may be determined based on at least one of a distance (e.g., a POC difference) between the current picture 2200 and the previous picture 3300, a distance between the current block 2250 and the spatial reference block 2270 (or the size of the block vector 2252), a distance between the current block 2250 and the temporal reference block 3370, or the size of the current block 2250. For example, the further the distance between the current block 2250 and the temporal reference block 3370, the smaller the weight applied to the first prediction block generated based on the temporal reference block 3370 may be determined, and the larger the weight applied to the second prediction block generated based on the spatial reference block 2270 may be determined.

In an embodiment, the weight applied to the first prediction block and the weight applied to the second prediction block may be pre-determined. For example, both the weight applied to the first prediction block and the weight applied to the second prediction block may be pre-determined to be 1/2.

According to the inter prediction process described with reference to FIG. 33, the motion vector 2272 of the completely reconstructed spatial reference block 2270 and the reference picture (i.e., the previous picture 3300) are used to determine the temporal reference block 3370 of the current block 2250, and thus a bitrate of the bitstream may be reduced.

For example, when the spatial reference block 2270 is determined through a template matching method, it is not necessary to include a motion vector of the current block 2250 or reference picture information in the bitstream. This is because, when the prediction decoder 2030 directly searches for the spatial reference block 2270 through the template matching method, the already stored information related to the motion vector 2272 of the spatial reference block 2270 and the reference picture information may be used without obtaining related information from the bitstream.

Even though the spatial reference block 2270 is determined based on information obtained from the bitstream (e.g., information related to the block vector), when the distance between the spatial reference block 2270 and the current block 2250 is less than the distance between the temporal reference block 3370 and the current block 2250, it is advantageous in terms of the bitrate to include information about the block vector indicating the spatial reference block 2270 in the bitstream.

FIG. 34 is a diagram for explaining a process of performing inter prediction on a current block by using a temporal reference block and a spatial reference block according to an embodiment.

As described with reference to FIG. 33, the prediction decoder 2030 may determine the spatial reference block 2270 in the current picture 2200. The spatial reference block 2270 may be a block reconstructed before the current block 2250.

The prediction decoder 2030 may determine the block vector 2252 for indicating the spatial reference block 2270.

In an embodiment, the prediction decoder 2030 may determine temporal sub blocks 3412, 3414, 3422, 3424, and 3432 in previous pictures 3410, 3420, and 3430 by using information related to motion vectors 2272a, 2272b-1, 2272b-2, 2272c, and 2272d stored for reconstruction of sub blocks 2270a, 2270c, and 2270d of the spatial reference block 2270 and reference picture information. Here, the previous pictures 3410, 3420, and 3430 may be pictures reconstructed before the current picture 2200. In an embodiment, some of the previous pictures 3410, 3420, and 3430 may be faster than the current picture 2200 in an output order, and the others thereof may be later than the current picture 2200.

As shown in FIG. 34, the motion vectors 2272a, 2272b-1, 2272b-2, 2272c, and 2272d of the sub blocks 2270a, 2270b, 2270c, and 2270d and the previous pictures 3410, 3420, and 3430 may be used for reconstruction of the sub blocks 2270a, 2270b, 2270c, and 2270d included in the spatial reference block 2270. For example, the first motion vector 2272a and the first previous picture 3410 may be used for reconstruction of the first sub block 2270a, and the second motion vector 2272b-1 for list 0, the second motion vector 2272b-2 for list 1, the first previous picture 3410 included in the list 0, and the second previous picture 3420 included in the list 1 may be used for reconstruction of the second sub block 2270b The fact that the two motion vectors 2272b-1 and 2272b-2 and the two previous pictures 3410 and 3420 are used to reconstruct the second sub block 2270b may mean that the second sub block 2270b is reconstructed through bi-prediction.

In addition, the third motion vector 2272c and the second previous picture 3420 may be used for reconstruction of the third sub block 2270c, and the fourth motion vector 2272d and the third previous picture 3430 may be used for reconstruction of the fourth sub block 2270d.

The prediction decoder 2030 may determine the first temporal sub block 3412 in the first previous picture 3410 by applying the first motion vector 2272a to the first sub block 2270a. In addition, the prediction decoder 2030 may determine the second temporal sub block 3414 for the list 0 in the first previous picture 3410 by applying the second motion vector 2272b-1 for the list 0 to the second sub block 2270b, and determine the second temporal sub block 3422 for the list 1 in the second previous picture 3420 by applying the second motion vector 2272b-2 for the list 1 to the second sub block 2270b. In addition, the prediction decoder 2030 may determine the third temporal sub block 3424 in the second previous picture 3420 by applying the third motion vector 2272c to the third sub block 2270c, and determine the fourth temporal sub block 3432 in the third previous picture 3430 by applying the fourth motion vector 2272d to the fourth sub block 2270d.

The prediction decoder 2030 may generate a prediction block of the current block 2250 by using the temporal sub blocks 3412, 3414, 3422, 3424, and 3432 determined in the previous pictures 3410, 3420, and 3430.

For example, the prediction decoder 2030 may determine a block in which the sub blocks 3412, 3414, 3422, 3424 and 3432 are combined to be the prediction block of the current block 2250.

In an embodiment, when combining the sub blocks 3412, 3414, 3422, 3424, and 3432, the prediction decoder 2030 may first weighted sum the second temporal sub block 3414 for the list 0 and the second temporal sub block 3422 for the list 1 that correspond to the second sub block 2270b, and combine a weighted summing result with the other sub blocks 3412, 3424, and 3432.

In addition, for example, the prediction decoder 2030 may interpolate samples of the block in which the sub blocks 3412, 3414, 3422, 3424, and 3432 are combined, and determine a prediction block including the interpolated samples.

In addition, for example, the prediction decoder 2030 may generate a first prediction block by using the block in which the sub blocks 3412, 3414, 3422, 3424, and 3432 are combined, and generate a second prediction block by using the spatial reference blocks 2270. In addition, the prediction decoder 2030 may generate a third prediction block through the weighted sum of the first prediction block and the second prediction block, and generate a reconstructed current block based on the third prediction block.

In an embodiment, a weight applied to the first prediction block and a weight applied to the second prediction block may be determined based on at least one of a distance (e.g., a POC difference) between the current picture 2200 and at least one of the previous pictures 3410, 3420, and 3430, a distance between the current block 2250 and the spatial reference block 2270 (or the size of the block vector 2252), a distance between the current block 2250 and at least one of the temporal sub blocks 3412, 3414, 3422, 3424, and 3432, or the size of the current block 2250.

In an embodiment, the weight applied to the first prediction block and the weight applied to the second prediction block may be pre-determined. For example, both the weight applied to the first prediction block and the weight applied to the second prediction block may be pre-determined to be 1/2.

According to the inter prediction process described with reference to FIG. 34, the information related to motion vectors 2272a, 2272b-1, 2272b-2, 2272c, and 2272d stored for reconstruction of sub blocks 2270a, 2270c, and 2270d of the completely reconstructed spatial reference block 2270 and the reference picture information are used to determine the temporal sub blocks 3412, 3414, 3422, 3424, and 3432 of the current block 2250, and thus a bitrate of the bitstream may be reduced.

In addition, the current block 2250 may be predicted using the several previous pictures 3410, 3420, and 3430 as reference pictures, and thus the accuracy of prediction may be improved.

In addition, even though a process of splitting the current block 2250 into sub blocks is not performed, the same effect of predicting the current block 2250 based on the sub blocks may be achieved, by using the sub blocks 2270a, 2270b, 2270c, and 2270d of the spatial reference block 2270.

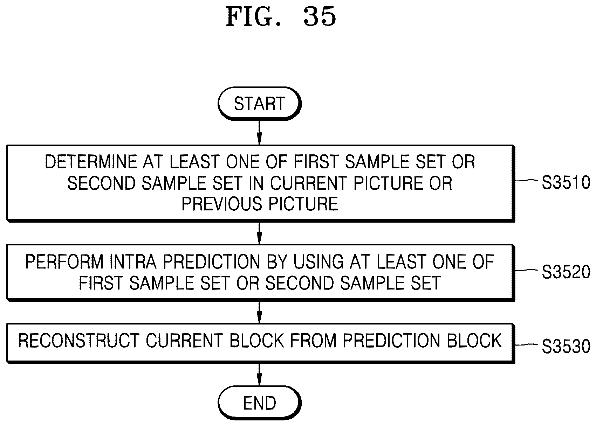

FIG. 35 is a flowchart of an image decoding method according to an embodiment, in which a prediction mode of the current block 2250 is an intra mode.

Although not shown in FIG. 35, the image decoding device 2000 may obtain information about the prediction mode of the current block 2250 from a bitstream, and when the prediction mode of the current block 2250 is the intra mode, obtain information indicating an intra prediction mode from the bitstream.

In an embodiment, the bitstream may include at least one of information about the prediction mode of the current block 2250, information indicating the intra prediction mode, information indicating a location of a reference block, information indicating whether a temporal reference sample is used or a spatial reference sample is used for intra prediction of the current block 2250, information indicating an index of the previous picture 2400 including the temporal reference sample, information indicating a motion vector difference, or residual data.

Referring to FIG. 35, in operation S3510, the image decoding device 2000 may determine at least one of the first sample set 2480 or the second sample set 2490 in the current picture 2200 or the previous picture 2400.

At least one of the first sample set 2480 or the second sample set 2490 may be determined from among samples reconstructed before the current block 2250 in the current picture 2200 or the previous picture 2400.

In an embodiment, the image decoding device 2000 may determine a reference block in the current picture 2200 or the previous picture 2400, and determine at least one of the first sample set 2480 or the second sample set 2490 from neighboring samples of the reference block.

In an embodiment, the image decoding device 2000 may determine at least one of the first sample set 2480 or the second sample set 2490 through a template matching method.

In operation S3520, the image decoding device 2000 may perform intra prediction by using at least one of the first sample set 2480 or the second sample set 2490.

The first neighboring sample set 2210 adjacent to the current block 2250 may be further used for intra prediction of the current block 2250. The first neighboring sample set 2210 may include neighboring samples reconstructed before the current block 2250.

In operation S3530, the image decoding device 2000 reconstructs the current block 2250 by using the prediction block generated through intra prediction.

In an embodiment, the image decoding device 2000 may determine the prediction block to be the reconstructed current block.

In an embodiment, the image decoding device 2000 may generate the reconstructed current block by combining residual data obtained from the bitstream with the prediction block.

When the prediction mode of the current block 2250 is an inter mode, the image decoding device 2000 may reconstruct the current block 2250 by performing inter prediction on the current block 2250.

In an embodiment, the image decoding device 2000 may determine the spatial reference block 2270 in the current picture 2200 based on the block vector 2252, for inter prediction on the current block 2250.

In an embodiment, the image decoding device 2000 may construct a block vector candidate set to determine the block vector 2252 of the current block 2250, and determine the block vector 2252 for indicating the spatial reference block 2270 based on information obtained from the bitstream among block vector candidates included in the block vector candidate set.

In an embodiment, the image decoding device 2000 may determine the block vector 2252 indicating the spatial reference block 2270 by combining the block vector candidate selected from the block vector candidate set with the block vector difference obtained from the bitstream.

In an embodiment, the image decoding device 2000 may determine the spatial reference block 2270 according to a template matching method.

In an embodiment, the image decoding device 2000 may determine the temporal reference block 3370 in the previous picture 3300 by applying the motion vector 2272 of the spatial reference block 2270 to the spatial reference block 2270.

In an embodiment, the image decoding device 2000 may generate a prediction block of the current block 2250 by using the spatial reference block 2270 and/or the temporal reference block 3370 and reconstruct the current block 2250 by using the prediction block.

In an embodiment, the image decoding device 2000 may determine the temporal sub blocks 3412, 3414, 3422, 3424 and 3432 of the previous pictures 3410, 3420, and 3430 by applying the motion vectors 2272a, 2272b-1, 2272b-2, 2272c, and 2270d of the sub blocks 2270a, 2270b, 2270c, and 2270d of the spatial reference block 2270 to the sub blocks 2270a, 2270b, 2270c, and 2270d.

In an embodiment, the image decoding device 2000 may generate the prediction block of the current block 2250 by using the temporal sub blocks 3412, 3414, 3422, 3424, and 3432 and/or the spatial reference block 2270, and reconstruct the current block 2250 by using the prediction block.

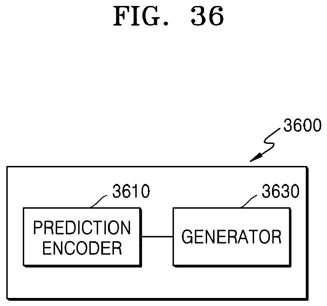

FIG. 36 is a block diagram illustrating a configuration of an image encoding device 3600 according to an embodiment.

Referring to FIG. 36, the image encoding device 3600 may include a prediction encoder 3610 and a generator 3630.

The prediction encoder 3610 and the generator 3630 according to an embodiment may be implemented as at least one processor. In an embodiment, the prediction encoder 3610 and the generator 3630 may operate according to an instruction stored in memory.

The image encoding device 3600 may include the memory that stores input/output data of the prediction encoder 3610 and the generator 3630. In addition, the image encoding device 3600 may include a memory control unit that controls data input/output of the memory.

In an embodiment, the prediction encoder 3610 may correspond to the prediction encoder 1915 shown in FIG. 19, and the generator 3630 may correspond to the entropy CU 1925 shown in FIG. 19.

The prediction encoder 3610 may determine the prediction mode of the current block 2250. The current block 2250 may be a largest CTU, a CU, a transformation unit, or a prediction unit split from the current picture 2200 to be encoded.

In an embodiment, the prediction mode of the current block 2250 may be determined to be an intra mode or an inter mode.

In an embodiment, when the prediction mode of the current block 2250 is the intra mode, the prediction encoder 3610 may determine an intra prediction mode of the current block 2250.

The intra prediction mode of the current block 2250 may be any one of a plurality of intra prediction modes. As described with reference to FIG. 21, a plurality of intra prediction modes may include a directional intra mode and a directional intra mode.

In an embodiment, the prediction encoder 3610 may perform intra prediction or inter prediction on the current block 2250 according to the prediction mode of the current block 2250, and encode the current block 2250 by using a prediction block generated as a result of performing intra prediction or inter prediction.

In an embodiment, encoding of the current block 2250 may mean a process of generating information that allows the image decoding device 2000 to reconstruct the current block 2250. Information generated through encoding may be included in a bitstream.

In an embodiment, the prediction encoder 3610 may generate residual data corresponding to a difference between the prediction block and the current block 2250. When the prediction block is determined to be the current block 2250, no residual data may be generated.

When the prediction mode of the current block 2250 is the intra mode, the prediction encoder 3610 according to an embodiment may use not only the first neighboring sample set 2210 of the current block 2250 included in the current picture 2200 but also a spatial reference sample included in the current picture 2200 or a temporal reference sample included in the previous picture 2400 for intra prediction.

In an embodiment, the prediction encoder 3610 may determine the first sample set 2480 and/or the second sample set 2490 from among samples encoded before the current block 2250 and included in the current picture 2200 or the previous picture 2400.

When the first sample set 2480 and/or the second sample set 2490 is included in the current picture 2200, the first sample set 2480 and/or the second sample set 2490 may correspond to a spatial reference sample, and when the first sample set 2480 and/or the second sample set 2490 are included in the previous picture 2400, the first sample set 2480 and/or the second sample set 2490 may correspond to a temporal reference sample.

When a sample encoded before the current block 2250 is used as a reference sample, the size of the residual data may be reduced by predicting samples of the current block 2250 by using not only samples adjacent to the current block 2250 but also a spatial reference sample and/or a temporal reference sample far from the current block 2250.

In an embodiment, the prediction encoder 3610 may determine the first sample set 2480 corresponding to the first neighboring sample set 2210 adjacent to the current block 2250, from among the samples encoded before the current block 2250 in the current picture 2200 or the previous picture 2400.

In an embodiment, the first neighboring sample set 2210 may include the samples encoded before the current block 2250. In an embodiment, the first neighboring sample set 2210 may include the samples 2211 adjacent to the left side of the current block 2250, and the samples 2212 adjacent to the upper side of the current block 2250.

In an embodiment, the prediction encoder 3610 may determine the second sample set 2490 corresponding to the second neighboring sample set 2230 adjacent to the current block 2250, from among the samples encoded before the current block 2250 in the current picture 2200 or the previous picture 2400.

In an embodiment, the second neighboring sample set 2230 may include samples that have not been encoded. In an embodiment, the second neighboring sample set 2230 may include the samples 2231 adjacent to the right side of the current block 2250, and the samples 2232 adjacent to the lower side of the current block 2250.

In an embodiment, the first neighboring sample set 2210 may be adjacent to the upper right side of the current block 2250, and the second neighboring sample set 2230 may be adjacent to the lower left side of the current block 2250.

In an embodiment, the prediction encoder 3610 may determine a reference block in the current picture 2200 or the previous picture 2400, and determine the first sample set 2480 and/or the second sample set 2490 from neighboring samples of the reference block.

In an embodiment, the prediction encoder 3610 may determine the first sample set 2480 and/or the second sample set 2490 through a template matching method.

A method of determining the first sample set 2480 and/or the second sample set 2490 in the current picture 2200 or the previous picture 2400 has been described with reference to FIGS. 24 to 27, and thus a detailed description thereof is omitted.

In an embodiment, the prediction encoder 3610 may select a method of determining the first sample set 2480 and/or the second sample set 2490 and generate information indicating the selected method. The generated information may be included in the bitstream by the generator 3630.

In an embodiment, the prediction encoder 3610 may perform intra prediction on the current block 2250 by using at least one of the first neighboring sample set 2210, the first sample set 2480, or the second sample set 2490 as the reference sample of the current block 2250.

The intra prediction process using at least one of the first neighboring sample set 2210, the first sample set 2480, or the second sample set 2490 is the same as the process performed by the prediction decoder 2030 described above, and thus a detailed description thereof is omitted.

When the prediction mode of the current block 2250 is inter prediction, the prediction encoder 3610 according to an embodiment may apply inter prediction to the current block 2250 by using the spatial reference block and the temporal reference block.

The prediction encoder 3610 according to an embodiment may generate the prediction block of the current block 2250 by performing inter prediction on the current block 2250, and encode the current block 2250 from the prediction block.

In an embodiment, the image encoding device 3600 may determine the spatial reference block 2270 in the current picture 2200 based on the block vector 2252, for inter prediction on the current block 2250.

In an embodiment, the image encoding device 3600 may construct a block vector candidate set, and generate information indicating a block vector candidate used to reconstruct the block vector 2252 of the current block 2250 among block vector candidates included in the block vector candidate set, in order to encode the block vector 2252 of the current block 2250. The generated information may be included in the bitstream.

In an embodiment, the image encoding device 3600 may obtain a block vector difference corresponding to a difference between the block vector candidate selected from the block vector candidate set and the block vector 2252 of the current block 2250, and include information about the block vector difference in the bitstream.

In an embodiment, the image encoding device 3600 may determine the spatial reference block 2270 according to the template matching method.

In an embodiment, the image encoding device 3600 may determine the temporal reference block 3370 in the previous picture 3300 by applying the motion vector 2272 of the spatial reference block 2270 to the spatial reference block 2270.

In an embodiment, the image encoding device 3600 may generate the prediction block of the current block 2250 by using the spatial reference block 2270 and/or the temporal reference block 3370 and encode the current block 2250 by using the prediction block.

In an embodiment, the image encoding device 3600 may determine the temporal sub blocks 3412, 3414, 3422, 3424 and 3432 of the previous pictures 3410, 3420, and 3430 by applying the motion vectors 2272a, 2272b-1, 2272b-2, 2272c, and 2270d of the sub blocks 2270a, 2270b, 2270c, and 2270d of the spatial reference block 2270 to the sub blocks 2270a, 2270b, 2270c, and 2270d.

In an embodiment, the image encoding device 3600 may generate the prediction block of the current block 2250 by using the temporal sub blocks 3412, 3414, 3422, 3424, and 3432 and/or the spatial reference block 2270, and encode the current block 2250 by using the prediction block.

The generator 3630 may generate a bitstream including an encoding result for a picture. The bitstream may include an encoding result for the current block 2250.

In an embodiment, the generator 3630 may transmit the bitstream to the image decoding device 2000 over a network.

In an embodiment, the generator 3630 may store the bitstream in a data storage medium including a magnetic medium such as a hard disk, a floppy disk and a magnetic tape, an optical recording medium such as CD-ROM and DVD, a magneto-optical medium such as a floptical disk, etc.

The generator 3630 may generate a bitstream including syntax elements generated through encoding of the picture. Values corresponding to the syntax elements may be included in the bitstream according to a hierarchical structure of the picture.

The generator 3630 may obtain bins included in the bitstream by entropy encoding the syntax elements.

In an embodiment, the bitstream may include information about the prediction mode of the current block 2250 in the current picture 2200.

In an embodiment, when the prediction mode 2250 of the current block 2250 is an intra mode, the bitstream may include information indicating the intra prediction mode of the current block 2250.

In an embodiment, when the prediction mode 2250 of the current block is an intra mode, the bitstream may include information indicating whether a temporal reference sample is used or a spatial reference sample is used for intra prediction of the current block 2250.

When the temporal reference sample is used for intra prediction, the bitstream may include information indicating an index of the previous picture 2400 including the temporal reference sample.

In an embodiment, the bitstream may include at least one of information about the prediction mode of the current block 2250, information indicating the intra prediction mode, information indicating a location of a reference block, information indicating whether a temporal reference sample is used or a spatial reference sample is used for intra prediction of the current block 2250, information indicating an index of the previous picture 2400 including the temporal reference sample, information indicating a motion vector difference, or residual data.

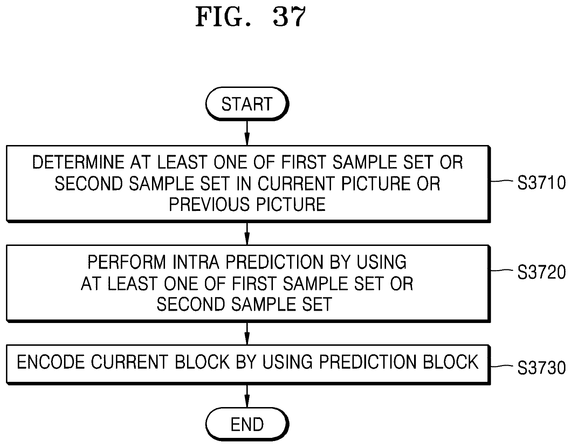

FIG. 37 is a flowchart of an image encoding method according to an embodiment, in which a prediction mode of the current block 2250 is an intra mode.

Although not shown in FIG. 37, the image encoding device 3600 may determine the prediction mode of the current block 2250, and when the prediction mode of the current block 2250 is the intra mode, an intra prediction mode of the current block 2250 may be determined.

Referring to FIG. 37, in operation S3710, the image encoding device 3600 may determine at least one of the first sample set 2480 or the second sample set 2490 in the current picture 2200 or the previous picture 2400.

At least one of the first sample set 2480 or the second sample set 2490 may be determined from among samples encoded before the current block 2250 in the current picture 2200 or the previous picture 2400.

In an embodiment, the image encoding device 3600 may determine a reference block in the current picture 2200 or the previous picture 2400, and determine at least one of the first sample set 2480 or the second sample set 2490 from neighboring samples of the reference block.

In an embodiment, the image encoding device 3600 may determine at least one of the first sample set 2480 or the second sample set 2490 through a template matching method.

In operation S3720, the image encoding device 3600 may perform intra prediction by using at least one of the first sample set 2480 or the second sample set 2490.

The first neighboring sample set 2210 adjacent to the current block 2250 may be further used for intra prediction of the current block 2250. The first neighboring sample set 2210 may include neighboring samples encoded before the current block 2250.

In operation S3730, the image encoding device 3600 encodes the current block 2250 by using the prediction block generated through intra prediction.

In an embodiment, the image encoding device 3600 may generate residual data corresponding to a difference between sample values of the current block 2250 and sample values of the prediction block.

When the prediction mode of the current block 2250 is an inter mode, the image encoding device 3600 may encode the current block 2250 by performing inter prediction on the current block 2250.

In an embodiment, the image encoding device 3600 may determine the spatial reference block 2270 in the current picture 2200 based on the block vector 2252, for inter prediction on the current block 2250.

In an embodiment, the image encoding device 3600 may determine the spatial reference block 2270 according to the template matching method.

In an embodiment, the image encoding device 3600 may determine the temporal reference block 3370 in the previous picture 3300 by applying the motion vector 2272 of the spatial reference block 2270 to the spatial reference block 2270.

In an embodiment, the image encoding device 3600 may generate a prediction block of the current block 2250 by using the spatial reference block 2270 and/or the temporal reference block 3370, and encode the current block 2250 by using the prediction block.

In an embodiment, the image encoding device 3600 may determine the temporal sub blocks 3412, 3414, 3422, 3424 and 3432 of the previous pictures 3410, 3420, and 3430 by applying the motion vectors 2272a, 2272b-1, 2272b-2, 2272c, and 2270d of the sub blocks 2270a, 2270b, 2270c, and 2270d of the spatial reference block 2270 to the sub blocks 2270a, 2270b, 2270c, and 2270d.

In an embodiment, the image encoding device 3600 may generate the prediction block of the current block 2250 by using the temporal sub blocks 3412, 3414, 3422, 3424, and 3432 and/or the spatial reference block 2270, and encode the current block 2250 by using the prediction block.

In the image encoding method and the image encoding device 3600, and the image decoding method and the image decoding device 2000 according to an embodiment, the performance of prediction encoding and prediction decoding on the current block 2250 is improved.

In the image encoding method and the image encoding device 3600, and the image decoding method and the image decoding device 2000 according to an embodiment, the size of residual data generated through prediction encoding is reduced.

In the image encoding method and the image encoding device 3600, and the image decoding method and the image decoding device 2000 according to an embodiment, the bitrate of a bitstream is reduced.

The technical problems to be achieved through the present disclosure are not limited to the technical problems mentioned above, and other technical problems not mentioned will be clearly understood by one of ordinary skill in the art to which the present disclosure belongs from the description below.

The image decoding method according to an embodiment may include determining at least one of the first sample set 2480 corresponding to the first neighboring sample set 2210 adjacent to the current block 2250 or the second sample set 2490 corresponding to the second neighboring sample set 2230 adjacent to the current block 2250 from samples reconstructed before the current block 2250 in a current picture or a previous picture.

In an embodiment, the first neighboring sample set 2210 may include the samples reconstructed before the current block 2250, and the second neighboring sample set 2230 may include samples that have not been reconstructed.

The image decoding method according to an embodiment may include performing intra prediction on the current block 2250 by using a sample included in at least one of the first sample set 2480 or the second sample set 2490 as a reference sample of the current block 2250.

The image decoding method according to an embodiment may include reconstructing the current block 2250 from a prediction block generated as a result of performing intra prediction.

According to the image decoding method according to an embodiment, the efficiency of prediction may be increased, and the bitrate of the bitstream may be reduced, by using not only the first neighboring sample set 2210 adjacent to the current block 2250 but also at least one of the first sample set 2480 or the second sample set 2490 for intra prediction.

In an embodiment, the first neighboring sample set 2210 may include neighboring samples located on the left side of the current block 2250, and neighboring samples located on the upper side of the current block 2250, and the second neighboring sample set 2230 may include neighboring samples located on the right side of the current block 2250 and neighboring samples located on the lower side of the current block 2250.

According to an embodiment, the second sample set 2490 corresponding to the second neighboring sample set 2230 that is not reconstructed may be used for intra prediction, and thus, a difference between the current block 2250 and the prediction block may be reduced.

In an embodiment, the determining of the at least one of the first sample set 2480 or the second sample set 2490 may include determining a reference block in the current picture or the previous picture based on information indicating the reference block, and determining at least one of the first sample set 2480 including samples located on a left side of the reference block and samples located on an upper side of the reference block or the second sample set 2490 including samples located on a right side of the reference block and samples located on a lower side of the reference block.

According to an embodiment, at least one of the first sample set 2480 or the second sample set 2490 may be more conveniently determined by using the reference block.

In an embodiment, the determining of the at least one of the first sample set 2480 or the second sample set 2490 may include searching for the first sample set 2480 corresponding to the first neighboring sample set 2210 in the current picture or the previous picture, and determining the second sample set 2490 separated from the first sample set 2480 by a certain distance.

According to an embodiment, at least one of the first sample set 2480 or the second sample set 2490 is searched for through template matching, and thus the bitrate of the bitstream may be reduced.

In an embodiment, the performing of intra prediction may include obtaining a first prediction block by performing intra prediction using at least one of the first sample set 2480 or the second sample set 2490 on the current block 2250, and obtaining a second prediction block by performing intra prediction using the first neighboring sample set 2210 on the current block 2250, and the reconstructing of the current block 2250 may include reconstructing the current block 2250 from a third prediction block obtained through a weighted sum of the first prediction block and the second prediction block.

According to an embodiment, the quality of a final prediction block may be improved through the weighted sum of the first prediction block and the second prediction block.

In an embodiment, the performing of intra prediction may include obtaining a first prediction block by performing intra prediction using the first sample set 2480 on the current block 2250, and obtaining a second prediction block by performing intra prediction using the second sample set 2490 on the current block 2250, and the reconstructing of the current block 2250 may include reconstructing the current block 2250 from a third prediction block obtained through a weighted sum of the first prediction block and the second prediction block.

According to an embodiment, the quality of a final prediction block may be improved through the weighted sum of the first prediction block and the second prediction block.

In an embodiment, the performing of intra prediction may include identifying a sample required to generate a prediction sample of the current sample among the second sample set 2490 based on an intra prediction mode of the current block 2250 and a location of the current sample in the current block 2250.

According to an embodiment, a sample of the lower right side of the current block 2250 may be used for prediction, and thus, the quality of the prediction block may be improved.

In an embodiment, the image decoding method may further include obtaining information indicating which sample set from a bitstream is used for intra prediction on the current block 2250, and the performing of intra prediction may include performing intra prediction on the current block 2250 by using at least one of the first sample set 2480 or the second sample set 2490, or the first neighboring sample set 2210, based on the obtained information.

According to an embodiment, a sample set suitable for generating the prediction block from among several sample sets may be determined through the bitstream, and thus, the accuracy of prediction may be improved.

In an embodiment, the performing of intra prediction may include obtaining a first prediction block by performing intra prediction using the first sample set 2480 on the current block 2250, and obtaining a second prediction block by performing intra prediction using the second sample set 2490 on the current block 2250, and selecting any one prediction block of the first prediction block and the second prediction block, in consideration of a comparison result between a reference block adjacent to the first sample set 2480 and the second sample set 2490 and the first prediction block, and a comparison result between the reference block and the second prediction block, and the reconstructing of the current block 2250 may include reconstructing the current block 2250 by using the selected prediction block.

According to an embodiment, the image decoding device 2000 by itself determines which sample set is suitable for generating the prediction block, and thus, the bitrate of the bitstream may be reduced.

In an embodiment, the performing of intra prediction may include identifying a first sample and a second sample for the current sample in the current block 2250 based on an intra prediction mode in each of the first sample set 2480 and the second sample set 2490, and generating a prediction sample corresponding to the current sample by using the first sample and the second sample.

According to an embodiment, the quality of the prediction block may be improved through intra bi-prediction.

In an embodiment, the first sample and the second sample may be located at opposite points with respect to the current sample in a direction indicated by the intra prediction mode.

In an embodiment, the performing of intra prediction may include identifying a first sample and a second sample for the current sample in the current block 2250 based on an intra prediction mode in each of the first neighboring sample set 2210 and the second sample set 2490, and generating a prediction sample corresponding to the current sample by using the first sample and the second sample.

According to an embodiment, the quality of the prediction block may be improved through intra bi-prediction.

In an embodiment, the performing of intra prediction may include selecting any one of the first sample or the second sample, in consideration of a location of a current sample in the current block 2250, a location of a first sample in the first sample set 2480 required to generate a prediction sample corresponding to the current sample, and a location of a second sample in the second sample set 2490 required to generate the prediction sample, and generating a prediction sample corresponding to the current sample by using the selected sample.

According to an embodiment, it is adaptively determined for each sample which sample set is used to efficiently generate a prediction sample, and thus, the quality of the prediction block may be improved.

In an embodiment, when a sample included in at least one of the first sample set 2480 or the second sample set 2490 is used as a reference sample of the current block 2250, at least one of the first sample set 2480 or the second sample set 2490 may replace at least one of the first neighboring sample set 2210 or the second neighboring sample set 2230.

An image decoding device according to an embodiment may include at least one memory storing at least one instruction, and at least one processor operating according to the at least one instruction.

In an embodiment, the at least one processor may determine at least one of the first sample set 2480 corresponding to the first neighboring sample set 2210 adjacent to the current block 2250 or the second sample set 2490 corresponding to the second neighboring sample set 2230 adjacent to the current block 2250 from samples reconstructed before the current block 2250 in a current picture or a previous picture.

In an embodiment, the first neighboring sample set 2210 may include the samples reconstructed before the current block 2250, and the second neighboring sample set 2230 may include samples that have not been reconstructed.

In an embodiment, the at least one processor may perform intra prediction on the current block 2250 by using a sample included in at least one of the first sample set 2480 or the second sample set 2490 as a reference sample of the current block 2250.

In an embodiment, the at least one processor may reconstruct the current block 2250 from a prediction block generated as a result of performing intra prediction.

According to the image decoding device 2000 according to an embodiment, the efficiency of prediction may be increased, and the bitrate of the bitstream may be reduced, by using not only the first neighboring sample set 2210 adjacent to the current block 2250 but also at least one of the first sample set 2480 or the second sample set 2490 for intra prediction.

An image encoding method according to an embodiment may include determining at least one of the first sample set 2480 corresponding to the first neighboring sample set 2210 adjacent to the current block 2250 or the second sample set 2490 corresponding to the second neighboring sample set 2230 adjacent to the current block 2250 from samples encoded before the current block 2250 in a current picture or a previous picture.

In an embodiment, the first neighboring sample set 2210 may include the samples encoded before the current block 2250, and the second neighboring sample set 2230 may include samples that have not been encoded.

The image encoding method according to an embodiment may include performing intra prediction on the current block 2250 by using a sample included in at least one of the first sample set 2480 or the second sample set 2490 as a reference sample of the current block 2250.

The image encoding method according to an embodiment may include encoding the current block 2250 from a prediction block generated as a result of performing intra prediction.

According to the image encoding method according to an embodiment, the efficiency of prediction may be increased, and the bitrate of the bitstream may be reduced, by using not only the first neighboring sample set 2210 adjacent to the current block 2250 but also at least one of the first sample set 2480 or the second sample set 2490 for intra prediction.

The image encoding device 3600 according to an embodiment may include at least one memory storing at least one instruction, and at least one processor operating according to the at least one instruction.

In an embodiment, the at least one processor may determine at least one of the first sample set 2480 corresponding to the first neighboring sample set 2210 adjacent to the current block 2250 or the second sample set 2490 corresponding to the second neighboring sample set 2230 adjacent to the current block 2250 from samples encoded before the current block 2250 in a current picture or a previous picture.

In an embodiment, the first neighboring sample set 2210 may include samples encoded before the current block 2250, and the second neighboring sample set 2230 may include samples that have not been reconstructed.

In an embodiment, the at least one processor may perform intra prediction on the current block 2250 by using a sample included in at least one of the first sample set 2480 or the second sample set 2490 as a reference sample of the current block 2250.

In an embodiment, the at least one processor may encode the current block 2250 from a prediction block generated as a result of performing intra prediction.

According to the image decoding method according to an embodiment, the efficiency of prediction may be increased, and the bitrate of the bitstream may be reduced, by using not only the first neighboring sample set 2210 adjacent to the current block 2250 but also at least one of the first sample set 2480 or the second sample set 2490 for intra prediction.

A computer-readable recording medium according to an embodiment may include a bitstream, and the bitstream may include an encoding result for the current block 2250.

In an embodiment, the encoding result for the current block 2250 may be generated by determining at least one of the first sample set 2480 corresponding to the first neighboring sample set 2210 adjacent to the current block 2250 or the second sample set 2490 corresponding to the second neighboring sample set 2230 adjacent to the current block 2250 from samples encoded before the current block 2250 in a current picture or a previous picture.

In an embodiment, the first neighboring sample set 2210 may include samples encoded before the current block 2250, and the second neighboring sample set 2230 may include samples that have not been encoded.

In an embodiment, the encoding result for the current block 2250 may be generated by performing intra prediction on the current block 2250 by using a sample included in at least one of the first sample set 2480 or the second sample set 2490 as a reference sample of the current block 2250.

In an embodiment, the encoding result for the current block 2250 may be generated by encoding the current block 2250 from a prediction block generated as a result of performing intra prediction.

The image encoding method and the image encoding device 3600, and the image decoding method and the image decoding device 2000 according to an embodiment may improve the performance of prediction encoding and prediction decoding on the current block 2250.

The image encoding method and the image encoding device 3600, and the image decoding method and the image decoding device 2000 according to an embodiment may reduce the size of residual data generated through prediction encoding.

The image encoding method and the image encoding device 3600, and the image decoding method and the image decoding device 2000 according to an embodiment may reduce the bitrate of a bitstream.

The effects obtained from the present disclosure are not limited to the above-mentioned effects, and other effects not mentioned will be clearly understood by one of ordinary skill in the art to which the present disclosure pertains from the following description.

Meanwhile, the above-described embodiments of the present disclosure may be written as a program executable on a computer, and the written program may be stored in a machine-readable storage medium.

The machine-readable storage medium may be provided in the shape of a non-transitory storage medium. Here, the 'non-transitory storage medium' only denotes a tangible device and does not include a signal (e.g., electromagnetic waves). This term does not distinguish a case where data is stored in the storage medium semi-permanently and a case where the data is stored in the storage medium temporarily. For example, the 'non-transitory storage medium' may include a buffer where data is temporarily store.

According to an embodiment, a method according to various embodiments of the disclosure in the present specification may be provided by being included in a computer program product. The computer program product, which is a commodity, may be traded between sellers and buyers. The computer program product may be distributed in the shape of machine-readable storage medium (e.g., compact disc read only memory (CD-ROM)), or distributed (e.g., downloaded or uploaded) through an application store or directly and online between two user devices (e.g., smartphones). In the case of online distribution, at least a part of the computer program product (e.g., a downloadable app) may be at least temporarily generated or temporarily stored in a machine-readable storage medium, such as a server of a manufacturer, a server of an application store, or memory of a relay server.

While one or more embodiments of the present disclosure have been described with reference to the figures, it will be understood by one of ordinary skill in the art that various changes in form and details may be made therein without departing from the spirit and scope as defined by the following claims.

## Claims

1. An image decoding method comprising:
determining at least one of a first sample set (2480) corresponding to a first neighboring sample set (2210) adjacent to a current block (2250) or a second sample set (2490) corresponding to a second neighboring sample set (2230) adjacent to the current block (2250) from samples reconstructed before the current block (2250) in a current picture or a previous picture, wherein the first neighboring sample set (2210) comprises the samples reconstructed before the current block (2250), and the second neighboring sample set (2230) comprises samples that have not been reconstructed;
performing intra prediction on the current block (2250) by using a sample included in at least one of the first sample set (2480) or the second sample set (2490) as a reference sample of the current block (2250); and
reconstructing the current block (2250) from a prediction block generated as a result of the performing of intra prediction.

2. The image decoding method of claim 1, wherein
the first neighboring sample set (2210) includes neighboring samples located on a left side of the current block (2250) and neighboring samples located on an upper side of the current block (2250), and
the second neighboring sample set (2230) includes neighboring samples located on a right side of the current block (2250) and neighboring samples located on a lower side of the current block (2250).

3. The image decoding method of any one of claims 1 and 2, wherein
the determining of the at least one of the first sample set (2480) or the second sample set (2490) includes:
determining a reference block in the current picture or the previous picture based on information indicating the reference block; and
determining at least one of the first sample set (2480) including samples located on a left side of the reference block and samples located on an upper side of the reference block or the second sample set (2490) including samples located on a right side of the reference block and samples located on a lower side of the reference block.

4. The image decoding method of any one of claims 1 to 3, wherein
the determining of the at least one of the first sample set (2480) or the second sample set (2490) includes
searching for the first sample set (2480) corresponding to the first neighboring sample set (2210) in the current picture or the previous picture; and
determining the second sample set (2490) separated from the first sample set (2480) by the certain distance.

5. The image decoding method of any one of claims 1 to 4, wherein
the performing of intra prediction includes
obtaining a first prediction block by performing intra prediction on the current block (2250) using at least one of the first sample set (2480) or the second sample set (2490), and obtaining a second prediction block by performing intra prediction on the current block (2250) using the first neighboring sample set (2210), and
the reconstructing of the current block (2250) includes
reconstructing the current block (2250) from a third prediction block obtained through a weighted sum of the first prediction block and the second prediction block.

6. The image decoding method of any one of claims 1 to 5, wherein
the performing of intra prediction includes
obtaining a first prediction block by performing intra prediction on the current block (2250) using the first sample set (2480), and obtaining a second prediction block by performing intra prediction on the current block (2250) using the second sample set (2490), and
the reconstructing of the current block (2250) includes
reconstructing the current block (2250) from a third prediction block obtained through a weighted sum of the first prediction block and the second prediction block.

7. The image decoding method of any one of claims 1 to 6, wherein
the performing of intra prediction includes
identifying a sample required to generate a prediction sample of a current sample among the second sample set (2490) based on an intra prediction mode of the current block (2250) and a location of the current sample in the current block (2250); and
calculating a sample value of the prediction sample from a sample value of the identified sample.

8. The image decoding method of any one of claims 1 to 7, further comprising:
obtaining, from a bitstream, information indicating which sample set is used for intra prediction on the current block (2250),
wherein the performing of intra prediction includes
performing intra prediction on the current block (2250) by using at least one of the first sample set (2480) or the second sample set (2490), or the first neighboring sample set (2210), based on the obtained information.

9. The image decoding method of any one of claims 1 to 8, wherein
the performing of intra prediction includes:
obtaining a first prediction block by performing intra prediction on the current block (2250) using the first sample set (2480), and obtaining a second prediction block by performing intra prediction on the current block (2250) using the second sample set (2490); and
selecting any one prediction block among the first prediction block and the second prediction block in consideration of a comparison result between a reference block and the first prediction block, and a comparison result between the reference block and the second prediction block, the reference block being adjacent to the first sample set (2480) and the second sample set (2490),
the reconstructing of the current block (2250) includes
reconstructing the current block (2250) by using the selected prediction block.

10. The image decoding method of any one of claims 1 to 9, wherein
the performing of intra prediction includes:
identifying a first sample and a second sample in each of the first sample set (2480) and the second sample set (2490) for a current sample in the current block (2250) based on an intra prediction mode; and
generating a prediction sample corresponding to the current sample by using the first sample and the second sample.

11. The image decoding method of any one of claims 1 to 10, wherein
the first sample and the second sample are located at opposite points with respect to the current sample in a direction indicated by the intra prediction mode.

12. The image decoding method of any one of claims 1 to 11, wherein
the performing of intra prediction includes:
identifying a first sample and a second sample in each of the first neighboring sample set (2210) and the second sample set (2490) for a current sample in the current block (2250) based on an intra prediction mode; and
generating a prediction sample corresponding to the current sample by using the first sample and the second sample.

13. The image decoding method of any one of claims 1 to 12, wherein
the performing of intra prediction includes:
selecting any one of the first sample or the second sample in consideration of a location of a current sample in the current block (2250), a location of a first sample in the first sample set (2480) required to generate a prediction sample corresponding to the current sample, and a location of a second sample in the second sample set (2490) required to generate the prediction sample; and
generating a prediction sample corresponding to the current sample by using the selected sample.

14. An image encoding method comprising:
determining at least one of a first sample set (2480) corresponding to a first neighboring sample set (2210) adjacent to a current block (2250) or a second sample set (2490) corresponding to a second neighboring sample set (2230) adjacent to the current block (2250) from samples encoded before the current block (2250) in a current picture or a previous picture, wherein the first neighboring sample set (2210) comprises the samples encoded before the current block (2250), and the second neighboring sample set (2230) comprises samples that have not been encoded;
performing intra prediction on the current block (2250) by using a sample included in at least one of the first sample set (2480) or the second sample set (2490) as a reference sample of the current block (2250); and
encoding the current block (2250) from a prediction block generated as a result of performing intra prediction.

15. A computer-readable recording medium having recorded thereon a bitstream, wherein
the bitstream comprises an encoding result for a current block (2250),
the encoding result for the current block (2250) is generated by
determining at least one of a first sample set (2480) corresponding to a first neighboring sample set (2210) adjacent to a current block (2250) or a second sample set (2490) corresponding to a second neighboring sample set (2230) adjacent to the current block (2250) from samples encoded before the current block (2250) in a current picture or a previous picture, wherein the first neighboring sample set (2210) comprises the samples encoded before the current block (2250), and the second neighboring sample set (2230) comprises samples that have not been encoded,
performing intra prediction on the current block (2250) by using a sample included in at least one of the first sample set (2480) or the second sample set (2490) as a reference sample of the current block (2250), and
encoding the current block (2250) from a prediction block generated as a result of performing intra prediction.
